(19) Europäisches Patentamt
European Patent Office
Office européen des brevets

(11) **EP 2 063 646 A2**

(12) **EUROPEAN PATENT APPLICATION**

(43) Date of publication:
**27.05.2009 Bulletin 2009/22**

(51) Int Cl.:
***H04N 7/36*** (2006.01)

(21) Application number: **08015411.5**

(22) Date of filing: **01.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.09.2007 JP 2007239487**

(71) Applicant: **Sony Corporation
Tokyo 108-0075 (JP)**

(72) Inventors:
• **Numata, Satoshi
Tokyo 108-0075 (JP)**
• **Kurata, Tohru
Tokyo 108-0075 (JP)**
• **Ozaki, Koji
Tokyo 108-0075 (JP)**

(74) Representative: **Müller - Hoffmann & Partner
Patentanwälte
Innere Wiener Strasse 17
81667 München (DE)**

(54) **Method and apparatus for predictive coding**

(57)    Disclosed herein is an image processing apparatus wherein a plurality of reference blocks of a size equal to that of a target block which has a predetermined size and includes a plurality of pixels set to a predetermined position in a target screen are set in a search range set on a reference screen and a motion vector is detected based on a positional displacement amount, on the screen, of that one of the reference blocks which has the highest correlation to the target block from the target block, comprising, a compression section, a first storage section, a decompression decoding section, a second storage section, and a mathematical operation section.

# FIG.9

EP 2 063 646 A2

**Description**

CROSS REFERENCES TO RELATED APPLICATIONS

The present invention contains subject matter related to Japanese Patent Application JP 2007-239487 filed in the Japan Patent Office on September 14, 2007, the entire contents of which being incorporated herein by reference.

BACKGROUND OF THE INVENTION

1. Field of the Invention

This invention relates to an image processing apparatus and an image processing method wherein a motion vector between two different screens is detected. In the present specification, the term screen is used to signify an image formed from image data for one frame or one field and displayed on a display apparatus.

2. Description of the Related Art

A block matching technique for determining a motion vector between two screens from image information itself has an old history. Development of the block matching technique has progressed principally in regard to pan-tilt detection or image pickup object tracking of a television camera and moving picture encoding of the MPEG (Moving Picture Experts Group) system. In the 1990s, application was attempted over a wide range including sensorless camera shake correction or noise removal or noise reduction (hereinafter referred to simply as NR) upon low illuminance image pickup by superposition of images.

The block matching is a method wherein a motion vector between two screens including a reference screen as a noticed screen and a base screen (hereinafter referred to as target screen) based on which a motion of the reference screen is detected is calculated by calculating a correlation between the reference image and the base screen with regard to blocks of a rectangular region of a predetermined size. Two cases are available including a case wherein the base screen precedes in time to the reference image (for example, in the case of motion detection according to the MPEG) and another case wherein the reference screen precedes in time to the base screen (for example, in the case of noise reduction by superposition of image frames hereinafter described).

It is to be noted that, while, in the present specification, the term screen is used to signify an image formed from image data for one frame or one field as described above, for the convenience of description, it is assumed in the following description that the screen is formed from one frame and is hereinafter referred to as frame. Accordingly, the reference screen is hereinafter referred to as reference frame, and the base screen is hereinafter referred to as base frame.

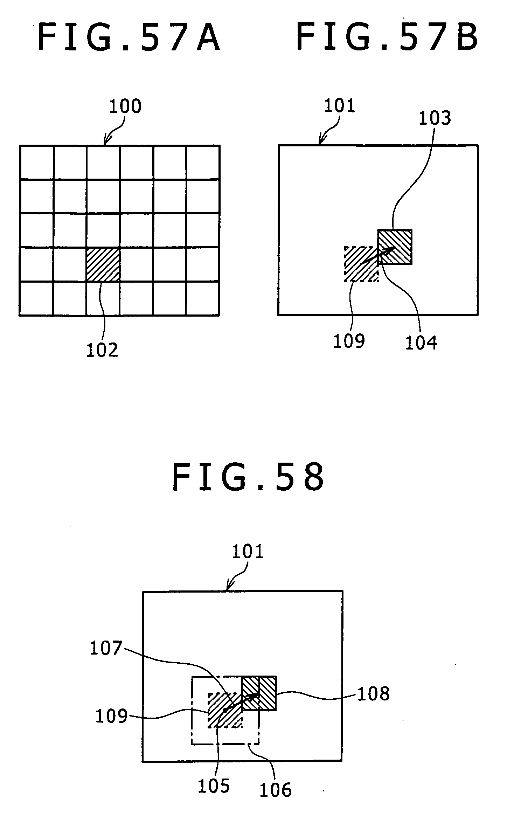

FIGS. 57A to 62 illustrate an outline of block matching of the past. In the block matching method described here, for example, as seen in FIG. 57A, an original frame or target frame 100 is divided into a plurality of rectangular regions or blocks of a predetermined size including a plurality of pixels in a horizontal direction and a plurality of lines in a vertical direction. Each of the plural blocks 102 of the target frame is hereinafter referred to as target block.

In the block matching, a reference frame 101 is searched to detect a block having a high correlation to a target block 102. A block 103 (refer to FIG. 57B) searched out from within the reference frame 101 and having the highest correlation is hereinafter referred to as motion compensation block. Further, the amount of positional displacement between the target block 102 and the motion compensation block 103 is hereinafter referred to as motion vector (refer to reference numeral 104 in FIG. 57B).

The motion vector 104 corresponding to the positional displacement between the target block 102 and the motion compensation block 103 including the amount of the positional displacement and the direction of the positional displacement corresponds, where a projection image block 109 of the target block 102 is supposed to be positioned at a position of the reference frame 101 same as the position of the target block 102 of the target frame 100, to the positional displacement between the position, for example, the position of the center, of the projection image block 109 of the target block and the position, for example, the position of the center, of the motion compensation block 103, and has a positional displacement amount and a positional displacement directional component.

An outline of the block matching process is described. A projection image block 109 of each target block is supposed to be positioned at a position same as the position of the target block 102 of the target frame 100 on the reference frame 101 as indicated by a broken line in FIG. 58. Then, the coordinates of the center of the projection image block 109 of the target block are determined as the origin 105 for motion detection. Then, it is assumed that the motion vector 104 exists within a certain range from the origin 105 for motion detection, and a predetermined range centered at the origin 105 for motion detection is set as a search range 106 as indicated by an alternate long and short dash line in FIG. 58.

Then, a block 108 hereinafter referred to as reference block having a size equal to that of the target block 102 is set on the reference frame 101. Then, the position of the reference block 108 is shifted by a unit distance of one pixel or a plurality of pixels, for example, in the horizontal direction and the vertical direction within the search range 106. Accordingly, in the search range 106, a plurality of reference blocks 108 are set.

Here, to shift the reference block 108 in the search range 106 in the present example signifies that, since the origin 105 is the position of the center of the target block, the position of the center of the reference block 108 is shifted within the search range 106. Thus, a pixel which composes the reference block 108 may protrude from the search range 106.

Then, a vector 107 hereinafter referred to as reference vector (refer to FIG. 58) representative of the positional displacement amount and the positional displacement direction between each reference block 108 to be set and the target block 102 is set for the reference block 108 within the search range. Then, the correlation between the image contents of the reference blocks 108 positioned at the positions indicated by the individual reference vectors 107 and the image contents of the target block 102 is evaluated.

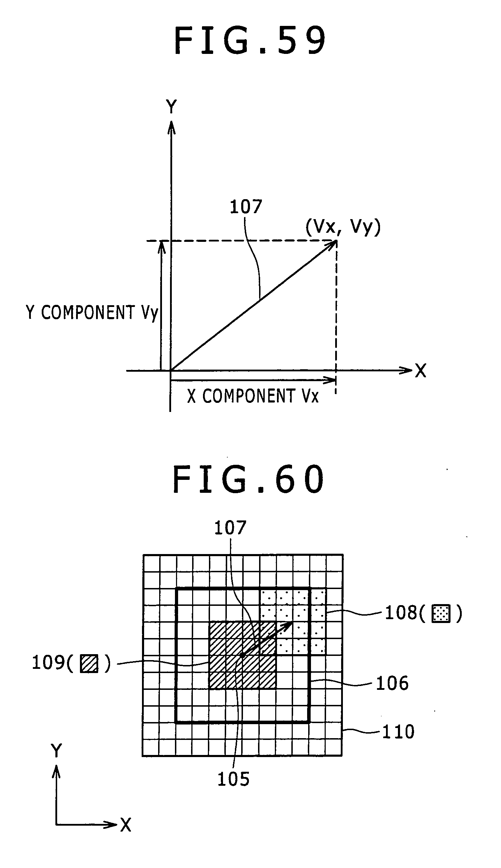

Referring to FIG. 59, where the positional displacement amount of the reference block 108 in the horizontal or X direction is represented by Vx and the positional displacement amount of the reference block 108 in the vertical or Y direction is represented by Vy, the reference vector 107 can be represented as vector (Vx, Vy). Where the coordinates of the position, for example, the position of the center, of a reference block 108 and the coordinates of the position, for example, the position of the center, of the target block 102 are same as each other, the reference vector 107 is represented as vector (0, 0).

For example, where the reference block 108 is at a position displaced by a one-pixel distance in the X direction from the position of the target block 102, the reference vector 107 is a vector (1, 0). Meanwhile, if the reference block 108 is displaced by a three-image distance in the X direction and by a two-image distance in the Y direction as seen in FIG. 60, then the reference vector 107 is a vector (3, 2).

In particular, if it is assumed that the positions of the target block 102 and the reference block 108 are the positions of the centers thereof, respectively, as seen in FIG. 60, then each reference block 108 signifies positional displacement between the position of the center of the reference block 108 and the position of the center of the target block 102, that is, a vector including the positional displacement amount and the direction of the positional displacement.

While the reference block 108 moves within the search range 106, in this instance, the position of the center of the reference block 108 moves within the search range 106. Since each reference block 108 includes a plurality of pixels in the horizontal direction and the vertical direction as described hereinabove, the maximum range of the movement of the reference block 108 which is an object of the block matching process with the target block 102 is a matching processing range 110 which is greater than the search range 106.

Then, the position of the reference block 108 detected as a block which has the highest correlation with the image contents of the target block 102 is detected as the position of the target block 102 of the target frame 100 in the reference frame 101, that is, as a position after moved. Then, the positional displacement amount between the position of the detected motion compensation block 103 and the position of the target block 102 is detected as a motion vector 104 as an amount which includes a directional component (refer to FIG. 57B).

Here, while the correlation value representative of the degree of correlation between the target block 102 and the reference block 108 which moves within the search range 106 is calculated basically using corresponding pixel values of the target block 102 and the reference block 108, a root mean square method and other various methods are available as the calculation method.

As a correlation value used popularly in order to calculate a motion vector, for example, the sum total of absolute values of the difference between the luminance value of the pixels in the target block 102 and the luminance value of corresponding pixels in the search range 106 with regard to all pixels in the target block 102 is used. The sum total mentioned is called difference absolute value sum and hereinafter referred to as SAD (Sum of Absolute Difference).

Where a SAD value is used as a correlation value, a lower SAD value indicates higher correlation. Accordingly, a reference block 108 at a position at which the SAD value is a minimum value from within the reference block 108 moved within the search range 106 is the highest correlation reference block having the highest correlation. The highest correlation reference block is detected as a motion compensation block 103, and the positional displacement amount of the detected motion compensation block 103 from the position of the target block 102 is detected as motion vector.

As described hereinabove, in block matching, the positional displacement amount of each of a plurality of reference blocks 108 set in the search range 106 from the position of the target block 102 is represented by a reference vector 107 as an amount which includes a directional component. The reference vector 107 of each reference block 108 has a value which depends upon the position of the reference block 108 on the target block 102. As described hereinabove, in the block matching, a reference vector of the reference block 108 whose SAD value as a correlation value exhibits the lowest value is detected as a motion vector 104.

Thus, in the block matching, SAD values between a plurality of reference blocks 108 set within the search range 106 and the target block 102 (such SAD values are hereinafter referred to simply as SAD values regarding the reference block 108 for the simplified description) are usually stored in a memory in a corresponding relationship to reference vectors 107 which depend upon the position of the individual reference block 108 (reference vectors 107 which depend upon the position of the reference blocks 108 are hereinafter referred to as reference vectors 107 of the reference blocks 108 for the simplified description). Then, a reference block 108 having the lowest SAD value is detected from among the SAD values regarding all reference blocks 108 stored in the memory to detect the motion vector 104.

A table in which the correlation values, that is, the SAD values, regarding the reference blocks 108 are stored in a corresponding relationship to the reference vectors 107 which depend upon the position of a plurality of reference blocks 108 set within the search range 106 is hereinafter referred to as correlation value table. In the present example, since a SAD value which is a difference absolute value sum is used as a correlation value, the correlation value table is hereinafter referred to as difference absolute value sum table (hereinafter referred to as SAD table.

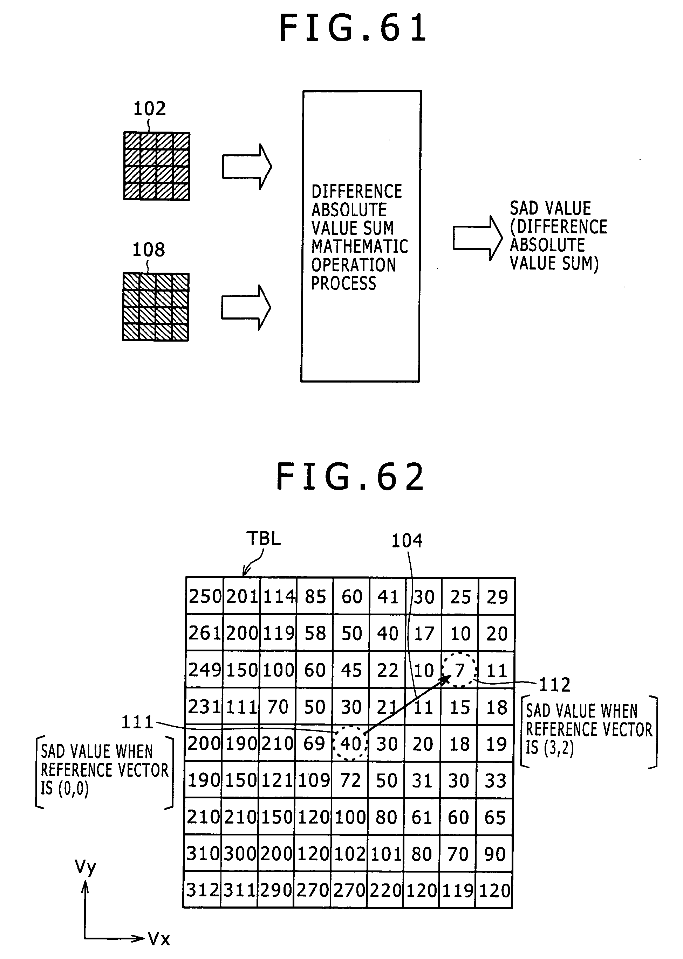

A SAD table TBL of FIG. 62 illustrates the SAD table. Referring to FIG. 62, a correlation value, in the example shown, a SAD value, regarding each reference block 108 in the SAD table TBL shown is hereinafter referred to as correlation value table element. In the example of FIG. 62, the SAD value denoted by reference numeral 111 denotes a SAD value where the reference vector is the vector (0, 0). Then, in the example of FIG. 62, since the minimum value among the SAD values is "7" where the reference vector is the vector (3, 2), the motion vector 104 to be determined is the vector (3, 2).

It is to be noted that the positions of the target block 102 and the reference block 108 in the foregoing description signify arbitrary particular positions, for example, the positions of the centers, of the blocks. The reference vector 107 indicates the displacement amount including the direction between the position of the projection image block 109 of the target block 102 in the reference frame 101 and the position of,the reference block 108.

Then, since the reference vector 107 corresponding to the reference block 108 is the positional displacement of each reference block 108 from the position of the projection image block 109 corresponding to the target block 102 on the reference frame 101, if the position of the reference block 108 is specified, then also the value of the reference vector is specified in accordance with the specified position. Accordingly, if the address of a correlation value table element of the reference block in the memory of the matching processing range 110 is specified, then the corresponding reference vector is specified.

It is to be noted that the SAD value may be calculated for more than two target blocks at the same time. If the number of target blocks to be processed at the same time increases, then the processing speed increases. However, since the scale of hardware for calculating the SAD value increases, the increase of the speed of the processing and the increase of the circuit scale have a tradeoff relationship to each other.

Incidentally, a technique of correcting against camera shake in a sensorless state using the block matching technique described above is proposed, for example, in Japanese Patent Laid-Open No. Hei 6-086149 (hereinafter referred to as Patent Document 1). According to the technique of Patent Document 1, an effective image is set in a picked up image and is shifted in response to a shake of the screen. The technique has been developed principally for moving pictures.

On the other hand, development of a technique for sensorless camera shake correction of a still picture started around the year 2,000. In the sensorless camera shake correction, a plurality of images are picked up by such a high speed shutter operation as does not cause camera shake, and the picked up images of low illuminance are superposed with each other taking an influence of camera shake into consideration to produce a single still image of high illuminance. This technique is disclosed, for example, in Japanese Patent Laid-Open No. 2001-86398 (hereinafter referred to as Patent Document 2).

The technique of Patent Document 2 is based on a concept that, if a gain is applied simply to images of low illuminance, then also noise increases, but if images picked up successively are superposed with each other, then noise which is random components is dispersed. From a viewpoint of noise reduction, the technique is considered to be proximate to a frame NR technique for moving pictures.

The frame NR technique for moving pictures superposes a current frame and a reference frame on the real time basis, and the current frame and the reference frame are superposed always in a 1:1 relationship.

On the other hand, with a sensorless camera shake correction technique for still pictures, the influence of camera shake decreases as the shutter speed increases, and as the number of images to be superposed increases, higher sensitivity can be anticipated. Accordingly, a plurality of reference frames are normally used for one current frame.

SUMMARY OF THE INVENTION

If block matching is carried out for a plurality of picked up images picked up successively to detect a motion vector between the images and, then while the motion vectors are used to superpose a target frame image and a reference frame image while the superposition position of the images is compensated, to obtain a picked up image whose noise is reduced, it is necessary to temporarily store the target frame image and the reference image frame image into a frame buffer.

Since, particularly in the case of still pictures described above, higher sensitivity can be anticipated as the number of images to be superposed is increased, an image memory for a plurality of frames for retaining a plurality of images to be superposed is required. Therefore, an increased storage capacity is required for the image memory, and consequently, there is a problem that the cost increases and the circuit scale increases.

Therefore, it is desirable to provide an image processing apparatus and method which can reduce the storage capacity of an image memory where block matching between two screens is carried out.

According to an embodiment of the present invention there is provided an image processing apparatus wherein a plurality of reference blocks of a size equal to that of a target block which has a predetermined size and includes a plurality of pixels set to a predetermined position in a target screen are set in a search range set on a reference screen and a motion vector is detected based on a positional displacement amount, on the screen, of that one of the reference blocks which has the highest correlation to the target block from the target block, including:

a compression section configured to compress image data of the reference screen in a unit of a divisional block where one screen is divided into a plurality of divisional blocks;

a first storage section configured to store the image data compressed by the compression section;

a decompression decoding section configured to read out, from among the compressed image data of the reference screen stored in the first storage section, those of the compressed image data in the divisional block units which include a matching processing range corresponding to the search range, from the first storage section and decompress and decode the read out image data;

a second storage section configured to store the image data decompressed and decoded by the decompression decoding section; and

a mathematical operation section configured to extract the image data of the reference block from among the image data stored in the second storage section and mathematically operate a correlation value between the reference block and the target block.

According to another embodiment of the present invention there is provided an image processing apparatus wherein a plurality of successive images are superposed in a unit of a first block where one screen is divided into a plurality of first blocks to obtain an image whose noise is reduced and wherein a target block is set as one of the first blocks in a target screen from between two screens to be superposed; a plurality of reference blocks of a size same as that of the target block are set in a search range set to a reference screen which is the other one of the two screens to be superposed; based on a positional displacement amount, on the screen, of that one of the reference blocks which has the highest correlation to the target block from the target block, a motion vector of the first block unit is detected; and while the detected motion vector of the first block unit is used to compensate for a motion of the image for each of the first blocks, superposition of the images is carried out, including:

a compression section configured to compress image data of the reference screen in a unit of a second divisional block where one screen is divided into a plurality of divisional blocks;

a first storage section configured to store the image data compressed by the compression section;

a decompression decoding section configured to read out, from among the compressed image data of the reference screen stored in the first storage section, those of the compressed image data in the second divisional block units which include a matching processing range corresponding to the search range, from the first storage section and decompress and decode the read out image data;

a second storage section configured to store the image data decompressed and decoded by the decompression decoding section; and

a mathematical operation section configured to extract the image data of the reference block from among the image data stored in the second storage section and mathematically operate a correlation value between the reference block and the target block.

According to yet another embodiment of the present invention there is provided an image pickup apparatus, including:

an image processing apparatus wherein a plurality of successive images are superposed in a unit of a first block where one screen is divided into a plurality of first blocks to obtain an image whose noise is reduced and wherein a target block is set as one of the first blocks in a target screen from between two screens to be superposed; a plurality of reference blocks of a size same as that of the target block are set in a search range set to a reference screen which is the other one of the two screens to be superposed; based on a positional displacement amount, on the screen, of that one of the reference blocks which has the highest correlation to the target block from the target block, a motion vector of the first block unit is detected; and while the detected motion vector of the first block unit is used to compensate for a motion of the image for each of the first blocks, superposition of the images is carried out, including:

a compression section configured to compress image data of the reference screen in a unit of a second divisional block where one screen is divided into a plurality of divisional blocks;

a first storage section configured to store the image data compressed by the compression section;

a decompression decoding section configured to read out, from among the compressed image data of the reference screen stored in the first storage section, those of the compressed image data in the second divisional block units which include a matching processing range corresponding to the search range, from the first storage section and decompress and decode the read out image data;

a second storage section configured to store the image data decompressed and decoded by the decompression decoding section;

a mathematical operation section configured to extract the image data of the reference block from among the image data stored in the second storage section and mathematically operate a correlation value between the reference block and the target block; and

a recording section configured to record the data of the image whose noise is reduced by the superposition into a recording medium.

According to yet another embodiment of the present invention there is provided an image processing method wherein a plurality of reference blocks of a size equal to that of a target block which has a predetermined size and includes a plurality of pixels set to a predetermined position in a target screen are set in a search range set on a reference screen and a motion vector is detected based on a positional displacement amount, on the screen, of that one of the reference blocks which has the highest correlation to the target block from the target block, including the steps of:

compressing image data of the reference screen in a unit of a divisional block where one screen is divided into a plurality of divisional blocks and storing the compressed image data into a first storage section;

reading out, from among the compressed image data of the reference screen stored in the first storage section, those of the compressed image data in the divisional block units which include a matching processing range corresponding to the search range, from the first storage section, decompressing and decoding the read out image data, and storing the decompressed and decoded image data into a second storage section; and

extracting the image data of the reference block from among the image data stored in the second storage section and mathematically operating a correlation value between the reference block and the target block.

According to yet another embodiment of the present invention there is provided nn image processing method wherein a plurality of successive images are superposed in a unit of a first block where one screen is divided into a plurality of first blocks to obtain an image whose noise is reduced and wherein a target block is set as one of the first blocks in a target screen from between two screens to be superposed; a plurality of reference blocks of a size same as that of the target block are set in a search range set to a reference screen which is the other one of the two screens to be superposed; based on a positional displacement amount, on the screen, of that one of the reference blocks which has the highest correlation to the target block from the target block, a motion vector of the first block unit is detected; and while the detected motion vector of the first block unit is used to compensate for a motion of the image for each of the first blocks, superposition of the images is carried out, including the steps of:

compressing image data of the reference screen in a unit of a second divisional block where one screen is divided into a plurality of divisional blocks and storing the compressed image data into a first storage section;

reading out, from among the compressed image data of the reference screen stored in the first storage section, those of the compressed image data in the second divisional block units which include a matching processing range corresponding to the search range, from the first storage section, decompressing and decoding the read out image data and storing the decompressed and decoded image data into a second storage section; and

extracting the image data of the reference block from among the image data stored in the second storage section and mathematically operating a correlation value between the reference block and the target block.

With the image processing apparatus, the storage capacity of the image memory used for the mathematical operation of a correlation value in block matching can be reduced, and efficient reading out of image data can be anticipated. Therefore, even if the image size increases or the number of images to be added, for example, in a NR process increases, an image process can be carried out while the cost is suppressed.

BRIEF DESCRIPTION OF THE DRAWINGS

FIG. 1 is a block diagram showing an example of a configuration of an image pickup apparatus as an image processing apparatus to which the present invention is applied;

FIGS. 2A and 2B are schematic views illustrating a noise reduction process of picked up images by the image pickup apparatus of FIG. 1;

FIG. 3 is a schematic view illustrating a block matching process by the image pickup apparatus of FIG. 1;

FIGS. 4 and 5 are schematic views illustrating different noise reduction process of picked up images by the image pickup apparatus of FIG. 1;

FIGS. 6, 7 and 8A to 8C are schematic views illustrating an image processing method to which the present invention is applied;

FIGS. 9, 10 and 11 are diagrammatic views illustrating operation of a motion detection and motion compensation section of the image pickup apparatus of FIG. 1;

FIG. 12 is a graph illustrating an effect by a process by the motion detection and motion compensation section of the image pickup apparatus of FIG. 1;

FIG. 13 is a block diagram showing an example of a configuration of the motion detection and motion compensation section of the image pickup apparatus of FIG. 1;

FIGS. 14 and 15 are block diagrams showing an example of a detailed configuration of different blocks of the motion detection and motion compensation section of FIG. 13;

FIG. 16 is a block diagram showing an example of a configuration of an image superposition section of the image pickup apparatus of FIG. 1;

FIGS. 17 and 18 are schematic views illustrating an image superposition process by the image superposition section of FIG. 16;

FIGS. 19 and 20 are schematic views illustrating another image superposition process by the image superposition section of FIG. 16;

FIGS. 21 and 22 are flow charts illustrating an image processing method for still pictures by the image superposition section of FIG. 16;

FIG. 23 is a flow chart illustrating an image processing method for moving pictures by the image superposition section of FIG. 16;

FIGS. 24A to 24C and 25A to 25C are diagrammatic views illustrating a first example of operation of a motion vector calculation unit of the motion detection and motion compensation section of FIG. 13;

FIG. 26 is a block diagram showing a configuration of a first example of the motion vector calculation unit of the motion detection and motion compensation section of FIG. 13;

FIG. 27 is a flow chart illustrating an example of processing operation of the motion vector calculation unit of FIG. 26;

FIGS. 28 and 29 are flow charts illustrating another example of processing operation of the motion vector calculation unit of FIG. 26;

FIG. 30 is a block diagram showing a configuration of a second example of the motion vector calculation unit of the motion detection and motion compensation section of FIG. 13;

FIG. 31 is a flow chart illustrating an example of processing operation of the motion vector calculation unit of FIG. 30;

FIGS. 32 and 33 are flow charts illustrating another example of processing operation of the motion vector calculation unit of FIG. 30;

FIGS. 34A to 34F, 35, 36A to 36C and 37A to 37C are schematic views illustrating particular examples of the image processing method to which an embodiment of the present invention is applied;

FIG. 38 is a schematic view illustrating an image rectangle accessing method in the image processing method to which an embodiment of the present invention is applied;

FIGS. 39A and 39B are schematic views illustrating a memory accessing method of image data in the image processing method to which an embodiment of the present invention is applied;

FIG. 40 is a view illustrating an example of a processing unit of an image in the image processing method to which an embodiment of the present invention is applied;

FIGS. 41 to 44 are block diagrams illustrating different flows of image data in the image processing method to which an embodiment of the present invention is applied;

FIGS. 45A and 45B are schematic views illustrating another memory accessing method of image data in the image processing method to which an embodiment of the present invention is applied;

FIG. 46 is a block diagram illustrating different flows of image data in the image processing method to which an embodiment of the present invention is applied;

FIGS. 47A to 47C, 48A and 48B, and 49A and 49B are schematic views illustrating different memory accessing operations of image data in the image processing method to which an embodiment of the present invention is applied;
FIGS. 50 and 51 are views illustrating flows of first and second image superposition processing examples by the image pickup apparatus of FIG. 1;
FIGS. 52 and 53 are flow charts illustrating processing operation of the second image superposition processing example of FIG. 51;
FIG. 54 is a view illustrating flows of a third image superposition processing example by the image pickup apparatus of FIG. 1;
FIGS. 55 and 56 are flow charts illustrating processing operation of the third image superposition processing example of FIG. 54; and
FIGS. 57A and 57B and 58 to 62 are schematic views illustrating a block matching process by the image pickup apparatus of FIG. 1.

DETAILED DESCRIPTION OF THE PREFERRED EMBODIMENT

In the following, an image processing apparatus which uses an image processing method according to the present invention is described. The image processing apparatus is formed as an image pickup apparatus. Further, the process which is carried out using a detected motion vector by the image processing apparatus is superposition of a plurality of images to achieve noise reduction.

[Image Processing Apparatus].

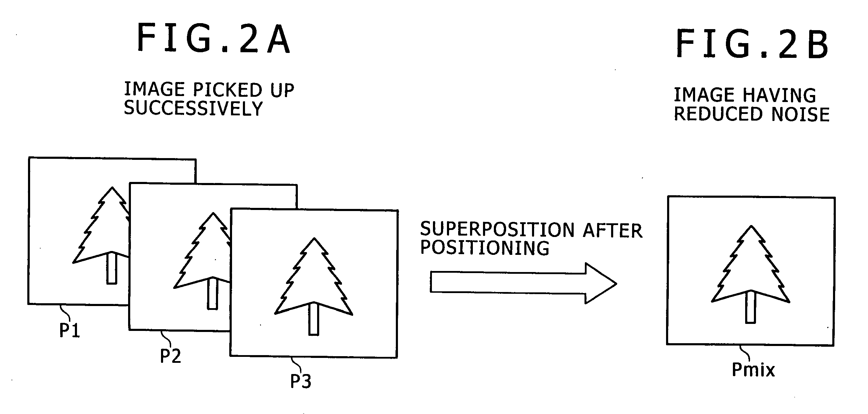

In the image pickup apparatus described below, a plurality of images picked up successively, for example, images P1, P2 and P3, are positioned relative to each other using motion detection and motion compensation and then superposed with each other as seen in FIGS. 2A and 2B so that an image Pmix whose noise is reduced is produced. In particular, since a plurality of images have random noise, if images of the same components are superposed with each other, then the noise in the images can be reduced.

In the description given below, motion detection and motion compensation are used to superpose a plurality of images to reduce noise is referred to as NR (noise Reduction) operation, and an image whose noise is reduced by the NR operation is referred to as NR image.

In the present specification, a screen or image for which noise reduction should be carried out is defined as target screen or target frame, and a screen to be superposed is defined as reference screen or reference frame. Two images picked up successively are displaced in position by camera shake of the image pickup person. Therefore, in order to superpose the two images, positioning of them is significant. Here, what should be taken into consideration is that not only such shake of the entire screen such as camera shake but also movement of an image pickup object within the screen exist.

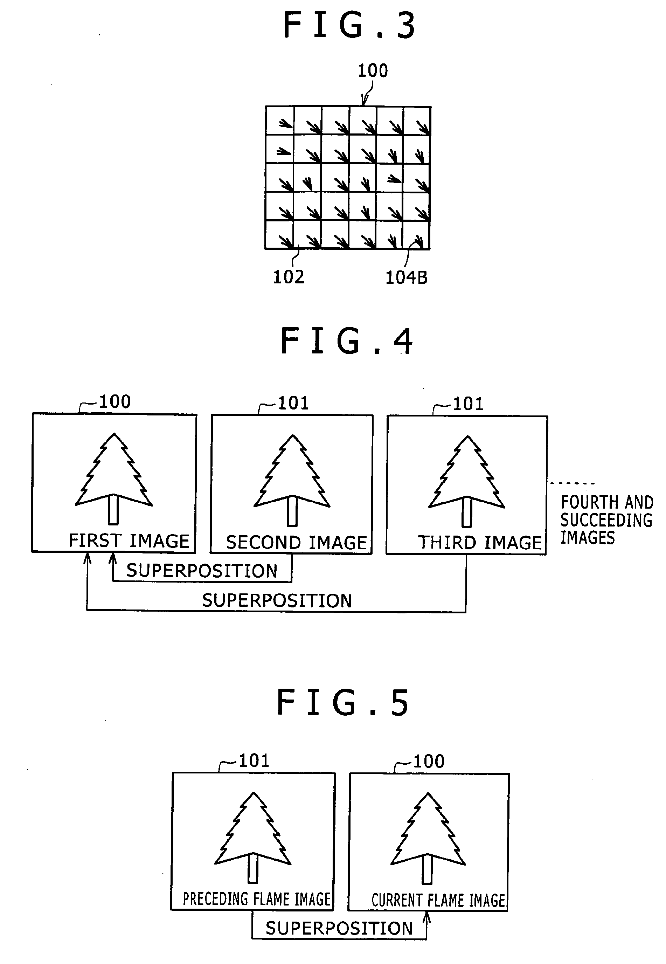

Therefore, in order to raise the noise reduction effect also with regard to an image pickup object, positioning for each of a plurality of blocks 102 produced by dividing the target frame 100 as seen in FIG. 3 is required.

Accordingly, in the present embodiment, a block motion vector 104B which is a motion vector in a unit of a target block 102 is detected for all of the blocks 102, and for each of the blocks 102, a corresponding block motion vector 104B is used to carry out positioning and superposition of the images is carried out.

In the image pickup apparatus of the present embodiment, upon image pickup of a still picture, a plurality of images are picked up at a high speed, and the first images is determined as the target frame 100 while a predetermined number of picked up images are determined as reference frames 101 to carry out superposition of the images. Then, an image obtained by the superposition is recorded as a still picture picked up image. In particular, if an image pickup person depresses a shutter button of the image pickup apparatus, then the predetermined number of images are picked up at a high speed, and on the image or frame picked up first, a plurality of images or frames picked up later in time are superposed.

On the other hand, upon image pickup of moving pictures, an image of a current frame being currently outputted from an image pickup device is determined as an image of the target frame 100, and an image preceding in time to the image is determined as an image of a reference frame 101. Accordingly, in order to carry out reduction of noise of the image of the current frame, the image of the preceding frame is superposed on the current frame.

It is to be noted that, in the superposition methods of FIGS. 4 and 5, where the frame rate of moving picture images to be recorded is 60 fps (frame/second), two image frames of the frame rate of 60 fps from the image pickup element are supposed to obtain an image pickup image signal of a frame rate of 60 fps from which noise is reduced.

However, where the image pickup apparatus is configured such that picked up images are outputted at a higher speed, for example, at a high frame rate of 240 fps from the image pickup device, it is possible to obtain, also upon moving picture image pickup, a picked up image signal of the frame rate of 60 fps by superposing every four images to produce one moving picture frame. Naturally, also it is possible to superpose two image frames of picked up moving picture images of 240 fps in a similar manner as just described to obtain a picked up image signal, whose noise is reduced, of the frame rate of 240 fps.

It is to be noted that, in the present embodiment, in order to make it possible to carry out superposition of images at a higher degree of accuracy, a block motion vector is detected in higher accuracy than the accuracy of the pixel pitch of a processing object image (the last-mentioned accuracy is hereinafter referred to as pixel accuracy), that is, higher accuracy of a pitch smaller than the pixel pitch of the original screen (target frame) (the higher accuracy is hereinafter referred to as sub pixel accuracy). For motion vector calculation in the sub pixel accuracy, in the present embodiment, a motion vector determined in the pixel accuracy and neighboring reference vectors are used to carry out an interpolation process.

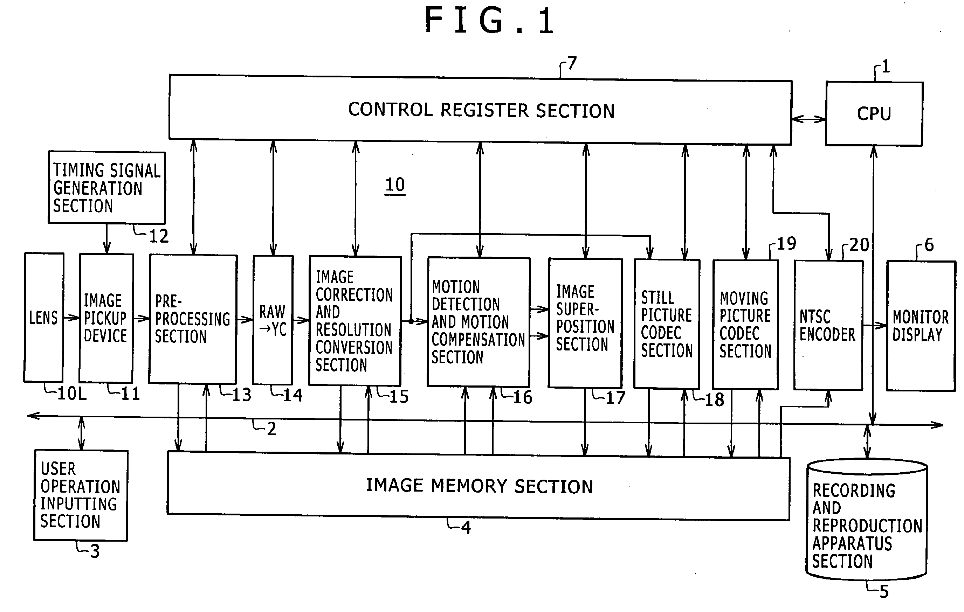

FIG. 1 shows an image pickup apparatus as the image processing apparatus of the present invention.

Referring to FIG. 1, the image pickup apparatus shown includes a CPU (Central Processing Unit) 1, an image signal processing system 10, a user operation inputting section 3, an image memory section 4, a recording and reproduction apparatus section 5 and so forth connected to a system bus 2. It is to be noted that, though not shown in FIG. 1, the CPU 1 includes a ROM (Read Only Memory) for storing programs for carrying out various software processes, a RAM (Random Access Memory) for a working area, and so forth.

If the image signal processing system 10 of the image pickup apparatus of FIG. 1 receives a picked up image recording starting operation through the user operation inputting section 3, then it carries out a recording process, for example, of such picked up image data as hereinafter described. Further, if the image signal processing system 10 of the image pickup apparatus of FIG. 1 receives a reproduction starting operation of picked up and recorded images through the user operation inputting section 3, then it carries out a reproduction process of picked up image data recorded on a recording medium of the recording and reproduction apparatus section 5. It is to be noted that components of the image signal processing system 10 hereinafter described receive control commands of the user operation inputting section 3 through a control register section 7 and execute individual processes under the control of the user operation inputting section 3.

In the image signal processing system 10, incoming light from an image pickup object through a camera optical system not shown including an image pickup lens 10L is irradiated upon an image pickup device 11 to carry out image pickup. In the present embodiment, the image pickup device 11 is formed from a CCD (Charge Coupled Device) imager. It is to be noted that the image pickup device 11 may be formed from a CMOS (Complementary Metal Oxide Semiconductor) imager.

In the image pickup apparatus, if an image pickup and recording starting operation is carried out, then an image inputted through the image pickup lens 10L is converted into a picked up image signal by the image pickup device 11. Thus, an analog picked up image signal which is a raw signal of the Bayer array formed from the three primary colors of red (R), green (G) and blue (B) is outputted as a signal synchronized with a timing signal from a timing signal generation section 12. The outputted analog picked up image signal is supplied to a pre-processing section 13, by which pre-processes such as defect correction and y correction are carried out. Then, a resulting analog picked up image signal is supplied to A data conversion section 14.

The data conversion section 14 converts the analog picked up image signal as a RAW signal inputted thereto into a digital picked up image signal (YC data) formed from a luminance signal component Y and color difference components Cb/Cr. The digital picked up image signal is supplied to an image correction and resolution conversion section 15. The image correction and resolution conversion section 15 converts the digital picked up image signal into a digital picked up image signal of a resolution designated through the user operation inputting section 3 and supplies the resulting digital picked up image signal to the image memory section 4 through the system bus 2.

If the image pickup instruction received through the user operation inputting section 3 is a still picture image pickup instruction arising from depression of the shutter button, then the digital picked up image signal obtained by the resolution conversion by the image correction and resolution conversion section 15 is written for a plurality of frames described above into the image memory section 4. Then, after the picked up image data of the images for the plural frames are written into the image memory section 4, image data of the target frame and image data of reference frames are read out by a motion detection and motion compensation section 16. Then, such a block matching process as hereinafter described is carried out for the image data read in the motion detection and motion compensation section 16 to detect a motion vector. Then, such an image superposition process as hereinafter described is carried out based on the detected motion vector by an image superposition section 17. As a result of the superposition, image data of an NR image whose noise is reduced is stored into the image memory section 4.

Then, the image data of the NR image of the result of the superposition stored in the image memory section 4 is codec converted by a still picture codec section 18 are stored into a recording medium of the recording and reproduction apparatus section 5 such as, for example, a DVD (Digital Versatile Disk) or a hard disk through the system bus 2. In the present embodiment, the still picture codec section 18 carries out an image compression coding process for a still picture of the JPEG (Joint Photograph Experts Group) system.

Further, upon such still image pickup, before the shutter button is depressed, image data from the image correction and resolution conversion section 15 is supplied to an NTSC (National Television System Committee) encoder 20, by which it is converted into a standard color image signal of the NTSC system. Then, the standard color image signal is supplied to a monitor display apparatus 6 formed, for example, from an LCD (Liquid Crystal Display) apparatus, and a monitor image upon still image pickup is displayed on a display screen of the monitor display apparatus 6.

On the other hand, if the image pickup instruction received through the user operation inputting section 3 is a moving picture image pickup instruction originating from depression of a moving picture recording button, then image data obtained by resolution conversion is written into the image memory section 4 and sent on the real time basis to the motion detection and motion compensation section 16. By the motion detection and motion compensation section 16, such a block matching process as hereinafter described is carried out to detect a motion vector. Then, such a superposition process of images as hereinafter described is carried out based on the detected motion vector by the image superposition section 17. Then, image data of an NR image obtained by noise reduction as a result of the superposition is stored into the image memory section 4.

Then, the image data of the NR image as a result of the superposition stored in the image memory section 4 is outputted to the display screen of the monitor display apparatus 6 through the NTSC encoder 20 and is then codec converted by a moving picture codec section 19. Thereafter, the image data is supplied to the recording and reproduction apparatus section 5 through the system bus 2 and recorded on a recording medium such as a DVD or a hard disk. In the present embodiment, the still picture codec section 18 carries out an image compression coding process for moving pictures of the MPEG system (Moving Picture Experts Group) system.

The picked up image data recorded on the recording medium of the recording and reproduction apparatus section 5 is read out in response to a reproduction starting operation through the user operation inputting section 3 and is supplied to and decoded for reproduction by the moving picture codec section 19. Then, the image data decoded for reproduction is supplied to the monitor display apparatus 6 through the NTSC encoder 20, and a reproduction image of the image data is displayed on the display screen of the monitor display apparatus 6. It is to be noted that, though not shown, an output image signal of the NTSC encoder 20 can be lead out to the outside through an image output terminal.

The motion detection and motion compensation section 16 described above can be configured by hardware and also can be configured using a DSP (Digital Signal Processor). Further, the motion detection and motion compensation section 16 may be configured as software processing by the CPU 1.

Motion Detection and Motion Compensation Section 16

In the present embodiment, the motion detection and motion compensation section 16 carries out motion vector detection basically by carrying out a block matching process using a SAD value described hereinabove with reference to FIGS. 57 to 62. However, in the present embodiment, the motion detection and motion compensation section 16 is formed from such hardware as hereinafter described and carries out a hierarchical block matching process by common hardware. Further, as hereinafter described, the common hardware can implement both of a noise reduction process of still pictures and a noise reduction process of moving pictures.

<Outline of the Hierarchical Block Matching Process in the Embodiment>

According to a popular motion vector detection process by block matching of the past, a reference block is successively shifted in a unit of a pixel (in a unit of one pixel or in a unit of a plurality of pixels), and the SAD values regarding the reference blocks at the individual shift positions are calculated. Then, a SAD value which has the lowest value from among the thus calculated SAD values is detected, and a motion vector is detected based on the position of the reference block having the lowest SAD value.

However, since, by such a conventional motion vector detection process as described above, the reference block is shifted in a unit of a pixel within a search range, the number of times of the matching process for calculating a SAD value increases in proportion to the search range. This gives rise to a problem that a long matching processing time period is required and an increased capacity is required for the SAD table.

Thus, in the present embodiment, a reduced image is formed from a target image or target frame and used to carry out block matching, and block matching on the original target image is carried out based on a result of the motion detection on the reduced image. It is to be noted that the reduced image is hereinafter referred to as reduced phase and the original image which is not in a reduced form is hereinafter referred to as base phase, respectively. Accordingly, in the present embodiment, block matching is carried out on a reduced phase, and then block matching is carried out on a base phase using a result of the block matching.

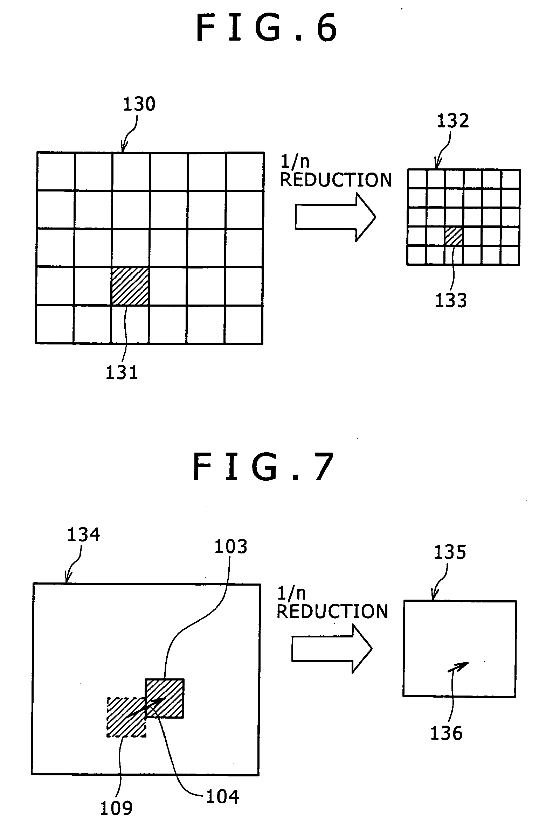

FIGS. 6 and 7 illustrate image reduction of a target frame or image and a reference frame or image, respectively. In particular, in the present embodiment, for example, as seen in FIG. 6, a base phase target frame 130 is reduced to 1/n (n is a positive number) in each of the horizontal direction and the vertical direction to produce a reduced phase target frame 132. Accordingly, a base phase target block 131 produced by dividing the base phase target frame 130 into a plurality of portions becomes a reduced phase target block 133 reduced to 1/n x 1/n in the horizontal direction and the vertical direction.

Then, the reference frame is reduced in accordance with the image reproduction magnification 1/n of the target frame. In particular, as seen in FIG. 7, a base phase reference frame 134 is reduced to 1/n in the horizontal direction and the vertical direction to form a reduced phase reference frame 135. Then, the motion vector 104 regarding the motion compensation block 103 detected on the base phase reference frame 134 is detected as a reduced phase motion vector 136 reduced to l/n × 1/n.

It is to be noted that, while, in the example described above, the image reproduction magnifications of the target frame and the reference frame are equal to each other, in order to reduce the amount of mathematical operation, different image reduction magnifications may be applied to the target frame or image and the reference frame or image whereas the numbers of pixels of the two frames are adjusted to each other by a process such as pixel interpolation to carry out matching.

Further, while the reduction magnifications in the horizontal direction and the vertical direction are equal to each other, they may be different from each other. For example, if the reduction magnification in the horizontal direction is set to 1/n and the reduction in the vertical direction is set to 1/m (m is a positive number, and n ≠ m), the reduced screen has a size of 1/n × 1/m of the original screen.

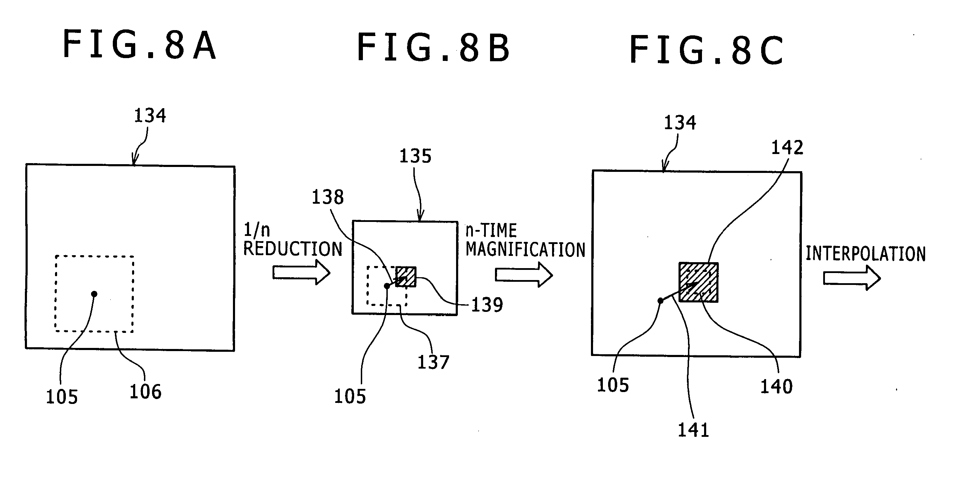

FIGS. 8A to 8C illustrate a relationship between a reduced phase reference vector and a base phase reference vector. If the motion detection origin 105 and a search range 106 of the base phase reference frame 134 are determined in such a manner as seen in FIG. 8A, then on the reduced phase reference frame 135 reduced to 1/n x 1/n, the search range becomes a reduced phase search range 137 reduced to l/n × 1/n as seen in FIG. 8B.

Further, in the present embodiment, reduced phase reference vectors 138 representative of the positional displacement amounts from the motion detection origin 105 on the reduced phase reference frame 135 are set within the reduced phase search range 137. Then, a correlation between reduced phase reference blocks 139 at positions indicated by such reduced phase reference vectors 138 and the reduced phase target block 133 (not shown in FIGS. 8A to 8C) is evaluated.

In this instance, since block matching is carried out on the reduced phase, the number of reduced phase reference block positions (reduced phase reference vectors) with regard to which the SAD value is to be calculated by the reduced phase reference frame 135 can be reduced. Consequently, the speed of the processing can be reduced by an amount by which the number of times of calculation of the SAD value, that is, the number of times of matching processing, is reduced, and the scale of the SAD table can be reduced.

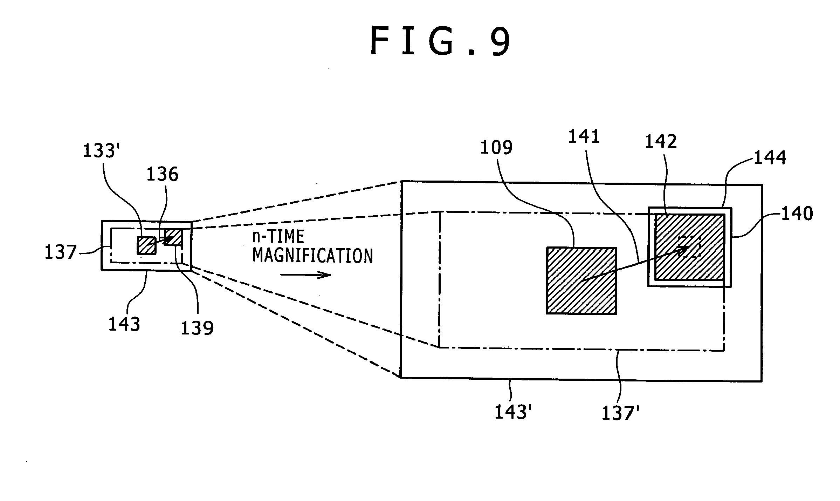

As shown in FIG. 9, the reduced phase motion vector 136 of the reduced phase reference frame 135 is calculated by correlation evaluation based on block matching between a plurality of reduced phase reference blocks 139 and the base phase target block 131 set in a reduced phase matching processing range 143 which depends upon the reduced phase search range 137. Since the image has a reduced scale to 1/n × 1/n, the accuracy of the reduced phase motion vector 136 is as low as n times that of one pixel. Therefore, even if the calculated reduced phase motion vector 136 is increased to n times, the motion vector 104 of the one-pixel accuracy cannot be obtained by the base phase reference frame 134.

However, it is apparent that, in the base phase reference frame 134, a base phase motion vector 104 of the one-pixel accuracy exists in the proximity of a motion vector obtained by increasing the reduced phase motion vector 136 to n times.

Therefore, in the present embodiment, a base phase search range 140 is set within a small range of the base phase reference frame 134 supposed to include the base phase motion vector 104 around a position indicated by a motion vector, that is, a base phase reference vector 141, obtained by multiplying the reduced phase motion vector 136 by n, and sets a base phase matching processing rage 144 in response to the thus set base phase search range 140 as seen in FIGS. 8C and 9.

Then, as seen in FIG. 8C, the base phase reference vector 141 in the base phase reference frame 134 is set as an index indicating a position in the base phase search range 140, and a base phase reference block 142 is set at a position indicated by the base phase reference vector 141 to carry out block matching of the base phase reference frame 134.

The base phase search range 140 and the base phase matching processing rage 144 thus set may be very small ranges in comparison with a reduced phase search range 137' and a matching processing range 143' obtained by multiplying the reduced phase search range 137 and the reduced phase matching processing range 143 by n which is a reciprocal to the reduction magnification as seen in FIG. 9.

Accordingly, where a block matching process is carried out only with regard to a base phase without carrying out hierarchical matching, it is necessary to set a plurality of reference blocks in the reduced phase search range 137' and the matching processing range 143' on the base phase to carry out mathematical operation of determining a correlation value to the target block. However, in the hierarchical matching process, only it is necessary to carry out the matching process within such a very small range as seen in FIG. 9.

Therefore, the number of base phase reference blocks to be set in the base phase search range 140 and the base phase matching processing rage 144 which are small ranges is very small. Consequently, an effect that the number of times of execution of the matching process, that is, the number of times of mathematical operation of a correction value, and the SAD values to be retained can be made very low and the processing speed can be raised and besides the scale of the SAD table can be reduced.

After a reduced phase motion vector 136 of the pixel accuracy is detected successfully in the base phase reference frame 134 in this manner, the SAD value of the reference block indicated by the reduced phase motion vector 136, that is, the minimum SAD value, and neighboring SAD values in the proximity of the minimum SAD value are used to carry out a quadratic curve approximation interpolation process to calculate a high-accuracy motion vector of the sub pixel accuracy.

The high-accuracy motion vector of the sub pixel accuracy is described. In the block matching technique described above, a motion vector can be detected only in the pixel accuracy because block matching is carried out in a unit of a pixel. A position at which a matching process is carried out, that is, the position of a reference block, exists in the pixel accuracy, and in order to calculate a motion vector of higher accuracy, a matching process in the sub pixel unit is required.

If the matching process is carried out in a pixel unit as high as N times in order to calculate a motion vector of the pixel accuracy as high as N times (the pixel pitch is reduced to 1/N), then the size of the SAD table increases to approximately $N^2$ times, and a memory of a very great storage capacity becomes to be required. Further, for a block matching process, it is necessary to produce an image upper-sampled to N times, and the scale of the hardware increases tremendously.

Therefore, it is tried to use a quadratic curve to interpolate the SAD table to calculate a motion vector of the sub pixel accuracy from the SAD table for which a matching process is carried out in a pixel unit. In this instance, although not quadratic curve approximation interpolation but linear interpolation or higher order approximation curve interpolation of the third or higher order may be carried out, the quadratic curve approximation interpolation is used in the present example from the equilibrium between the accuracy and the hardware.

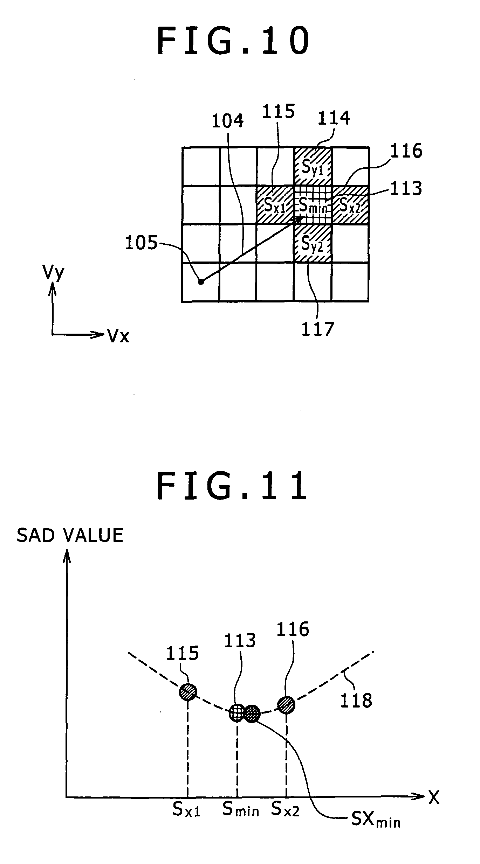

In the quadratic curve approximation interpolation, as seen in FIG. 10, a minimum SAD value Smin (refer to reference numeral 113 in FIG. 10) among the SAD values of the SAD table indicated by the base phase motion vector 104 of the pixel accuracy and a plurality of SAD values (hereinafter referred to as neighboring SAD values) at neighboring positions with the position of the minimum SAD value Smin, in the example shown in FIG. 10, four neighboring SAD values Sx1, Sx2 and Sy1, Sy2 (refer to reference numeral 114, 115, 116 and 117 in FIG. 10) neighboring in the X direction and the Y direction with the position of the minimum SAD value Smin are used.

Referring to FIG. 11, if the minimum SAD value Smin among the SAD values and the neighboring SAD values Sx1, Sx2 of the two neighboring points in the X or horizontal direction are used to apply a quadratic approximation curve 118, then the coordinate of a minimum value of the quadratic approximation curve 118 is the X coordinate Vx of the motion vector (high-accuracy motion vector) which exhibits a minimum value SXmin among the SAD values of the sub pixel accuracy. The quadratic curve approximate interpolation is represented by the following expression (1):

$$\text{SXmin} = 1/2 \times (\text{Sx2} - \text{Sx1})/(\text{Sx2} - 2\text{Smin} + \text{Sx1}) \ \dots \ (1)$$

The X coordinate taken on the SAD table by the minimum value SXmin among the SAD values of the sub pixel accuracy determined by the calculation expression (1) above is the X coordinate Vx which provides the minimum value among the SAD values of the sub pixel accuracy.

The division in the calculation expression (1) can be implemented by a number of times of subtraction. If the sub pixel accuracy to be determined is the accuracy of, for example, a pixel pitch equal to 1/4 the original pixel pitch, then the division can be determined only by two times of subtraction. Therefore, the circuit scale is small and the time required for the mathematical operation is short and a performance almost equal to that according to cubic curve interpolation considerably more complicated than second-order approximation curve interpolation can be implemented.

Similarly, the minimum SAD value Smin among the SAD values and the neighboring SAD values Sy1 and Sy2 of two neighboring points in the Y or vertical direction to the minimum SAD value Smin are used to apply a second-order approximation curve. Thus, the Y coordinate which takes the minimum value SYmin is the Y coordinate Vy which provides the minimum value among the SAD values of the sub pixel accuracy. The quadratic curve approximate interpolation is represented by the following expression (2):

$$\text{SYmin} = 1/2 \times (\text{Sy2} - \text{Sy2})/(\text{Sy2} - 2\text{Smin} + \text{Sy1}) \ \dots \ (2)$$

By carrying out approximation to a quadratic curve twice for the X direction and the Y direction in such a manner as described above, a motion vector (Vx, Vy) of high accuracy of the sub pixel accuracy is determined.

While, in the description above, the minimum value among the SAD values and the SAD values at two neighboring points in each of the X or horizontal direction and the Y or vertical direction are used, the number of neighboring SAD values in each of the X and Y directions may be more than two. Further, approximation to a quadratic curve may be applied not only to the X and Y directions but also to oblique directions.

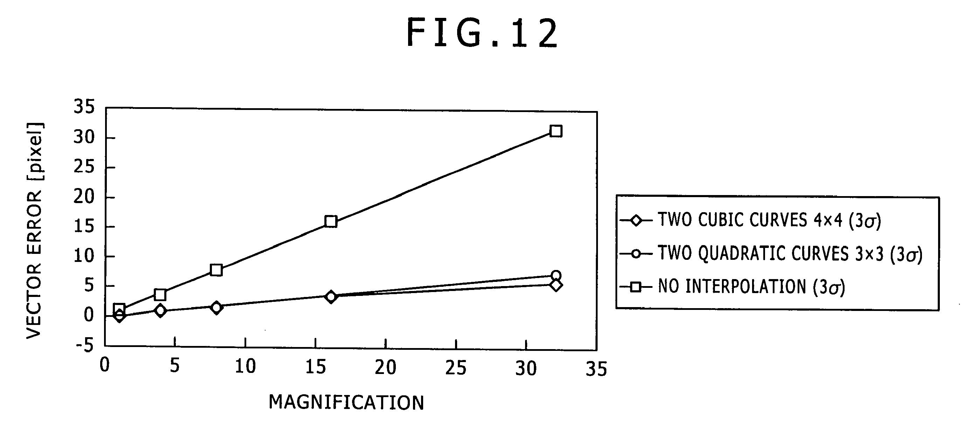

It is illustrated in FIG. 12 that, by using such means and procedure as described above, a vector detection result of the sub pixel accuracy is obtained from values of the SAD table of the accuracy of a pixel unit. In FIG. 12, the axis of abscissa indicates the interpolation magnification and represents to what number of times the resolution is increased in a one-dimensional direction. Since the SAD table is two-dimensional, while the area of the table decreases at a rate of a square, the error by interpolation increases linearly or so, the usefulness of the interpolation method described above can be recognized.

<Example of the Configuration of the Motion Detection and Motion Compensation Section 16>

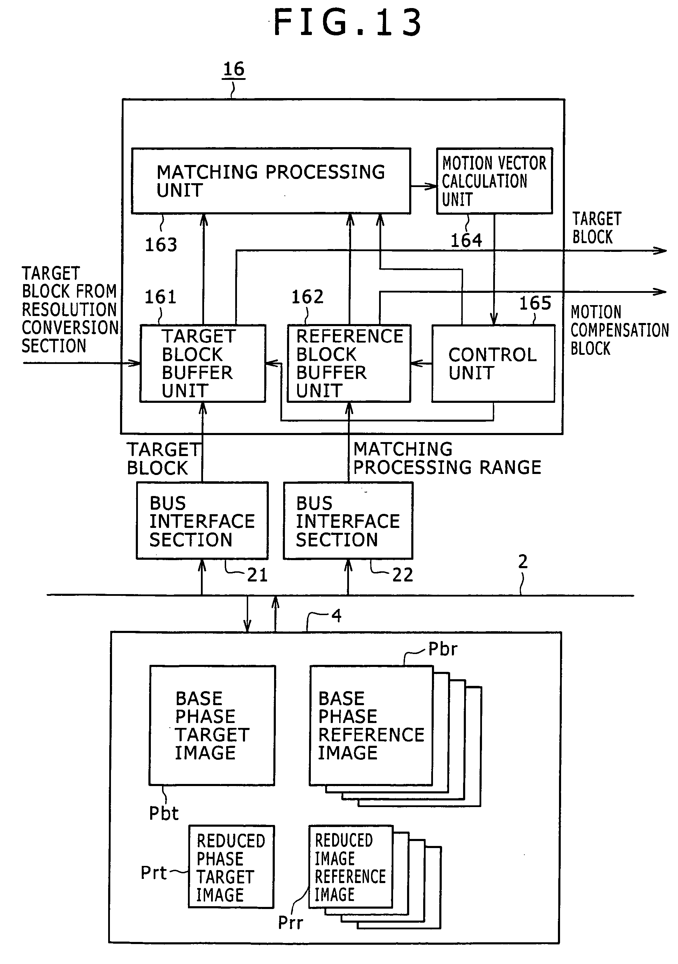

FIG. 13 shows an example of a configuration of the motion detection and motion compensation section 16. Referring to FIG. 13, the motion detection and motion compensation section 16 includes a target block buffer unit 161 for retaining pixel data of the target block 102, a reference block buffer unit 162 for retaining pixel data of the reference block 108, and a matching processing unit 163 for calculating the SAD value of corresponding pixels of the target block 102 and the reference block 108. The motion detection and motion compensation section 16 further includes a motion vector calculation unit 164 for calculating a motion vector from SAD value information outputted from the matching processing unit 163, and a control unit 165 for controlling the other components of the motion detection and motion compensation section 16.

The motion detection and motion compensation section 16 and the image memory section 4 are connected to each other by the system bus 2. In particular, in the example shown, a bus interface 21 and another bus interface 22 are connected between the system bus 2 and the target block buffer unit 161 and reference block buffer unit 162, respectively. Here, the AXI interconnect is used as the protocol for the system bus 2.

Upon still picture image pickup, a reduced phase target block or a base phase target block from a reduced phase target image Prt or a base phase target image Pbt stored in the image memory section 4 is written into the target block buffer unit 161. For the reduced phase target image Prt or the base phase target image Pbt, an image of a first picked up image frame after depression of the shutter button is written as the target frame 102. Then, when image superposition is carried out based on block matching with a reference image, the reduced phase target image Prt or the base phase target image Pbt is rewritten into the NR image obtained by the image superposition. In the present embodiment, image data of the base phase target image Pbt and the reduced phase target image Prt are not reduced.

Into the reference block buffer unit 162, a reduced phase reference block or a base phase reference block from an image frame of a reduced phase reference image Prr or a base phase reference image Pbr stored in the image memory section 4 is written. For the reduced phase reference image Prr or the base phase reference image Pbr, image pickup frames after the first image pickup frame are written as the reference frame 108.

In this instance, where a plurality of picked up images picked up successively are fetched while a superposition process of images is carried out (this is hereinafter referred to as in-pickup addition), image pickup frames after the first image pickup frame are successively fetched one by one as the base phase reference image and the reduced phase reference image. Accordingly, it is necessary to retain only one image pickup frame as the base phase reference image and the reduced phase reference image.

However, where, after a plurality of picked up images picked up successively are fetched, the motion detection and motion compensation section 16 and the image superposition section 17 carry out motion vector detection and then execute superposition of the images (this is called after-pickup addition), it is necessary to store and retain all of the plural picked up images after the first picked up image as the base phase reference image and the reduced phase reference images.

Although the image pickup apparatus can use both of the in-pickup addition and the after-pickup addition, in the present embodiment, a process of the after-pickup addition is adopted for the still picture NR process taking it into consideration that fine images from which noise is reduced are required although rather long processing time is required. Detailed description of the still picture NR process in the present embodiment is hereinafter described.

On the other hand, upon moving picture image pickup, a picked up image frame is inputted as a target frame 102 from the image correction and resolution conversion section 15 to the motion detection and motion compensation section 16. Into the target block buffer unit 161, a target block extracted from a target frame from the image correction and resolution conversion section 15 is written. Meanwhile, a picked up image frame immediately preceding to the target frame and stored in the image memory section 4 is determined as a reference frame 108, and a reference block from the reference frame (base phase reference image Pbr or reduced phase reference image Prr) is written into the reference block buffer unit 162.

Upon moving picture image pickup, it is only necessary to retain an immediately preceding picked up image frame to be used for block matching with the target frame from the image correction and resolution conversion section 15 as the base phase reference image Pbr or reduced phase reference image Prr. The image information to be retained in the image memory section 4 may be only for one frame. Therefore, in the present embodiment, the base phase reference image Pbr or the reduced phase reference image Prr is not reduced.

The matching processing unit 163 carries out the block matching process described hereinabove with reference to FIGS. 57 to 62 for both of a target block stored in the target block buffer unit 161 and reference blocks stored in the reference block buffer unit 162.

Here, in order to detect the degree of correlation between the target block and the reference block in the block matching, also in this embodiment, luminance information of image data is used to carry out SAD value calculation, and a minimum SAD value is detected and a reference block having the minimum SAD value is detected as the highest correlation reference block.

It is to be noted that, for calculation of SAD values, not luminance information but information of color difference signals or three primary color signals R, G and B may be used. Further, upon calculation of SAD values, although all pixels in a block are normally used, in order to reduce the amount of mathematical operation, only pixel values of pixels at skipped positions by sampling out may be used.

The motion vector calculation unit 164 detects a motion vector of a reference block with respect to the target block from results of the matching process of the matching processing unit 163. In the present embodiment, the motion vector calculation unit 164 further has a function of detecting and retaining a minimum value among the SAD values and besides retaining a plurality of SAD values of different reference vectors in the proximity of the reference vector which exhibits the minimum SAD value and carrying out, for example, a quadratic curve approximation interpolation process to detect a high-accuracy motion vector of the sub pixel accuracy.

The control unit 165 controls the processing operation of the hierarchical block matching process of the motion detection and motion compensation section 16 under the control of the CPU 1.

<Example of a Configuration of the Target Block Buffer 161>

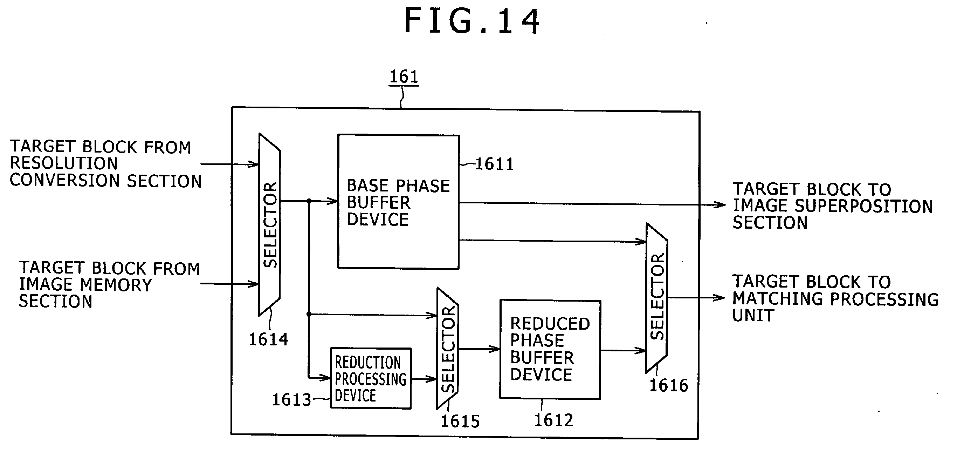

An example of a configuration of the target block buffer 161 is shown in FIG. 14. Referring to FIG. 14, the target block buffer 161 shown includes a base phase buffer device 1611, a reduced phase buffer device 1612, a reduction processing device 1613, and selectors 1614, 1615 and 1616. Though not shown in FIG. 14, the selectors 1614, 1615 and 1616 are controlled and selected by a selection control signal from the control unit 165.

The base phase buffer device 1611 is provided for temporarily storing a base phase target block. The base phase buffer device 1611 sends the base phase target block to the image superposition section 17 and supplies the base phase target block to the selector 1616.

The reduced phase buffer device 1612 is provided for temporarily storing a reduced phase target block. The reduced phase buffer device 1612 supplies the reduced phase target block to the selector 1616.

The reduction processing device 1613 is provided for producing, since a target block is sent thereto from the image correction and resolution conversion section 15 as described hereinabove upon moving picture image pickup, a reduced phase target block. The reduced phase target block from the reduction processing device 1613 is supplied to the selector 1615.

The selector 1614 selects and outputs, upon moving picture image pickup, a target block (bottom image target block) from the image correction and resolution conversion section 15, but selects and outputs, upon still picture image pickup, a base phase target block or a reduced phase target block from the image memory section 4, in response to a selection control signal from the control unit 165. The output from the selector 1614 is supplied to the base phase buffer device 1611, reduction processing device 1613 and selector 1615.

The selector 1615 selectively outputs, upon moving picture image pickup, a reduced phase target block from the reduction processing device 1613, but selectively outputs, upon still picture image pickup, a reduced phase target block from the image memory section 4, in response to a selection control signal from the control unit 165. The output of the selector 1615 is supplied to the reduced phase buffer device 1612.

The selector 1616 selectively outputs, upon block matching between reduced phases, a reduced phase target block from the reduced phase buffer device 1612, but selectively outputs, upon block matching between base phases, a base phase target block from the base phase buffer device 1611, in response to a selection control signal from the selector 1615. The reduced phase target block or base phase target block outputted from the selector 1616 is sent to the matching processing unit 163.

<Example of a Configuration of the Reference Block Buffer Unit 162>

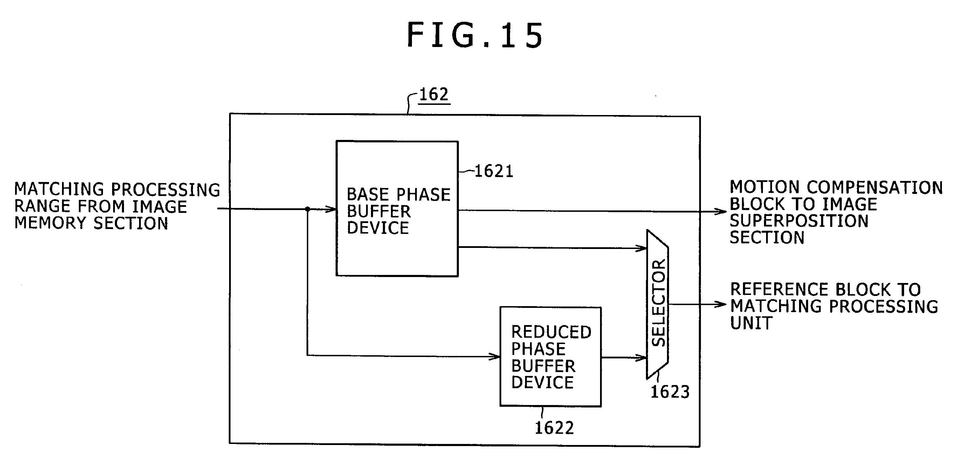

An example of a configuration of the reference block buffer unit 162 is shown in FIG. 15. Referring to FIG. 15, the reference block buffer unit 162 includes a base phase buffer device 1621, a reduced phase buffer device 1622, and a selector 1623. Though not shown in FIG. 15, the selector 1623 is controlled and selected by a selection control signal from the control unit 165.

The base phase buffer device 1621 temporarily stores a base phase reference block from the image memory section 4 and supplies the base phase reference block to the selector 1623 and besides sends the base phase reference block as a motion compensation block to the image superposition section 17.

The reduced phase buffer device 1622 temporarily stores a reduced phase reference block from the image memory section 4. The reduced phase buffer device 1622 supplies the reduced phase reference block to the selector 1623.

The selector 1623 selectively outputs, upon block matching between reduced phases, a reduced phase reference block from the reduced phase buffer device 1622, but upon block matching between base phases, a base phase reference block from the base phase buffer device 1621, in response to a selection control signal from the control unit 165. The reduced phase reference block or base phase reference block outputted from the selector 1623 is sent to the matching processing unit 163.

<Example of a Configuration of the Image Superposition

Section 17>

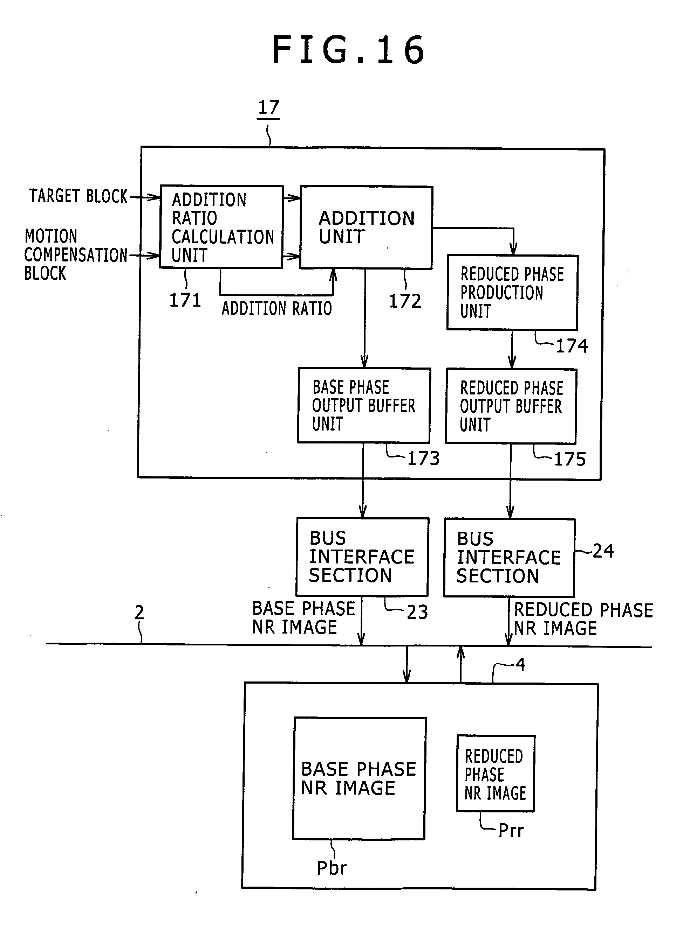

An example of a configuration of the image superposition section 17 is shown in FIG. 16. Referring to FIG. 16, the image superposition section 17 includes an addition ratio calculation unit 171, an addition unit 172, a base phase output buffer unit 173, a reduced phase production unit 174 and a reduced phase output buffer unit 175.

The image superposition section 17 and the image memory section 4 are connected to each other by the system bus 2. In particular, in the example shown, a bus interface section 23 and another bus interface section 24 are connected between the system bus 2 and the base phase output buffer unit 173 and reference block buffer unit 162, respectively.

The addition ratio calculation unit 171 receives a target block and a motion compensation block from the motion detection and motion compensation section 16 and decides the addition ratio of the two blocks depending upon whether the addition method adopted is a simple addition method or an average addition method. Then, the addition ratio calculation unit 171 supplies the determined addition ratio to the addition unit 172 together with the target block and the motion compensation block.

A base phase NR image of a result of the addition by the addition unit 172 is written into the image memory section 4 through the base phase output buffer unit 173 and the bus interface section 23. Further, the base phase NR image of the result of addition by the addition unit 172 is converted into a reduced phase NR image by the reduced phase production unit 174. The reduced phase NR image from the reduced phase production unit 174 is written into the image memory section 4 through the reduced phase output buffer unit 175 and the bus interface section 24.

Now, the simple addition method and the average addition method in image superposition are described.

Where a plurality of images are to be superposed, if they are superposed in a luminance relationship of 1:1, then the dynamic range increases to twice. Accordingly, if it is intended to superpose images of low illuminance to raise the sensitivity of the image while NR (noise reduction) is applied, the method of adding the luminance in the relationship of 1:1 is preferably used. This method is the simple addition method.

On the other hand, where NR is applied to images picked up in a condition that the illuminance can be assured, a method of such addition that the total luminance becomes 1 without increasing the dynamic range is preferably used. This is the average addition method.

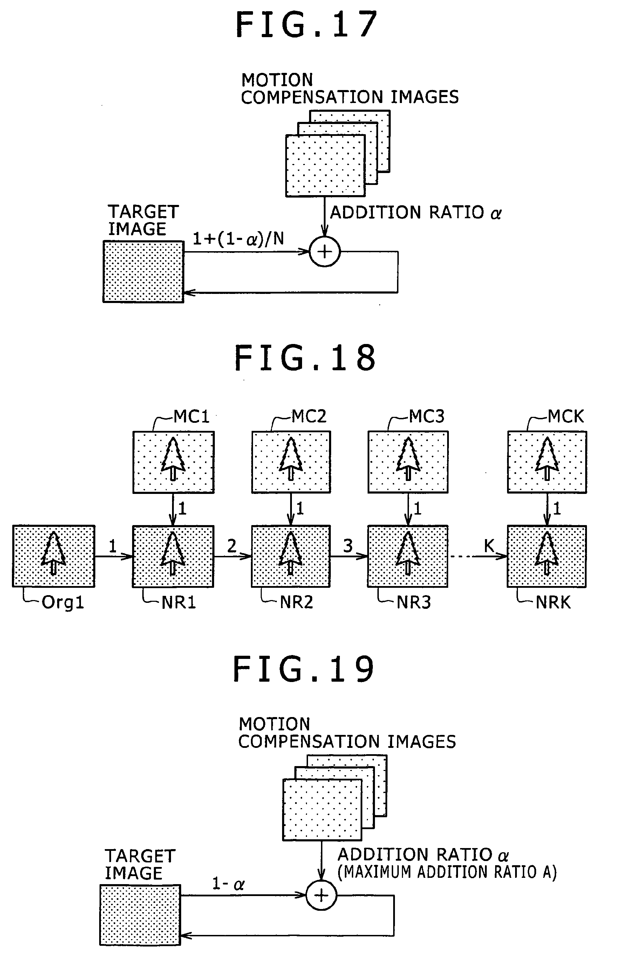

FIGS. 17 and 18 illustrate the simple addition method and a result of a process of the method. According to the simple addition method, a first image (target image Org0) and a second image (motion compensation image MC1) are added as they are to obtain an output image NR1 having a doubled dynamic range. Then, a third image (motion compensation image MC2) is added to the output image NR1. This is repeated for K motion compensation images to produce an image having a dynamic range as high as K times (refer to FIG. 18). At this time, since noise components are dispersed in time, the absolute amount of the noise components is kept fixed even if such addition is repeated.

In the simple addition system, as shown in FIG. 17, when the addition ratio is to be changed, where the addition ratio of the motion compensation image MCi (i = 1, 2, ..., K) is represented by $\alpha$, the multiplication coefficient for the target image is $1 + (1 - \alpha)/K$.

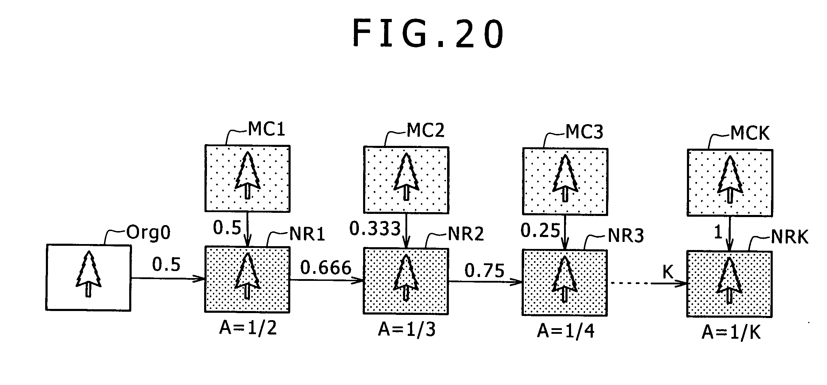

FIGS. 19 and 20 illustrate the average addition method and a result of processing of the method. In the average addition method, the first image (target image Org0) and the second image (motion compensation image MC1) are added such that the addition ratio $\alpha$ of the motion compensation image is set so that the sum total of the luminance of the images becomes 1.

In the average addition method, where the addition ratio of the motion compensation image MCi (i = 1, 2, ..., K) is represented by $\alpha$, the multiplication factor for the target image becomes $1 - \alpha$.

In the average addition method, a maximum addition ratio A is set to the addition ratio $\alpha$. The maximum addition ratio A of the addition ratio $\alpha$ has a value of 1/2 as an initial value and thereafter changes to 1/K in response to the addition number K of motion compensation images.

An image obtained by addition of N images in a state wherein the addition ratio $\alpha$ of motion compensation images is fixed to the maximum addition ratio does not change dynamic range, but all images are added by 1/K (refer to FIG. 20).

In the image pickup apparatus of the present embodiment, the image superposition section 17 selectively uses the simple addition method and the average addition method depending upon a condition upon image pickup or upon a setting information. For example, in response to the illuminance upon image pickup or to a result of detection of luminance information of a picked up image, the image superposition section 17 selectively uses the simple addition method when it is desired to increase the dynamic range but uses the average addition method when sufficient illuminance is assured.

[General Flow of the Noise Reduction Process of a Picked Up Image]

<Still Picture Image Pickup>

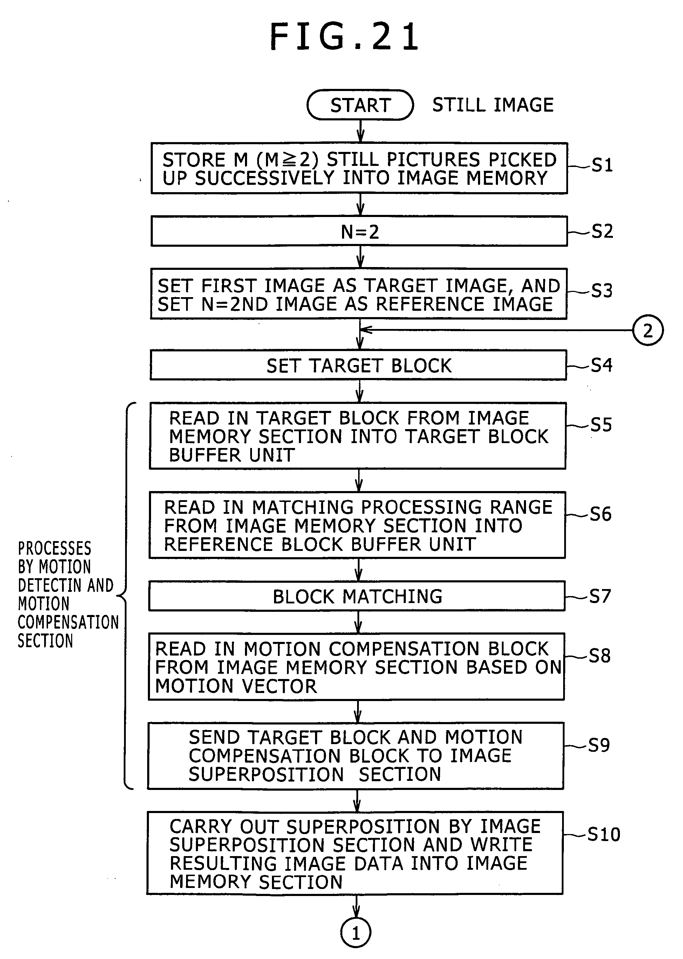

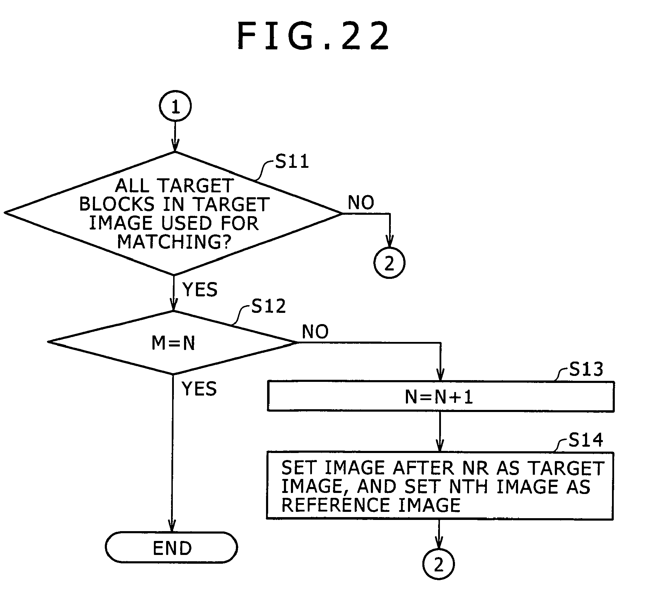

A flow chart of a noise reduction process by superposition of images upon still picture image pickup by the image pickup apparatus of the present embodiment having the configuration described above is shown in FIGS. 21 and 22. Steps of the flow charts of FIGS. 21 and 22 are executed under the control of the CPU 1 and the control unit 165 of the motion detection and motion compensation section 16 which is controlled by the CPU 1 and are executed by the image superposition section 17.

First, if the shutter button is depressed, then the image pickup apparatus carries out high-speed image pickup of a plurality of images at a high speed under the control of the CPU 1. In particular, M (M is an integer equal to or higher than 2) picked up image data, that is, picked up image data for M frames, to be superposed upon still picture image pickup are fetched at a high speed and placed into the image memory section 4 (step S1).

Then, the reference frame is set to an Nth (N is an integer equal to or higher than 2 but is equal to or lower than M) one of the M image frames stored in the image memory section 4. In this instance, the control unit 165 sets the initial value for the value N to N = 2 (step S2). Then, the control unit 165 sets the first image frame to a target image or frame and sets the Nth = second image as a reference image or frame (step S3).

Then, the control unit 165 sets a target block in the target frame (step S4), and the motion detection and motion compensation section 16 reads the target block from the image memory section 4 into the target block buffer unit 161 (step S5). Further, the motion detection and motion compensation section 16 reads pixel data within a matching processing range into the reference block buffer unit 162 (step S6).

Thereafter, the control unit 165 reads out reference blocks within the search range from the reference block buffer unit 162, and the matching processing unit 163 carries out a hierarchical matching process. It is to be noted that, in the present example, those SAD values which are hereinafter described from among SAD values calculated by the matching processing unit 163 are sent to the motion vector calculation unit 164 in order that a minimum value and neighboring values among the SAD values are retained to carry out a quadratic curve approximation interpolation process. This is repeated for all reference vectors within the search range. Thereafter, a quadratic curve approximation interpolation processing device carries out the interpolation process described hereinabove and outputs a motion vector of high accuracy (step S7).

Then, the control unit 165 reads out a motion compensation block from the reference block buffer unit 162 in accordance with the high-accuracy motion vector detected in such a manner as described above (step S8) and sends the read out motion compensation block to the image superposition section 17 in synchronism with the target block (step S9).

Thereafter, the image superposition section 17 carries out superposition of the target block and the motion compensation block and stores NR image data of the superposed block into the image memory section 4. In particular, the image superposition section 17 writes the NR image data of the superposed block into the image memory section 4 (step S10).

Referring now to FIG. 22, the control unit 165 thereafter decides whether or not the block matching is completed for all target blocks in the target frame (step S11). If it is decided that the block matching process is not completed for all target blocks as yet, then the processing returns to step S4, at which a next target block in the target frame is set. Thereafter, the processes at steps S4 to S11 are repeated.

On the other hand, if it is decided at step S11 that the block matching is completed for all target blocks in the target frame, then the control unit 165 decides whether or not the processing for all reference frames to be superposed is completed, that is, whether or not M = N (step S12).

If it is decided at step S12 that M $\neq$ N, then N is incremented by one (that is, N = N + 1) (step S13). Then, the control unit 165 sets the NR image produced by the superposition at step S10 as a target image or target frame and sets the N = 1th image as a reference image or reference frame (step S14). Thereafter, the processing returns to step S4 of FIG. 21 to repeat the processes at the steps beginning with step S4. In short, where M is equal to or higher than 3, an image obtained by superposition with regard to all target blocks is set as a target image, and an image later than the third image is set as a reference frame. Then, the processes described above are repeated for the target image and the reference frame. Then, if M = N is decided at step S12, then the present processing routine is ended.

It is to be noted that image data of an NR image of a result of superposition of M picked up images is compression encoded by the still picture codec section 18 and then supplied to the recording and reproduction apparatus section 5, by which it is recorded on the recording medium.

It is to be noted that, while the noise reduction processing method for still images involves storage of M image data in the image memory section 4, superposition may be carried out every time one image is picked up. In this instance, since the number of image frames to be stored in the image memory section 4 is only one, although a longer image pickup interval is required, the memory cost can be minimized in comparison with the noise reduction processing method of the processing routine of FIGS. 21 and 22.

<Moving Picture Image Pickup>

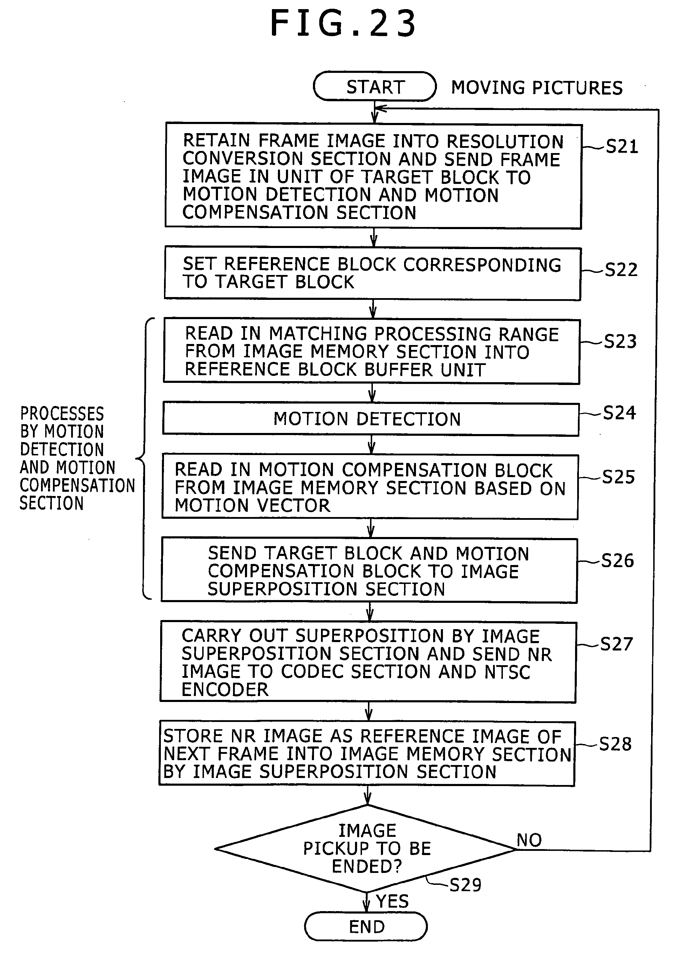

A flow chart of a noise reduction process by superposition of images upon moving picture image pickup by the image pickup apparatus of the present embodiment is shown in FIG. 23. Also steps of the flow chart of FIG. 23 are executed under the control of the CPU 1 and the control unit 165 of the motion detection and motion compensation section 16 which is controlled by the CPU 1. If a moving picture recording button is operated by the user, then the CPU 1 issues an instruction to start the process of FIG. 23.

In the present embodiment, the motion detection and motion compensation section 16 is configured suitable to carry out a matching process in a unit of a target block. Thus, referring to FIG. 23, the image correction and resolution conversion section 15 retains a frame image and sends image data in a unit of a target block to the motion detection and motion compensation section 16 under the control of the CPU 1 (step S21).

The image data of the target block sent to the motion detection and motion compensation section 16 is stored into the target block buffer unit 161. Then, the control unit 165 sets a reference vector corresponding to the target block (step S22) and reads image data within a range for a matching process from the image memory section 4 into the reference block buffer unit 162 (step S23).

Then, the matching processing unit 163 and the motion vector calculation unit 164 carry out a motion detection process by hierarchical block matching (step S24). In particular, the matching processing unit 163 first calculates a SAD value between pixel values of a reduced phase target block and pixel values of a reduced phase reference block on the reduced phase and sends the calculated SAD value to the motion vector calculation unit 164. The matching processing unit 163 repeats the processes described for all of the reduced phase reference blocks in the search range. If the calculation of the SAD value is completed for all reduced phase reference blocks in the search range, then the motion vector calculation unit 164 specifies the lowest SAD value to detect a reduced phase motion vector.

The control unit 165 multiplies the reduced phase motion vector detected by the motion vector calculation unit 164 by a reciprocal to the reduction ratio to convert the reduced phase motion vector into a motion vector on the base phase. Then, the control unit 165 determines a region centered at a position indicated by the vector obtained by the conversion on the base phase as a search range on the base phase. Then, the control unit 165 controls the matching processing unit 163 to carry out a block matching process on the base phase within the search range. The matching processing unit 163 calculates the SAD value between pixel values of the base phase target block and pixel values of the base phase reference block, and sends the calculated SAD value to the motion vector calculation unit 164.

After the calculation of the SAD value is completed for all reduced phase reference blocks in the search range, the motion vector calculation unit 164 specifies the lowest SAD value to detect a reduced phase motion vector and specifies SAD values of neighboring reduced phase reference blocks. Then, the motion vector calculation unit 164 uses the SAD values to carry out the quadratic curve approximation interpolation process described hereinabove and outputs a high-accuracy motion vector of the sub pixel accuracy.

Thereafter, the control unit 165 reads out image data of the motion compensation block from the reference block buffer unit 162 in accordance with the high-accuracy motion vector calculated at step S24 (step S25) and sends the image data to the image superposition section 17 at the succeeding stage in synchronism with the target block (step S26).

The image superposition section 17 carries out superposition of the target block and the motion compensation block. Then, the image superposition section 17 outputs image data of an NR image of a result of the superposition to the monitor display apparatus 6 through the NTSC encoder 20 so that moving picture recording monitoring is carried out. Further, the image superposition section 17 sends the image data of the NR image to the monitor display apparatus 6 through the moving picture codec section 19 so as to be recorded on the recording medium (step S27).

Further, the image obtained by the superposition by the image superposition section 17 is stored into the image memory section 4 so as to be used as a reference frame for a next frame, that is, for a next target frame (step S28).

Then, the CPU 1 decides whether or not a moving picture recording stopping operation is carried out by the user (step S29). If it is decided that the moving picture recording stopping operation is not carried out by the user, then the CPU 1 issues an instruction to return the processing to step S21 and repeat the processes at the steps beginning with step S21. On the other hand, if it is decided at step S29 that the moving picture recording stopping operation is carried out by the user, then the CPU 1 ends this processing routine.

While, in the processing routine of the noise reduction process of moving pictures described above, an image frame preceding by one frame is set as a reference frame, another frame preceding by more than one frame may be used as the reference frame. Also it is possible to store an image preceding by one frame and another frame preceding by two frames in the image memory section 4 and selectively use one of the two image frames from the contents of image information of the two images .

By using such means, procedures and system configuration as described above, the still picture noise reduction process and the moving picture noise reduction process can be carried out by a single piece of common hardware for the block matching process.

[Motion vector calculation unit 164]

An example of a configuration and operation of the motion vector calculation unit 164 are described.

In a known example of a motion vector calculation unit, a SAD table TBL which stores all SAD values calculated within a search range is produced, and a minimum SAD value is detected from within the SAD table TBL. Then, a reference vector corresponding to the position of a reference block which exhibits the minimum SAD value is calculated as a motion vector. Then, where quadratic curve approximation interpolation is carried out, a plurality of SAD values, four values in the example illustrated, in the proximity of the minimum SAD value are extracted from the SAD table TBL, and the SAD values are used to carry out an interpolation process. Accordingly, this method requires a memory having a great storage capacity for the SAD table TBL.

In examples described below, the SAD table TBL which stores all SAD values calculated within a search range is not produced so that the circuit scale can be reduced and the processing time can be reduced.

<First Example of the Motion vector calculation Unit 164>

As described above, the block matching process involves setting of the position indicated by a reference vector as the position of a reference block and calculation of the SAD value of each pixel of each of such reference blocks and each pixel of a target block. Then, the calculation process is carried out for reference blocks at positions indicated by all reference vectors in a search range.

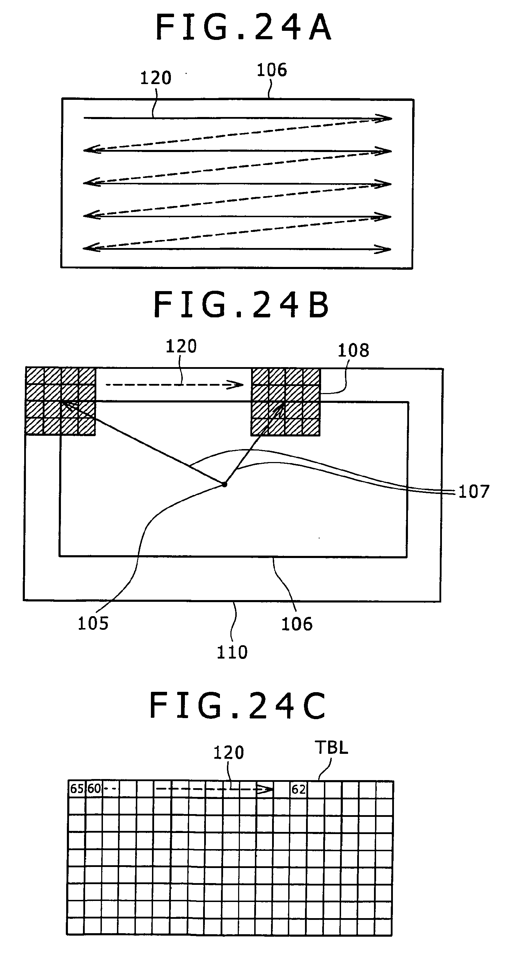

Here, where the position of a reference block within a search range is changed to search for a motion compensation block, various methods are available such as a method wherein the search is carried out in order beginning with an end of the screen or frame and another method wherein the search is carried out toward the outside from the center of the screen or frame. However, in the present embodiment, a search method in which the following procedures are repeated is adopted wherein the search direction is set as indicated by an arrow mark 120 in FIG. 24A and the search is started in a horizontal direction from the left upper corner of the search range and then, after the search for one line comes to an end, another line just below the line in the vertical direction is searched in the horizontal direction beginning with the left and thereof.

In particular, as seen in FIG. 24B, a reference block 108 is successively set in the horizontal direction from the left upper corner of the search range 106 within the search range 106 and a search is carried out for each of such reference blocks 108, and calculation of the SAD value is carried out for each of the reference blocks 108. Consequently, also the corresponding SAD table is successively filled in the horizontal direction from the left upper corner thereof as seen in FIG. 24C. At this instance, the range of pixel data used actually for the matching process is the matching processing range 110 corresponding to the size of the reference block 108 as described hereinabove.

As described hereinabove with reference to FIGS. 10 and 11, in order to carry out a high-accuracy quadratic curve approximation interpolation process of the sub pixel accuracy, the minimum SAD value Smin among the SAD values and the neighboring SAD values Sx1, Sx2, Sy1 and Sy2 should be determined.

If, when a SAD value regarding each reference block is calculated, the calculated SAD value and a minimum value among the SAD values till then are compared with each other and then, if the calculated SAD value is lower than the minimum value among the SAD values till then, then the calculated SAD value is retained as the minimum value and the SAD value and the reference vector at that time are retained, then the minimum value among the SAD values and position information of the reference vector which assumes the minimum value, that is, information of the reference vector, can be determined without producing any SAD table.

Then, if the detected minimum value of the SAD value is retained and the SAD values of reference blocks in the proximity of the position of the reference block which exhibits the minimum SAD value are retained as neighboring SAD values, then also the neighboring SAD values can be retained without producing any SAD table.

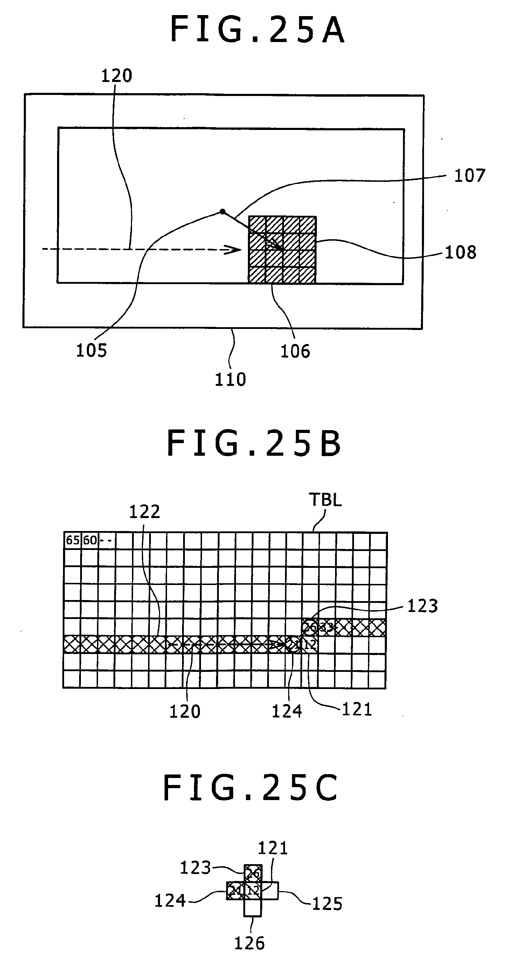

At this time, since, in the present example, such a search method as described with reference to FIG. 24A is adopted, if a memory having a capacity for storing SAD values for one line in the horizontal direction (such memory is hereinafter referred to as line memory) is provided in the SAD table TBL of the past, then when a SAD value of a new reference block is calculated, on the SAD table TBL, the SAD values of a plurality of reference blocks for one line of the SAD table TBL calculated preceding to the newly calculated minimum SAD value 121 are stored as storage data 122 in the line memory on the SAD table TBL as indicated by slanting lines in FIG. 25B.

Therefore, if the SAD value of a reference block newly calculated is detected as a minimum SAD value, then a SAD value 123 (neighboring SAD value (Sy1)) of the reference block at a position higher by one line than the position of the reference block which exhibits the minimum SAD value 121 and the SAD value 124 (neighboring SAD value (Sx1) of the reference block at a position on the left side of the position of the reference block which exhibits the minimum SAD value 121 on the SAD table TBL can be acquired from the line memory described hereinabove.

Then, as a neighboring SAD value (Sx2) (refer to reference numeral 125 of FIG. 25C) which is the SAD value of the reference block at the position on the right side of the position of the reference block of the minimum SAD value on the SAD table TBL, the SAD value calculated at the position of the reference block may be retained. Similarly, as a neighboring SAD value (Sy2) (refer to reference numeral 126 of FIG. 25C) which is the SAD value of the reference block at the position just below the position of the reference block of the newly calculated minimum SAD value on the SAD table TBL, the SAD value calculated at the position of the reference block later may be retained.

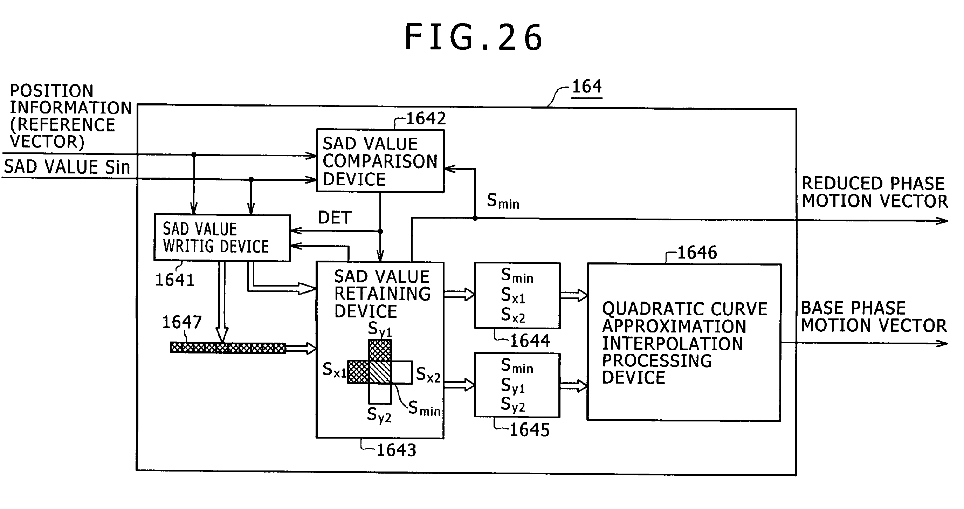

Taking the foregoing description into consideration, the first example of the motion vector calculation unit 164 has such a hardware configuration as shown in FIG. 26.

Referring to FIG. 26, the first example of the motion vector calculation unit 164 shown does not include the SAD table TBL for retaining all calculated SAD values. More particularly, the motion vector calculation unit 164 shown includes a SAD value writing device 1641, a SAD value comparison device 1642, and a SAD value retaining device 1643. The motion vector calculation unit 164 further includes an X direction (horizontal direction) neighboring value extraction device 1644, and a Y direction (vertical direction) neighboring value extraction device 1645. The motion vector calculation unit 164 further includes a quadratic curve approximation interpolation processing device 1646, and a line memory 1647 for one line of the SAD table TBL.

The SAD value retaining device 1643 includes retaining devices or memory for a minimum SAD value Smin and neighboring SAD values Sx1, Sx2, Sy1 and Sy2. In the present first example, the SAD value retaining device 1643 supplies the minimum SAD value Smin from the minimum SAD value retaining portion to the SAD value comparison device 1642. The SAD value retaining device 1643 further supplies position information (reference vectors) of the reference blocks of, from among the retained neighboring SAD values, the neighboring SAD value Sx2 on the right side of the minimum SAD value Smin and the neighboring SAD value Sy2 on the lower side of the minimum SAD value Smin to the SAD value writing device 1641.

In the present first example, the SAD value comparison device 1642 receives the position information or reference vector of the reference block and the SAD value Sin of the reference block from the matching processing unit 163 and further receives the minimum SAD value Smin from the minimum SAD value retaining portion of the SAD value retaining device 1643.

Then, the SAD value comparison device 1642 compares the SAD value Sin calculated at the point of time from the matching processing unit 163 and the minimum SAD value Smin from the minimum SAD value retaining portion of the SAD value retaining device 1643 with each other. Then, if the SAD value Sin calculated at the point of time from the matching processing unit 163 is lower, then the SAD value comparison device 1642 detects that the SAD value is the minimum SAD value at the point of time. On the other hand, where the SAD value Sin is higher, then the SAD value comparison device 1642 detects that the minimum SAD value Smin from the minimum SAD value retaining portion of the SAD value retaining device 1643 still remains the minimum value at the present point of time. Then, the SAD value comparison device 1642 supplies information DET of a result of the detection to the SAD value writing device 1641 and the SAD value retaining device 1643.

The SAD value writing device 1641 includes a buffer memory for one pixel for temporarily storing the calculated SAD value Sin and the position information or reference vector of the same from the matching processing unit 163. In the present first example, the SAD value writing device 1641 writes the position information or reference vector of the reference block from the matching processing unit 163 and the SAD value Sin of the reference block into the line memory 1647. In this instance, the line memory 1647 carries out operation similar to that of a shift register. When the line memory 1647 does not have a free space, if new position information and SAD value are stored, then the oldest position information and SAD value are abandoned from the line memory 1647.

Further, before the SAD value writing device 1641 writes the calculated SAD value Sin and corresponding position information into the line memory 1647, it carries out the following process.

In particular, if the information DET of a result of the comparison detection from the SAD value comparison device 1642 indicates that the SAD value Sin is the minimum value, then the SAD value writing device 1641 sends the position information or reference vector of the reference block from the matching processing unit 163 and the SAD value Sin of the reference block to the SAD value retaining device 1643.

The SAD value retaining device 1643 detects from the information DET of a result of the comparison detection from the SAD value comparison device 1642 that the SAD value Sin is the minimum value, and stores the position information or reference vector of the reference block sent thereto from the SAD value writing device 1641 and the SAD value Sin of the reference block into the minimum SAD value retaining device.

Further, also when the position information or reference vector of the reference block from the matching processing unit 163 coincides with the position information of the neighboring SAD value Sx2 or Sy2 received from the SAD value retaining device 1643, the SAD value writing device 1641 sends the position information or reference vector of the reference block from the matching processing unit 163 and the SAD value Sin of the reference block to the SAD value retaining device 1643.

The SAD value retaining device 1643 recognizes, from the received position information or reference vector of the reference block, to which neighboring SAD value the information relates, and stores the position information or reference vector of the reference block and the SAD value Sin of the reference block into the corresponding neighboring SAD value retaining device.

If the processes described above are completed for all reference blocks in the search range, then the minimum SAD value and the position information as well as the four neighboring SAD values and corresponding position information are retained into the SAD value retaining device 1643.

Thus, the X direction (horizontal direction) neighboring value extraction device 1644 and the Y direction (vertical direction) neighboring value extraction device 1645 read out the detected minimum SAD value Smin, the corresponding neighboring SAD values Sx1, Sx2, Sy1 and Sy2 retained in the SAD value retaining device 1643 and corresponding position information and send the read out information to the quadratic curve approximation interpolation processing device 1646. The quadratic curve approximation interpolation processing device 1646 receives the information and carries out interpolation by a quadratic curve twice for the X direction and the Y direction to calculate a high-accuracy motion vector of the sub pixel accuracy as described hereinabove.

In the first example, detection of a motion vector of the sub pixel accuracy can be detected by using a line memory for one line of the SAD table TBL in place of the SAD table TBL as described above.

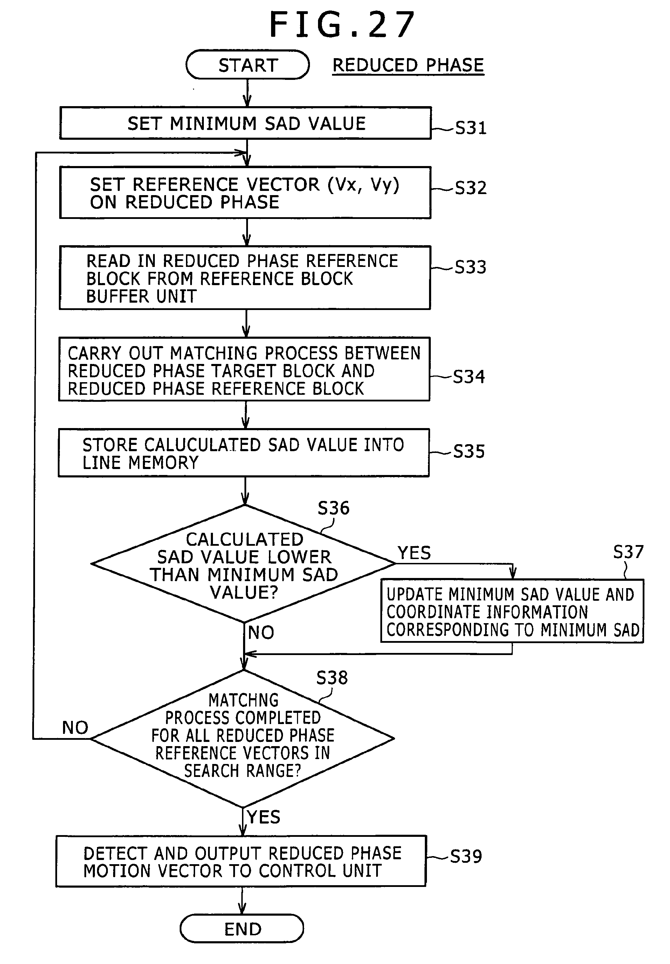

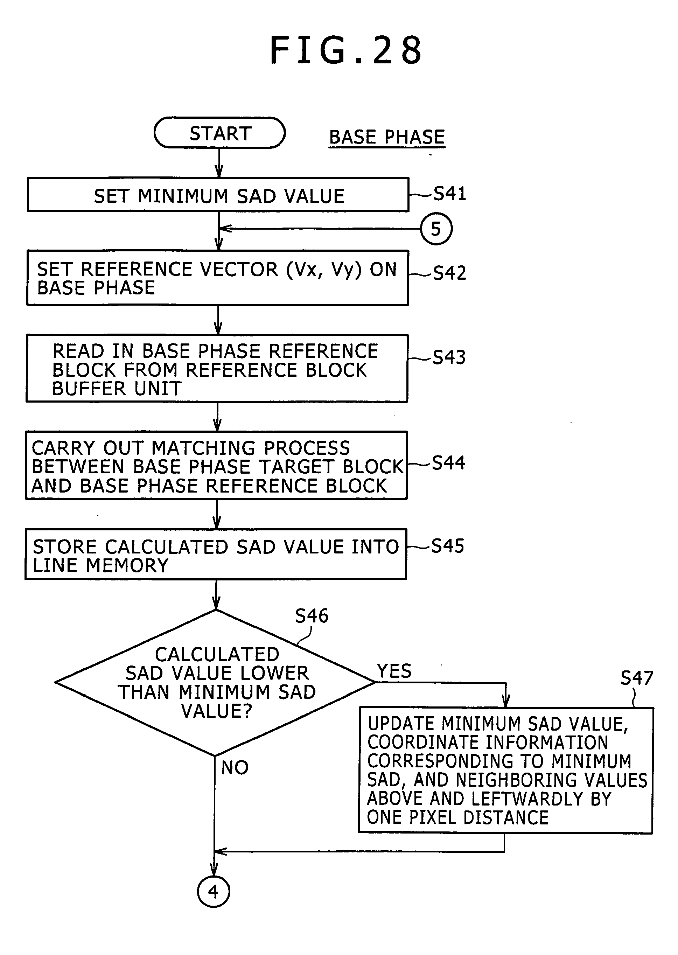

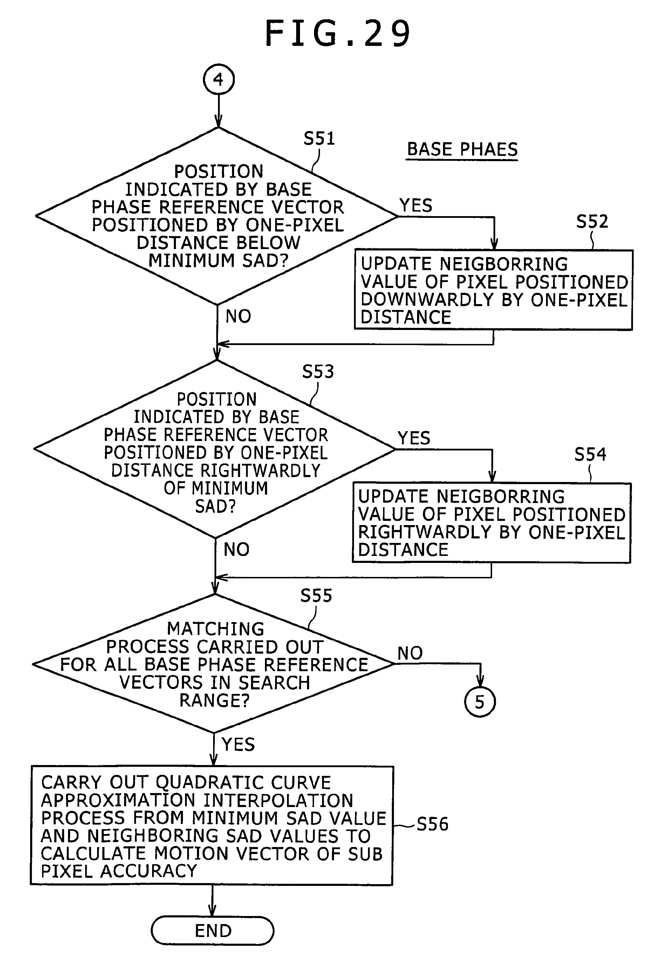

An example of a flow upon block matching processing on the reduced phase in the present first example is illustrated in a flow chart of FIG. 27, and an example of a flow upon block matching processing on the base phase is illustrated in flow charts of FIGS. 28 and 29. Also steps of the flow charts of the second example are carried out by the matching processing unit 163 and the motion vector calculation unit 164.

First, the example of the flow of the block matching process on the reduced phase is described with reference to FIG. 27.

First, an initial value for the minimum SAD value Smin of the SAD value retaining device 1643 of the motion vector calculation unit 164 is set (step S31). The initial value for the minimum SAD value Smin may be, for example, a maximum value of the difference between pixels.

Then, the matching processing unit 163 sets a reference vector (Vx, Vy) of the reduced phase to set the reduced phase reference block position for calculating the SAD value (step S32), and reads in image data of the set reduced phase reference block from the reference block buffer unit 162 (step S33). Further, the matching processing unit 163 reads in pixel data of the reduced phase target block from the target block buffer unit 161 and determines the sum total of absolute values of differences between pixel data of the reduced phase target block and the reduced phase reference block, that is, the SAD value. Then, the matching processing unit 163 signals the determined SAD value to the motion vector calculation unit 164 (step S34).

In the motion vector calculation unit 164, the SAD value writing device 1641 writes the SAD value into the line memory 1647 (step S35).

Then, in the motion vector calculation unit 164, the SAD value comparison device 1642 compares the SAD value Sin calculated by the matching processing unit 163 and the minimum SAD value Smin retained in the SAD value retaining device 1643 with each other to decide whether or not the calculated SAD value Sin is lower than the minimum SAD value Smin retained till then (step S36).

If it is decided at step S36 that the calculated SAD value Sin is lower than the minimum SAD value Smin, then the processing advances to step S37, at which the information of the minimum SAD value Smin retained in the SAD value retaining device 1643 and the position information (reduced phase reference vector) of the minimum SAD value Smin are updated.

On the other hand, if it is decided at step S36 that the calculated SAD value Sin is not lower than the minimum SAD value Smin, then the updating process of the retained information at steps S37 is not carried out, but the processing advances to step S38. At step S38, the matching processing unit 163 decides whether or not the matching process is completed at all of the positions (reduced phase reference vectors) of the reduced phase reference blocks in the search range. If it is decided that an unprocessed reference block still remains in the search range, then the processing returns to step S32 and the processes at the steps beginning with step S32 are repeated.

On the other hand, if it is decided at step S38 that the matching process is completed at all of the positions or reduced phase reference vectors of the reduced phase reference blocks in the search range, then the matching processing unit 163 notifies the motion vector calculation unit 164 of such decision.

The motion vector calculation unit 164 receives the notification from the matching processing unit 163 and outputs the position information or reduced phase reference vector of the minimum SAD value Smin retained in the SAD value retaining device 1643 to the control unit 165 (step S39).

The block matching process on the reduced phase in the present example ends therewith.

Now, an example of the flow of the block matching process on the base phase is described with reference to FIGS. 28 and 29.

First, an initial value for the minimum SAD value Smin of the SAD value retaining device 1643 of the motion vector calculation unit 164 is set (step S41). The initial value for the minimum SAD value Smin may be a maximum value of the difference between pixels.

The matching processing unit 163 sets a reference vector (Vx, Vy) on the base phase to set the base phase reference block position for calculating the SAD value (step S42) and reads in pixel data of the set base phase reference block from the reference block buffer unit 162 (step S43).

Then, the matching processing unit 163 reads in pixel data of the base phase target block from the target block buffer unit 161 and determines the sum total of absolute values of differences between the pixel data between the base phase target block and the base phase reference block, that is, the SAD value. Then, the matching processing unit 163 signals the determined SAD value to the motion vector calculation unit 164 (step S44).

In the motion vector calculation unit 164, the SAD value writing device 1641 writes the SAD value into the line memory 1647 (step S45). Then, in the motion vector calculation unit 164, the SAD value comparison device 1642 compares the SAD value Sin calculated by the matching processing unit 163 and the minimum SAD value Smin retained in the SAD value retaining device 1643 with each other to decide whether or not the calculated SAD value Sin is lower then the minimum SAD value Smin retained till then (step S46).

If it is decided at step S46 that the calculated SAD value Sin is lower than the minimum SAD value Smin; then the processing advances to step S47. At step S47, the information of the minimum SAD value Smin, the SAD values of the reference blocks at positions just above and just leftwardly of the reference block position at which the minimum SAD value Smin is exhibited and the position information or base phase reference vectors of the SAD values, all retained in the SAD value retaining device 1643, are updated.

In particular, the SAD value comparison device 1642 sends the information DET of the result of comparison that the calculated SAD value Sin is lower than the minimum SAD value Smin to the SAD value writing device 1641. Consequently, the SAD value writing device 1641 sends the calculated SAD value Sin and the position information or base phase reference vector of the SAD value Sin as new information of the minimum SAD value Smin to the SAD value retaining device 1643. Further, the SAD value writing device 1641 sends the oldest SAD value and the position information or base phase reference vector of the same as well as the newest SAD value and the position information or base phase reference vector of the same as information of the SAD value Sy1 of the base phase reference block at the position just above the position of the minimum SAD value and the information of the SAD value Sx1 of the base phase reference block at the position just leftwardly of the position of the minimum SAD value as recognized from FIG. 25B to the SAD value retaining device 1643. The SAD value retaining device 1643 uses the received information of the new minimum SAD value Smin, information of the SAD value Sy1 at the position just above the position of the minimum SAD value and information of the SAD value Sx1 of the base phase reference block at the position just leftwardly of the position of the minimum SAD value to update corresponding retained information therein.

Then, the processing advances from step S47 to step S51 of FIG. 29. On the other hand, if it is decided at step S46 that the calculated SAD value Sin is not lower than the minimum SAD value Smin, then the processing advances to step S51 without carrying out the updating process of retained information at step S47.

At step S51, the SAD value writing device 1641 decides whether or not the position indicted by the position information or reference vector of the calculated SAD value Sin is the position of the base phase reference block at the position just below the position of the base phase reference block which exhibits the minimum SAD value Smin. If it is decided that the indicated position is the position just blow the position of the base phase reference block, then the SAD value writing device 1641 sends the calculated SAD value Sin and the position information or reference vector of the SAD value Sin to the SAD value retaining device 1643. The SAD value retaining device 1643 updates the retained information of the neighboring SAD value Sy2 of the base phase reference block at the position just below the position of the base phase reference block with the received SAD information and position information of the SAD information (step S52).

If it is decided at step S51 that the position indicated by the position information or base phase reference vector regarding the calculated SAD value is not the position of the base phase reference block at the position just below the position of the base phase reference block which indicates the minimum SAD value Smin, then the SAD value writing device 1641 decides whether or not the position indicated by the position information or base phase reference vector regarding the calculated SAD value Sin is the position of the base phase reference block immediately rightwardly of the position of the base phase reference block with regard to which the minimum SAD value Smin is retained (step S53).

If it is decided at step S53 that the position indicated by the position information or base phase reference vector regarding the calculated SAD value Sin is the position of the base phase reference block immediately rightwardly of the position of the base phase reference block with regard to which the minimum SAD value Smin is retained, then the SAD value writing device 1641 sends the calculated SAD value Sin and the position information or base phase reference vector of the SAD value Sin to the SAD value retaining device 1643. The SAD value retaining device 1643 receives and uses the SAD value and position information to update the retained information of the neighboring SAD value Sx2 regarding the base phase reference block just rightwardly of the position of the base phase reference block with the received SAD value and position information of the SAD value (Step S54).

On the other hand, if it is decided at step S53 that the position indicated by the position information or base phase reference vector regarding the calculated SAD value Sin is not the position of the base phase reference block immediately rightwardly of the position of the base phase reference block with regard to which the minimum SAD value Smin is retained, then the SAD value writing device 1641 writes the calculated SAD value Sin and position information or base phase reference vector of the SAD value Sin only into the line memory 1647 (step S45 described hereinabove) but does not send the SAD value Sin and the position information to the SAD value retaining device 1643.

Then, the matching processing unit 163 decides whether or not the matching process is completed at all positions or reference vectors of the base phase reference blocks in the search range (step S55). Then, if it is decided that an unprocessed base phase reference block still remains in the search range, then the processing returns to step S42 of FIG. 28 and then the processes at the steps beginning with step S42 described hereinabove are repeated.

On the other hand, if it is decided at step S45 that the matching process is completed at all positions or base phase reference vectors of the base phase reference blocks in the search range, then the matching processing unit 163 notifies the motion vector calculation unit 164 of such decision.

The motion vector calculation unit 164 receives the notification, and the X direction (horizontal direction) neighboring value extraction device 1644 and the Y direction (vertical direction) neighboring value extraction device 1645 read out the detected minimum SAD value Smin, neighboring SAD values Sx1, Sx2, Sy1 and Sy2 of the minimum SAD value Smin and position information of them, all stored in the SAD value retaining device 1643 and send the read out information to the quadratic curve approximation interpolation processing device 1646. The quadratic curve approximation interpolation processing device 1646 receives the information and carries out interpolation with a quadratic curve twice for the X direction and the Y direction to calculate a high-accuracy motion vector of the sub pixel accuracy in such a manner as described hereinabove (step S56). The block matching process of the first example for a base phase reference frame ends therewith.

As described above, in the present first example, by the configuration that a memory for one line of a SAD table is provided without keeping a SAD table which retains all of calculated SAD values and a SAD value for one pixel is retained in the SAD value writing device 1641, motion vector detection of the sub pixel accuracy by an interpolation process can be carried out.

The method of the first example is common in the number of times of block matching to the conventional technique of the past where all SAD values of the SAD table TBL are retained, and therefore exhibits an effect that the hardware scale can be reduced while the processing time is same.

It is to be noted that, while, in the description of the first example above, the SAD value comparison device 1642 compares a calculated SAD value Sin from the matching processing unit 163 and a minimum SAD value Smin retained in the matching processing unit 163 with each other, the SAD value comparison device 1642 may include a retaining portion for a minimum SAD value. In this instance, the retained minimum SAD value and the calculated SAD value Sin are compared with each other, and when the calculated SAD value Sin is lower, the retained minimum SAD value is updated with the calculated SAD value Sin. Further, the calculated SAD value Sin is sent together with position information thereof to the SAD value retaining device 1643 through the SAD value writing device 1641 so that it is retained into the minimum SAD value retaining portion of the SAD value retaining device 1643.

<Second Example of the Motion vector calculation Unit 164>

In the present second example of the motion vector calculation unit 164, the line memory 1647 in the first example is omitted to achieve further reduction of the hardware scale.

In the present second example, detection and retention of a minimum SAD value Smin among the SAD values of reference blocks in a search range and position information or a reference vector of the minimum SAD value Smin are carried out quite similarly to that in the first example described hereinabove. However, acquisition and retention of neighboring SAD values and position information of them are not carried out simultaneously with detection of the minimum SAD value Smin, different from the first example, but the position information of the detected minimum SAD value Smin is returned to the matching processing unit 163. Thus, the matching processing unit 163 calculates the SAD values regarding the reference positions at the four neighboring positions around the minimum SAD value Smin again and then supplies the calculated SAD values to the motion vector calculation unit 164.

The motion vector calculation unit 164 receives the SAD values of the four neighboring points calculated by the second-time block matching process from the matching processing unit 163 and the position information or reference vectors of the SAD values and stores the received information into respective retaining portions of the SAD value retaining device 1643.

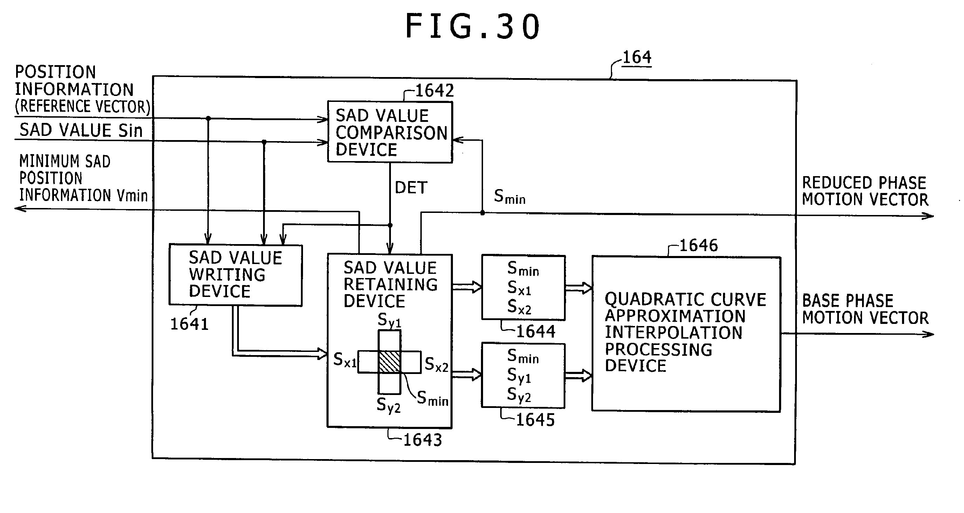

An example of a hardware configuration of the second example of the motion vector calculation unit 164 is shown in FIG. 30. Referring to FIG. 30, the second example of the motion vector calculation unit 164 does not include the line memory 1647 in the first example, but includes a SAD value writing device 1641, a SAD value comparison device 1642, a SAD value retaining device 1643, an X direction (horizontal direction) neighboring value extraction device 1644 and a Y direction (vertical direction) neighboring value extraction device 1645, and a quadratic curve approximation interpolation processing device 1646.

Also in the present second example, the X direction (horizontal direction) neighboring value extraction device 1644 and Y direction (vertical direction) neighboring value extraction device 1645 and the quadratic curve approximation interpolation processing device 1646 carry out operations similar to those of the first example described hereinabove. However, the SAD value writing device 1641, SAD value comparison device 1642 and SAD value retaining device 1643 operate in a different manner from that in the first example described hereinabove.

The SAD value retaining device 1643 includes retaining portions or memories for the minimum SAD value Smin and the neighboring SAD values Sx1, Sx2, Sy1 and Sy2 similarly as in the first example. Also in the second example, the SAD value retaining device 1643 supplies the minimum SAD value Smin from the minimum SAD value retaining portions to the SAD value comparison device 1642. However, in the present second example, the SAD value retaining device 1643 does not supply the position information of the neighboring SAD values to the SAD value writing device 1641, different from the first example.

Also in the present second example, the SAD value comparison device 1642 compares the SAD value Sin from the matching processing unit 163 calculated at the current point of time and the minimum SAD value Smin from the minimum SAD value retaining portion of the SAD value retaining device 1643 with each other. Then, if the calculated SAD value Sin from the matching processing unit 163 calculated at the current point of time is lower, then it is detected that the minimum SAD value Smin from the minimum SAD value retaining portion of the SAD value retaining device 1643 still remains the minimum value at the current point of time. Then, the SAD value comparison device 1642 supplies information DET of the result of detection to the SAD value writing device 1641 and the SAD value retaining device 1643.

Similarly as in the example described above, the SAD value writing device 1641 includes a buffer memory for one pixel for temporarily storing the calculated SAD value Sin and position information of the SAD value Sin from the matching processing unit 163. Further, in the present second example, when the information DET of the result of comparison detection from the SAD value comparison device 1642 indicates that the SAD value Sin is the minimum value, the SAD value writing device 1641 sends the position information or reference vector of the reference block from the matching processing unit 163 and the SAD value Sin of the reference block to the SAD value retaining device 1643.

The SAD value retaining device 1643 recognizes that the SAD value Sin is the minimum value from the information DET of the result of comparison detection from the SAD value comparison device 1642 and stores the position information or reference vector of the reference block and the SAD value Sin of the reference block from the SAD value writing device 1641 into the minimum SAD value retaining portion.

The processes described above are carried out for the SAD values calculated by the matching processing unit 163 from all reference blocks in the search range. Then, in the second example, when the calculation of the SAD value regarding all reference blocks in the search range is completed, the SAD value retaining device 1643 supplies the position information or reference vector Vmin of the minimum SAD value Smin retained therein to the matching processing unit 163 and requests the matching processing unit 163 to re-calculate the SAD value regarding reference blocks at four neighboring points around the position of the minimum SAD value Smin.

When the matching processing unit 163 receives the request for re-calculation of the SAD value regarding the neighboring reference blocks including the position information or reference vector Vmin of the minimum SAD value Smin from the SAD value retaining device 1643, it detects the position of the neighboring reference blocks at the four neighboring points from the position information or reference vector Vmin of the minimum SAD value Smin and then carries out calculation of the SAD value regarding the reference blocks at the detected positions. Then, the matching processing unit 163 successively supplies the calculated SAD values together with the position information or reference vectors of the SAD values to the SAD value writing device 1641.

In this instance, since the matching processing unit 163 carries out the block matching process in order in the search direction, the neighboring SAD values are successively calculated in the order of the SAD values Sy1, Sx1, Sx2 and Sy2. The SAD value writing device 1641 successively supplies the received re-calculated SAD values and the position information or reference vectors of the SAD values to the SAD value retaining device 1643.

The SAD value retaining device 1643 successively writes the re-calculated SAD values and position information or reference vectors of the SAD values into the corresponding storage portions.

When the re-calculation of the SAD value regarding the neighboring reference blocks is completed in this manner, the X direction (horizontal direction) neighboring value extraction device 1644 and the Y direction (vertical direction) neighboring value extraction device 1645 read out the detected minimum SAD value Smin, neighboring SAD values Sx1, Sx2, Sy1 and Sy2 and position information of them, all retained in the SAD value retaining device 1643, and sends the read out information to the quadratic curve approximation interpolation processing device 1646. The quadratic curve approximation interpolation processing device 1646 receives the information and carries out interpolation with a quadratic curve twice for the X direction and the Y direction to calculate a high-accuracy motion vector of the sub pixel accuracy in such a manner as described hereinabove.

In this manner, in the present second example, a motion vector of the sub pixel accuracy can be detected without using the SAD table TBL or a line memory.

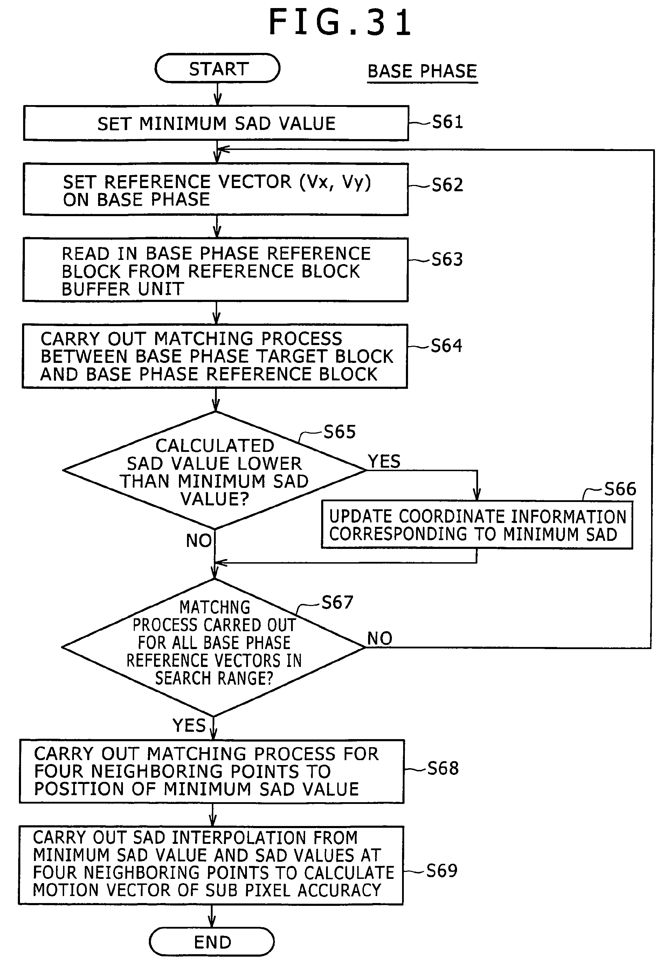

An example of a flow of a block matching process on the reduced phase in the present second example is similar to that in the first example described hereinabove with reference to FIG. 27 except that writing into the line memory 1647 is not carried out. Therefore, overlapping description of the flow is omitted herein to avoid redundancy. Thus, an example of a flow of a block matching process on the base phase in the present second example is described with reference to a flow chart of FIG. 31.

First, an initial value for the minimum SAD value Smin of the SAD value retaining device 1643 of the motion vector calculation unit 164 is set (step S61). The initial value for the minimum SAD value Smin may be, for example, a maximum value of the difference between pixels.

Then, the matching processing unit 163 sets a reference vector (Vx, Vy) on the base phase to set a base phase reference block position for calculating the SAD value (step S62). Then, the matching processing unit 163 reads in pixel data of the set base phase reference block from the reference block buffer unit 162 (step S63) and reads out pixel data of the base phase target block from the target block buffer unit 161. Then, the matching processing unit 163 determines the sum total of absolute values of differences between pixel data of the base phase target block and the base phase reference block, that is, the SAD value. Then, the matching processing unit 163 signals the determined SAD value to the motion vector calculation unit 164 (step S64).

In the motion vector calculation unit 164, the SAD value comparison device 1642 compares the SAD value Sin calculated by the matching processing unit 163 and the minimum SAD value Smin retained in the SAD value retaining device 1643 with each other to decide whether or not the calculated SAD value Sin is lower than the minimum SAD value Smin retained till them (step S65).

If it is decided at step S65 that the calculated SAD value Sin is lower than the minimum SAD value Smin, then the processing advances to step S66, at which the minimum SAD value Smin and the position information of the minimum SAD value Smin retained in the SAD value retaining device 1643 are updated.

In particular, the SAD value comparison device 1642 sends information DET of the result of detection that the calculated minimum SAD value Smin is lower than the minimum SAD value Smin to the SAD value writing device 1641. Consequently, the SAD value writing device 1641 sends the calculated SAD value Sin and the position information or base phase reference vector of the SAD value Sin as information of the new minimum SAD value Smin to the SAD value retaining device 1643. The SAD value retaining device 1643 updates the minimum SAD value Smin and the position information of the minimum SAD value Smin retained therein with the received new SAD value Sin and position information, respectively.

Thereafter, the processing advances from step S66 to step S67. On the other hand, if it is decided at step S65 that the calculated SAD value Sin is not lower than the minimum SAD value Smin, then the processing advances to step S67 without carrying out the retaining information updating process at step S66.

At step S67, the matching processing unit 163 decides whether or not the matching process is completed at all of the positions or base phase reference vectors of the base phase reference blocks in the search range. If it is decided that an unprocessed base phase reference block still remains in the search range, then the processing returns to step S62 and the processes at the steps beginning with step S62 are repeated.

On the other hand, if it is decided at step S67 that the matching process is completed at all of the positions or base phase reference vectors of the base phase reference blocks in the search range, then the matching processing unit 163 receives the position information of the minimum SAD value Smin from the SAD value retaining device 1643 and carries out re-calculation of the SAD value regarding the base phase reference blocks at the positions of the four neighboring points. Then, the matching processing unit 163 supplies the re-calculated neighboring SAD values to the SAD value retaining device 1643 through the SAD value writing device 1641 so as to be retained into the SAD value retaining device 1643 (step S68).

Then, in the motion vector calculation unit 164, the X direction (horizontal direction) neighboring value extraction device 1644 and the Y direction (vertical direction) neighboring value extraction device 1645 read out the detected minimum SAD value Smin, neighboring SAD values Sx1, Sx2, Sy1 and Sy2 and position information of them, all retained in the SAD value retaining device 1643, and sends the read out information to the quadratic curve approximation interpolation processing device 1646. The quadratic curve approximation interpolation processing device 1646 receives the information and carries out interpolation with a quadratic curve twice for the X direction and the Y direction to calculate a high-accuracy motion vector of the sub pixel accuracy in such a manner as described above (step S69). The block matching process on the base phase of the third example regarding one reference frame is completed therewith.

Where the present second example is compared with the first example described above, although the processing time increases by an amount for re-calculation of the SAD value, since the line memory is not required, the circuit scale can be reduced further from that of the first example. Besides, since the re-calculation of the SAD value is carried out only for the neighboring SAD values, it is carried out, in the example described above, four times to the utmost, and therefore, the processing time does not increase very much.

It is to be noted that, while, in the description of the second example above, the minimum SAD value is detected and retained into the SAD value retaining device 1643, the SAD value comparison device 1642 may detect and retain position information or a reference vector of a reference block which exhibits the minimum SAD value. In this instance, when the first time block matching comes to an end, the SAD value comparison device 1642 may supply the position information of the minimum SAD value to the matching processing unit 163.

In this instance, in the re-calculation of the SAD value by the matching processing unit 163, also the minimum SAD value is re-calculated in addition to the SAD values at the four neighboring points. In this instance, although the number of times of re-calculation of the SAD value becomes 5 and exhibits increase by one, in the first time block matching, only the SAD value comparison device 1642 may operate, and the SAD value writing device 1641 and the SAD value retaining device 1643 may operate so as to retain the re-calculated SAD values. Therefore, there is a merit that the processing operation is simplified.

Further, the processing by the motion detection and motion compensation section 16 can be executed parallelly and concurrently with regard to a plurality of target blocks set in a target frame. In this instance, it is necessary to provide a number of hardware systems for the motion detection and motion compensation section 16 equal to the number of target blocks to be processed parallelly and concurrently.

In the case of a method wherein a SAD table TBL is produced as in the case of the example of the related art, it is necessary to produce a number of SAD tables equal to the number of target blocks, and a memory of a very great capacity is required. However, in the first example, per one target block, the capacity for only one line of a SAD table is required, and therefore, the memory capacity can be reduced significantly. Further, in the second example, since no line memory is required, the memory capacity can be reduced significantly.

[Examples of a Flow of a Hierarchical Block Matching Process]

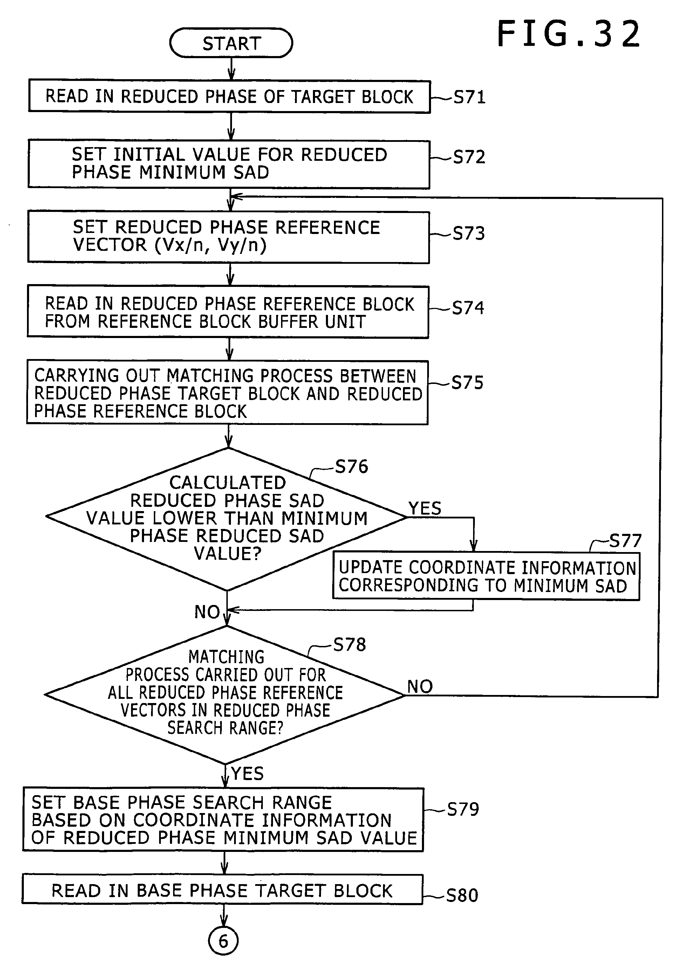

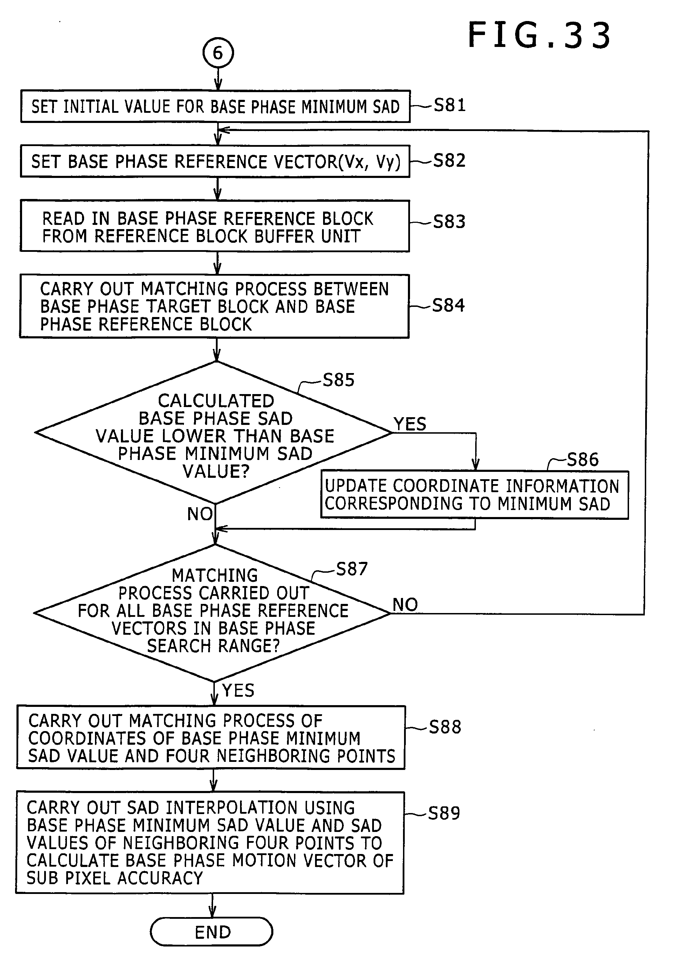

An example of operation of the hierarchical block matching process by the motion detection and motion compensation section 16 in the present embodiment is illustrated in flow charts of FIGS. 32 and 33.

It is to be noted that, while the flow of the process illustrated in FIGS. 32 and 33 partly overlaps with the flow of the example of the process of the matching processing unit 163 and the motion vector calculation unit 164 described hereinabove, it is described in order to facilitate understandings of the operation of the present embodiment.

First, the motion detection and motion compensation section 16 reads in a reduction image of a target block that is, a reduced phase target block, from the target block buffer unit 161 (step S71 of FIG. 32). Then, the motion detection and motion compensation section 16 sets an initial value for the reduced phase minimum SAD value as an initial value for the minimum SAD value Smin of the SAD value retaining device 1643 of the motion vector calculation unit 164 (step S72). The initial value for the minimum SAD value Smin may be, for example, a maximum value of the difference between pixels.

Then, the matching processing unit 163 sets a reduced phase search range and sets a reduced phase reference vector (Vx/n, Vy/n: 1/n is a reduction ratio) within the set reduction search range, then set the reduced phase reference block position for calculating the SAD value (step S73). Then, pixel data of the set reduced phase reference block is read in from the reference block buffer unit 162 (step S74). Then, the matching processing unit 163 determines the sum total of absolute values of differences between pixel data of the reduced phase target block and the reduced phase reference block, that is, the reduced phase SAD value, and signals the determined reduced phase SAD value to the motion vector calculation unit 164 (step S75).

In the motion vector calculation unit 164, the SAD value comparison device 1642 compares the SAD value Sin calculated by the matching processing unit 163 and the reduced phase minimum SAD value Smin retained in the SAD value retaining device 1643 with each other to decide whether or not the calculated SAD value Sin is lower than the reduced phase minimum SAD value Smin retained till then (step S76).

If it is decided at step S76 that the calculated SAD value Sin is lower than the reduced phase minimum SAD value Smin, then the processing advances to step S77, at which the reduced phase minimum SAD value Smin and the position information of the reduced phase minimum SAD value Smin retained in the SAD value retaining device 1643 are updated.

In particular, the SAD value comparison device 1642 sends information DET of the result of comparison that the calculated SAD value Sin is lower than the reduced phase minimum SAD value Smin to the SAD value writing device 1641. Consequently, the SAD value writing device 1641 sends the calculated SAD value Sin and the position information or reduced phase reference vector of the SAD value Sin as new reduced phase minimum SAD value Smin to the SAD value retaining device 1643. The SAD value retaining device 1643 uses the received new SAD value Sin and position information to update the reduced phase minimum SAD value Smin and the position information retained therein.

Then, the processing advances from step S77 to step S78. Meanwhile, if it is decided at step S76 that the calculated SAD value Sin is not lower than the reduced phase minimum SAD value Smin, the processing advances to step S78 without carrying out the updating process of the retained information at step S77.

At step S78, the matching processing unit 163 decides whether or not the matching process is completed at all of the positions or reduced phase reference vectors of the reduced phase reference blocks in the reduced phase search range. If it is decided that an unprocessed reduced phase reference block still remains in the reduced phase search range, then the processing returns to step S73 such that the processes at the steps beginning with step S73 are repeated.

On the other hand, if it is decided at step S78 that the matching process is completed at all of the positions or reduced phase reference vectors of the reduced phase reference blocks in the reduced phase search range, then the matching processing unit 163 receives the position information or reduced phase moving vector of the reduced phase minimum SAD value Smin from the SAD value retaining device 1643. Then, the matching processing unit 163 sets a reference image target block at a position centered at position coordinates indicated by a vector obtained by multiplying the received reduced phase moving vector by a reciprocal to the reduction ratio, that is, by n, on the base phase target frame. Further, the matching processing unit 163 sets the base phase search range as the comparatively small range centered at the position coordinates indicated by the vector multiplied by n to the base phase target frame (step S79). Then, the matching processing unit 163 reads in pixel data of the base phase target block from the target block buffer unit 161 (step S80).

Then, the matching processing unit 163 sets the initial value for the base phase minimum SAD value as the initial value for the reduced phase minimum SAD value Smin of the SAD value retaining device 1643 of the motion vector calculation unit 164 (step S81 of FIG. 33). The initial value for the reduced phase minimum SAD value Smin may be, for example, a maximum value of the difference between pixels.

Then, the matching processing unit 163 sets a reference vector (Vx, Vy) within the base phase reduced search range set at step S79 to set the base phase reference block position for calculating the SAD value (step S82). Then, the matching processing unit 163 reads in pixel data of the set base phase reference block from the reference block buffer unit 162 (step S83) and determines the sum total of absolute values of differences between pixel data of the base phase target block and the base phase reference block, that is, the base phase SAD value. Then, the matching processing unit 163 signals the determined reference image SAD value to the motion vector calculation unit 164 (step S84).

In the motion vector calculation unit 164, the SAD value comparison device 1642 compares the SAD value Sin calculated by the matching processing unit 163 and the reduced phase minimum SAD value Smin retained in the SAD value retaining device 1643 with each other to decide whether or not the calculated SAD value Sin is lower than the reduced phase minimum SAD value Smin which has been retained till then (step S85).

If it is decided at step S85 that the calculates SAD value Sin is lower than the reduced phase minimum SAD value Smin, then the processing advances to step S86, at which the reduced phase minimum SAD value Smin and the position information of the reduced phase minimum SAD value Smin retained in the SAD value retaining device 1643 are updated.

In particular, the SAD value comparison device 1642 sends information DET of the result of comparison that the calculated SAD value Sin is lower than the reduced phase minimum SAD value Smin to the SAD value writing device 1641. Consequently, the SAD value writing device 1641 sends the calculated SAD value Sin and the position information or reference vector of the SAD value Sin as new information of the reduced phase minimum SAD value Smin to the SAD value retaining device 1643. The SAD value retaining device 1643 updates the reduced phase minimum SAD value Smin and the position information of the reduced phase minimum SAD value Smin retained therein with the received new SAD value Sin and position information.

Then, the processing advances from step S86 to step S87. On the other hand, if it is decided at step S85 that the calculated SAD value Sin is not lower than the reduced phase minimum SAD value Smin, then the processing advances to step S87 without carrying out the updating process of the retained information at step S86.

At step S87, the matching processing unit 163 decides whether or not the matching process is completed at all of the positions of the base phase reference blocks or base phase reference vectors in the base phase search range. If it is decided that an unprocessed base phase reference block still remains in the base phase search range, then the processing returns to step S82 such that the processes at the steps beginning with step S82 are repeated.

On the other hand, if it is decided at step S87 that the matching process is completed at all of the positions of the reduced phase reference blocks or base phase reference vectors in the search range, then the matching processing unit 163 receives the position information or base phase vector of the reduced phase minimum SAD value Smin from the SAD value retaining device 1643. Then, the matching processing unit 163 carries out re-calculation of the base phase SAD value regarding the base phase reference blocks at the positions of the neighboring four points and supplies the re-calculated neighboring base phase SAD values to the SAD value retaining device 1643 through the SAD value writing device 1641 so as to be retained into the SAD value retaining device 1643 (step S88).

Then, in the motion vector calculation unit 164, the X direction (horizontal direction) neighboring value extraction device 1644 and the Y direction (vertical direction) neighboring value extraction device 1645 read out the detected reduced phase minimum SAD value Smin, neighboring SAD values Sx1, Sx2, Sy1 and Sy2 and position information of them, all retained in the SAD value retaining device 1643, and send them to the quadratic curve approximation interpolation processing device 1646. The quadratic curve approximation interpolation processing device 1646 receives the information and carries out interpolation with a quadratic curve twice for the X direction and the Y direction to calculate a high-accuracy base phase motion vector of the sub pixel accuracy in such a manner as described hereinabove (step S89). The block matching process of the present example regarding one reference frame ends therewith.

Now, effects of the image processing method which uses the hierarchical block matching technique by the present embodiment are described in connection with particular examples.

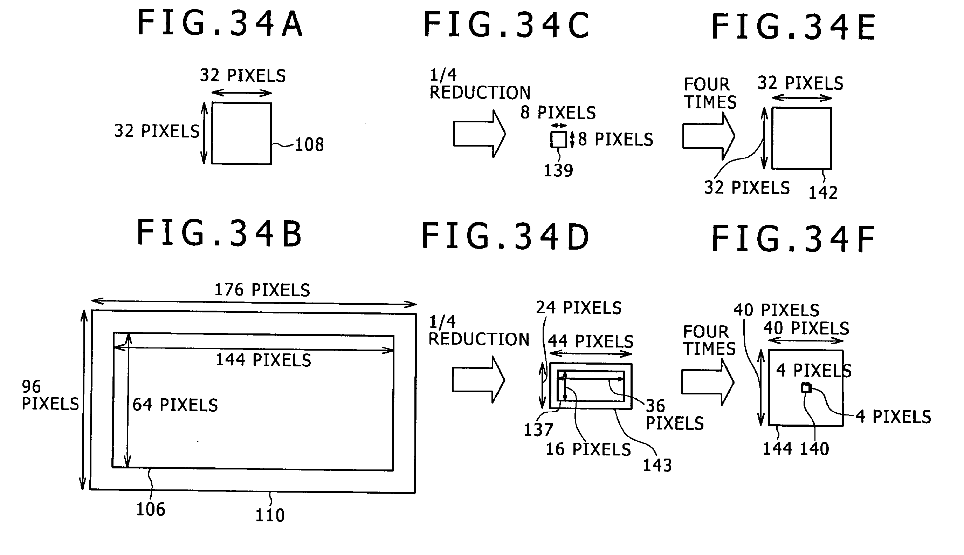

FIGS. 34A to 34F illustrate a particular example of a reference block, a search range and a matching processing range on a base image and a reduced image used in the foregoing description of the embodiment. In the example of FIGS. 34A to 34F, the reduction ratio 1/n in the horizontal direction and the vertical direction is set to n = 4.

As a comparative example, for example, as shown in FIGS. 34A and 34B, a reference block 108 which does not use a reduced image has width (horizontal) $\times$ height (vertical) = 32 $\times$ 32 pixels, and a search range 106 has width (horizontal) $\times$ height (vertical) = 144 $\times$ 64 pixels while a matching processing range 110 has width (horizontal) $\times$ height (vertical) = 176 $\times$ 96 pixels.

Consequently, in a reduced phase wherein an image is reduced to 1/n = 1/4 in both of the horizontal direction and the vertical direction, as shown in FIGS. 34C and 34D, a reduced phase reference block 139 has width (horizontal) $\times$ height (vertical) = 8 $\times$ 8 pixels, and a reduced phase search range 137 has width (horizontal) $\times$ height (vertical) = 36 $\times$ 16 pixels while a reduced phase matching processing range 143 has width (horizontal) $\times$ height (vertical) = 44 $\times$ 24 pixels.

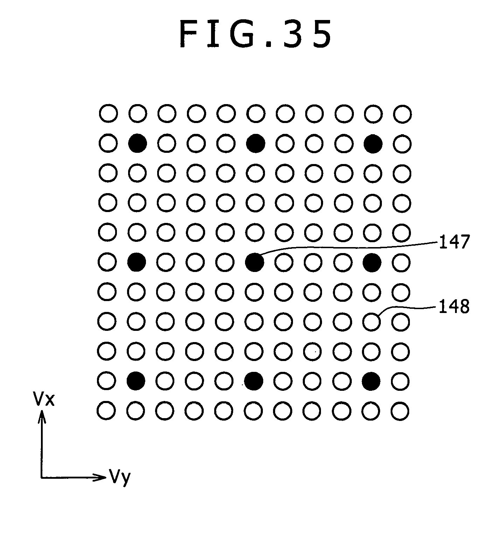

Where block matching is carried out on the reduced phase in which an image is reduced to 1/4 in the horizontal direction and the vertical direction, the reduced phase motion vector is a motion vector of 4-pixel accuracy, and if only the reduced phase motion vector is quadrupled simply, then an error occurs with the motion vector of the one-pixel accuracy. In particular, where the pixels on the base phase are such as shown in FIG. 35, a matching processing point 148 on the base phase may be any of all pixels on the base phase. However, a matching processing point where block matching is carried out on a reduced phase reduced to 1/4 may be a matching processing point 147 in a unit of four pixels indicated by a black circle in FIG. 35.

However, at least it can be estimated that a motion vector of the one-pixel accuracy will exist within a range of 4 pixels around the matching processing point on the reduced phase indicated by the reduced phase motion vector.

Therefore, in the present embodiment, in base phase matching wherein a base phase search range is determined based on a calculated reduced phase motion vector, a base phase target block is set such that it is centered at a pixel position indicated by a reference vector obtained by multiplying the reduced phase motion vector by four which is a reciprocal to the reduction ratio, and a search range for four pixels, that is, a base phase search range 140, is determined to carry out base phase block matching to calculate a motion vector again.

Accordingly, as seen in FIGS. 34E and 34F, a base phase reference block 142 has width (horizontal) $\times$ height (vertical) = 32 $\times$ 32 pixels, and the base phase search range 140 has width (horizontal) $\times$ height (vertical) = 4 $\times$ 4 pixels while a base phase matching processing range 144 has width (horizontal) $\times$ height (vertical) = 40 $\times$ 40 pixels.

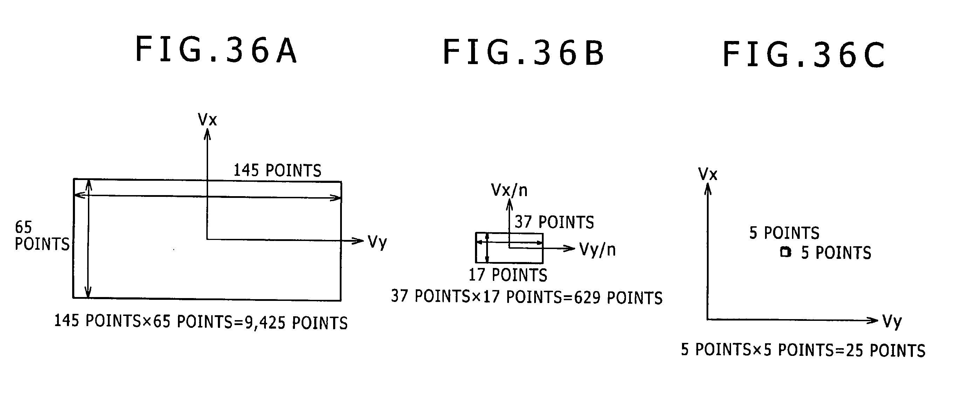

FIGS. 36A to 36C illustrate the size of a SAD table on a base phase and a reduced phase where it is assumed that the SAD table is used when two-hierarchical matching of reduced phase matching and base face matching is carried out. It is to be noted that the example of FIGS. 36A to 36C correspond to the particular example illustrated in FIGS. 34A to 34F.

The SAD table TBL in the case of the search range of 144 x 64 pixels before reduction as seen in FIG. 34B includes 145 $\times$ 65 points as seen in FIG. 36A.

In contrast, the reduced phase SAD table in the case of the reduced phase search range of 36 $\times$ 16 pixels as seen in FIG. 34D includes 37 $\times$ 17 points as seen in FIG. 36B.

Further, the base phase SAD table in the case of the base phase search range of 4 $\times$ 4 pixels as seen in FIG. 34F includes 5 $\times$ 5 points.

Accordingly, the number of times of a matching process where no hierarchical matching is applied is 145 $\times$

65 = 9,425, but the number of times of matching where hierarchical matching is applied is 37 × 17 + 5 × 5 = 654. Consequently, it can be recognized that the processing time can be reduced significantly.

Then, since the line memory in the case of the first example of the motion vector detection method described above may have a storage capacity for one line of the reduced phase SAD table, a memory having a memory capacity sufficient to store 37 SAD values and position information of them can be used for the line memory. Therefore, the storage capacity of the memory is very small in comparison with that of a memory used for the SAD table TBL which stores 9,425 SAD values and position information of them.

On the other hand, in the case of the second example of the configuration example of the motion vector calculation unit 164 described hereinabove, since also the reduced phase SAD table for storing 37 SAD values and position information of them becomes unnecessary, the circuit scale can be further reduced.

In this manner, according to the embodiment described above, by carrying out an interpolation process on the base phase after a hierarchical matching process is carried out, motion vector detection of the sub pixel accuracy can be carried out within a wide search range.

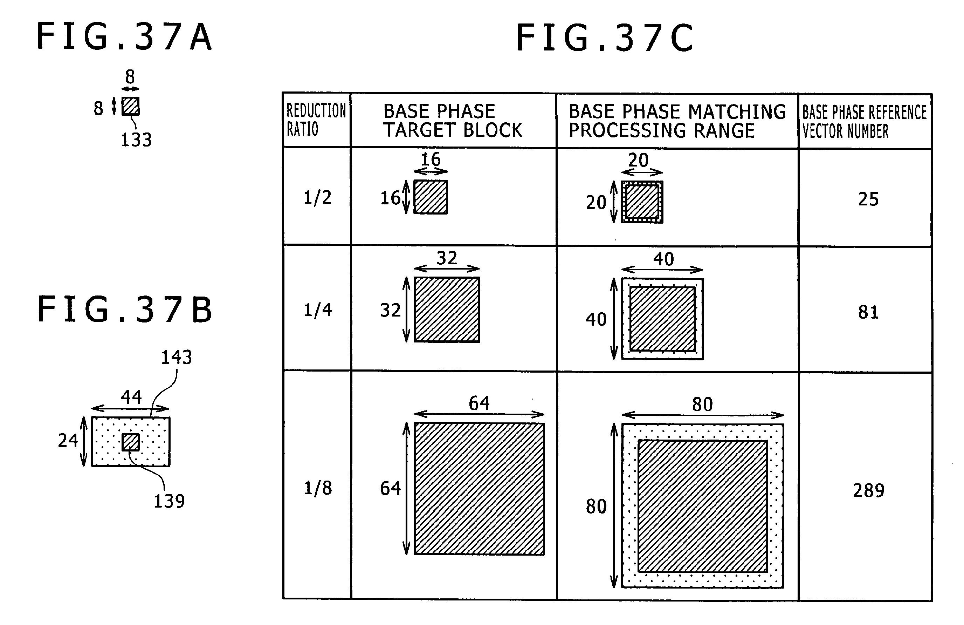

It is to be noted that FIGS. 37A to 37C illustrate an example of the target block size and the matching processing range on the reduced phase and the base phase in the hierarchical block matching method according to the present embodiment. In the example illustrated in FIGS. 37A to 37C, the size of a reduced phase target block 133 is set to a fixed value of width × height = 8 × 8 pixels as seen in FIG. 37A. Therefore, the reduced phase matching processing range 143 has a size of width × height = 44 × 24 pixels as seen from FIG. 37B.

Then, the size of a base phase target block 131 and the size and the base phase reference vector number of the base phase matching processing range 144 are such as illustrated in FIG. 37C. FIG. 37C illustrates the size of the base phase target block 131 and the size and the base phase reference vector number of the base phase matching processing range 144 in examples wherein the reduction ratio of the reduced phase to the base phase is 1/2, 1/4 and 1/8.

[Memory Capacity Reduction and Efficient Memory Accessing upon Still Picture NR Processing]

As described hereinabove, the present embodiment is ready for a still picture NR process and a moving picture NR process. The moving picture NR process requires the real-time property, that is, the speed, rather than the accuracy whereas the still picture NR process requires a clean image free from noise even if somewhat processing time is required.

As described hereinabove, where image superposition methods are roughly classified from the point of view of the system architect, two methods are available including the in-pickup addition method which is a technique of carrying out superposition of images on the real time basis during high speed successive image pickup upon still picture image pickup and the after-pickup addition method which is a technique of carrying out superposition of images after all reference images are prepared after high speed successive image pickup. In order to carry out a NR process in sufficient processing time, not the in-pickup addition method but the after-pickup addition method is desirable, and in the present embodiment, the after-pickup addition method is adopted.

However, according to the after-pickup addition method, reference images must be retained in an image memory, and there is a problem that, as the number of images to be superposed increases, an increased capacity is required for the image memory.

Taking the problem just described into consideration, the present embodiment takes a countermeasure which reduces, when the after-pickup addition method is used upon still picture NR processing, the capacity of the image memory section 4 as much as possible and besides can carry out memory accessing efficiently. This is described below.

<Data Format upon Memory Accessing>

First a data format upon memory accessing to the image memory section 4 in the present embodiment is described.

As seen in FIGS. 13 and 16, the motion detection and motion compensation section 16 and the image superposition section 17 are connected to the system bus 2 by the bus interface sections 21, 22, 23 and 24, respectively.

The system bus 2 in the present embodiment has a bus width of, for example, 64 bits and has a burst length (which is the number of times by which burst transfer can be carried out successively in a unit of a predetermined plurality of pixel data) which is, for example, 16 bursts in the maximum.

In response to a reading-in request from the target block buffer unit 161 and the reference block buffer unit 162 of the motion detection and motion compensation section 16, the bus interface sections 21 and 22 produce a bus protocol including a start address and a burst length for a predetermined memory of the image memory section 4 and accesses the system bus 2 (AXI interconnect).

Image data for one pixel used in the image pickup apparatus of the present embodiment includes a luminance Y and chroma C (Cr, Cb). Further, the image data has the format of Y:Cr:Cb = 4:2:2, and the luminance Y and the chroma C (Cr, Cb) are represented by 8 bits (Cr = 4 bits and Cb = 4 bits) without a sign. Further, four YC pixels are juxtaposed in a memory access width of 4 bits. The data processing unit of the system bus 2 includes 64 bits and the YC pixel data for one pixel includes 16 bits, and therefore, the data processing unit of the system bus 2 is for 4 pixels.

Where the processing sections of the image pickup apparatus are connected to such a system bus 2 as shown in FIG. 2, the bus band and the processing unit of the memory control of the image memory section shared by the processing sections have a close relationship to each other.

Incidentally, in the present embodiment, the maximum burst length which can be processed by the memory controller (not shown) is 16 bursts as described above. For example, even in writing into the memory of the image memory section 4, where transfer of 16 bursts can be used more, the number of times of arbitration of the bus decreases and the efficiency in processing of the memory controller is higher, and consequently, the bus band can be reduced.

Accordingly, in the present embodiment, the efficiency is high where YC pixel data for four pixels (64 bits) are bus accessed by 16 bursts. If this is converted into the number of pixels, then this corresponds to data for 4 x 16 = 64 pixels.

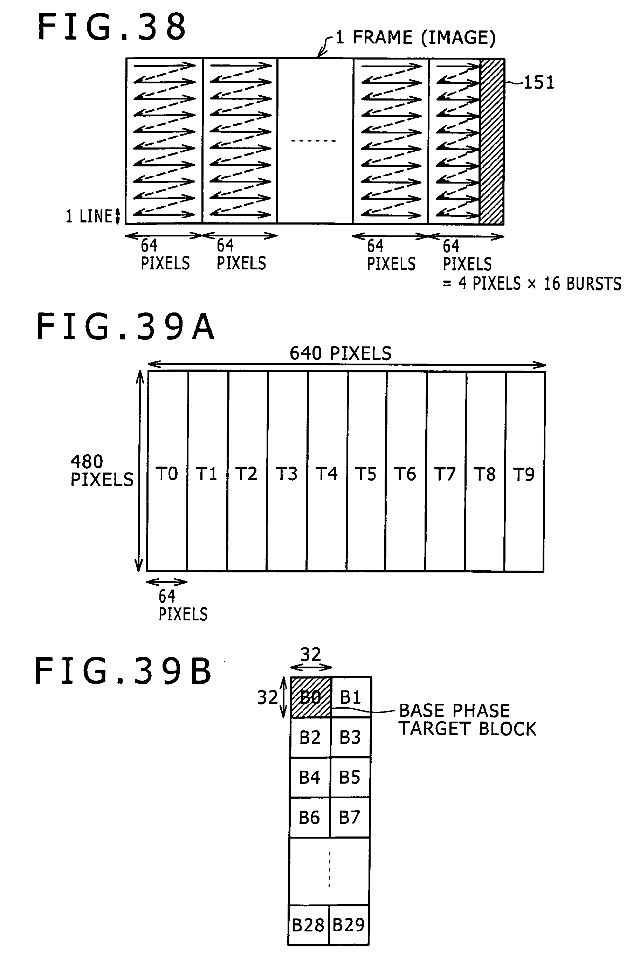

Therefore, in the present embodiment, an image for one screen is divided in a one-burst transfer unit of 64 pixels in the horizontal direction so that the image for one screen is composed of a plurality of image units (hereinafter referred to as image rectangles) of the divisional blocks as seen in FIG. 38. Thus, the present embodiment adopts a memory accessing method (hereinafter referred to as image rectangle accessing method) wherein the image data are written and read out in a unit of an image rectangle into and from the image memory section 4.

It is to be noted that, where the number of image data in the horizontal direction cannot be divided by 64 pixels, a dummy region is provided on the right side of the image in the horizontal direction as indicated by slanting lines in FIG. 38. Then, pixel data of, for example, black or white are added as dummy data in the dummy region 151 so that the pixel number in the horizontal direction may be a multiple of 64.

A related art of the raster scanning method is suitable to read data line by line since addresses of an image memory successively appear in the horizontal direction upon accessing to the image memory. In contrast, the image rectangle accessing method is suitable to read data of blocks each including 64 pixels or less in the horizontal direction because the address increments in the vertical direction in a one-burst transfer unit of 64 pixels.

For example, when a block of an image rectangle type including 64 pixels × 64 lines is to be read in, if the memory controller (not shown) of the image memory section 4 bus accesses YC image data for four pixels (64 bits) in 16 bursts, then data for 4 × 16 = pixels are read by the 16 bursts. Therefore, after the address for the first line including 64 pixels in the horizontal direction is set, address setting for pixel data for the remaining 63 lines can be carried out only by successively incrementing the address in the vertical direction.

The image memory section 4 in the present embodiment includes the memory controller (not shown) which in turn includes an address generation unit (not shown) for executing such an image rectangle accessing method as described above.

In the present embodiment, also the image correction and resolution conversion section 15 provided at the preceding stage to the motion detection and motion compensation section 16 is ready for accessing of the image rectangle accessing method described above so that the motion detection and motion compensation section 16 can access the image memory section 4 in accordance with the image rectangle accessing method. Further, in the present embodiment, also the still picture codec section 18 is ready for the image rectangle accessing method so that, in a still picture NR process upon still picture image pickup, a plurality of picked up images obtained by high speed successive image pickup and stored in a compressed form in the image memory section 4 can be read out and decompression decoded as occasion demands to allow the motion detection and motion compensation section 16 to carry out a block matching process.

FIG. 39A illustrates an example of division into image rectangle units in an example wherein an image for one screen includes width × height = 640 × 480 pixels. In this instance, the image for one screen is divided into 10 image rectangles T0 to T9 because it is divided in a unit of 64 pixels in the horizontal direction.

In the case of the reduction ratio of 1/4 described hereinabove with reference to FIG. 37, one image rectangle includes totaling 30 base phase target blocks B0 to B29 of 32 × 32 pixels arranged such that it includes two base target blocks in the horizontal direction and 15 base target blocks in the vertical direction as seen in FIG. 39B.

When a base phase target block is to be read in from the image memory section 4, in order to make the most of the advantage of the image rectangle accessing method, it is accessed by each 64 pixels × one line to raise the bus efficiency.

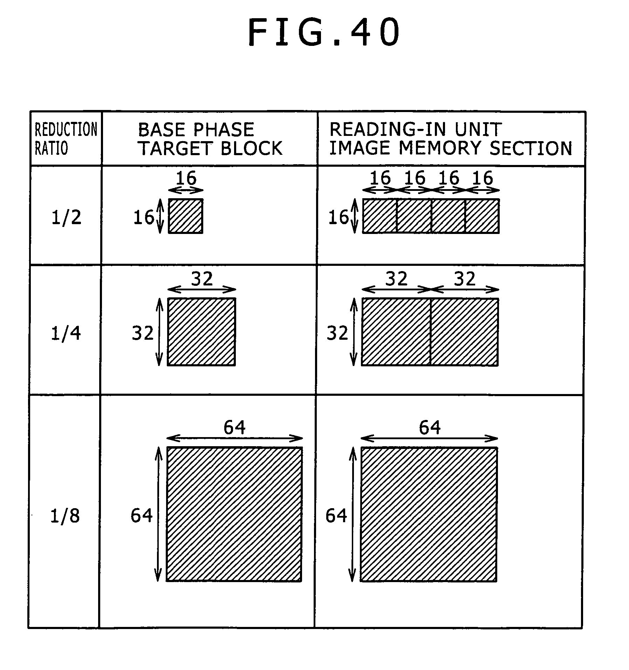

Accordingly, as seen in FIG. 40, when the reduction ratio is 1/2, 1/4 and 1/8, base phase target blocks are accessed by each four, by each two and by each one, respectively.

The image rectangle accessing method is very useful not only in the phase of the bus band but also in an internal process of the circuit. First, the size of the internal line memory used to carry out a filter process in the vertical direction and so forth can be reduced. Further, to a circuit which carries out processing in a block such as a resolution conversion process, there is an advantage that the efficiency is higher where the form is converted from the image rectangle form into an arbitrary block form than where the form is converted from the raster scan form into an arbitrary block form. <Compression and Decompression Processes of Picked Up Images in the Still Picture NR Process Upon Still Picture Image Pickup>

As described hereinabove, in the present embodiment, the after-pickup addition process is adopted for an addition process in the still picture NR process upon still picture image pickup. Therefore, in the still picture NR process upon still picture image pickup, it is necessary to retain all reference images in the image memory section 4. In other words, in the present embodiment, if the shutter button is depressed, then a plurality of picked up images greater than two are captured by high speed successive image pickup and stored into the image memory section 4.

While, in the in-pickup addition method, it is necessary to retain reference images for two frames in the maximum in the image memory section 4, in the after-pickup addition method, it is necessary to retain a greater number of reference images in the image memory section 4. Therefore, in the present embodiment, in order to reduce the storage capacity of the image memory section 4, picked up images captured by high speed successive image pickup are compression coded by the still picture codec section 18 and stored the compression coded image data into the image memory section 4. Then, when the thus captured images are to be used as reference images, the image data in the compression coded form are decompressed and decoded and then used.

An outline of a flow of the still picture NR process upon still picture image pickup is described hereinabove with reference to FIGS. 21 and 22, and a compression coding process or a decompression decoding process for image data is carried out at some steps in the flow charts described hereinabove with reference to FIGS. 21 and 22.

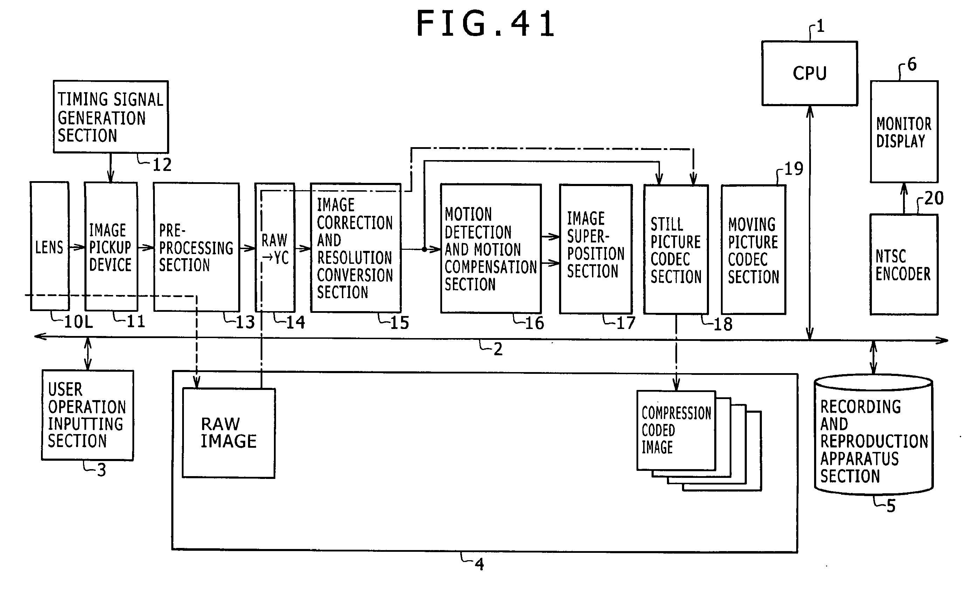

At step S1 of FIG. 21, a plurality of picked up images captured by high-speed successive image pickup in response to a shutter button operation are written into the image memory section 4 as described above. Thereupon, the captured image data of the picked up images are compression coded by the still picture codec section 18. A flow of the image data in this instance is indicated by an alternate long and short dash line in FIG. 41.

Referring to FIG. 41, picked up images from the image pickup device 11 are subjected to such preprocessing as sensor correction by the preprocessing section 13 and then stored in the form of a RAW signal, which is a data format before a camera signal process therefor is carried out, into the image memory section 4.

Thereafter, the picked up images are read out in the image rectangle form from the image memory section 4 and converted from the RAW signal into YC pixel data by the data conversion section 14, whereafter they are subjected to image correction, resolution conversion and so forth by the image correction and resolution conversion section 15. Thereafter, the picked up images are written into the image memory section 4 by the still picture codec section 18 without the intervention of the image memory section 4 while they remain in the form compression coded by the JPEG system. Accordingly, the unit here in which the images are to be compressed is not an image but an image rectangle. Upon high speed image pickup, the procedure described above is carried out repetitively for a plurality of picked up images, and compression data for the number of picked up image data are stored into and retained in the image memory section 4.

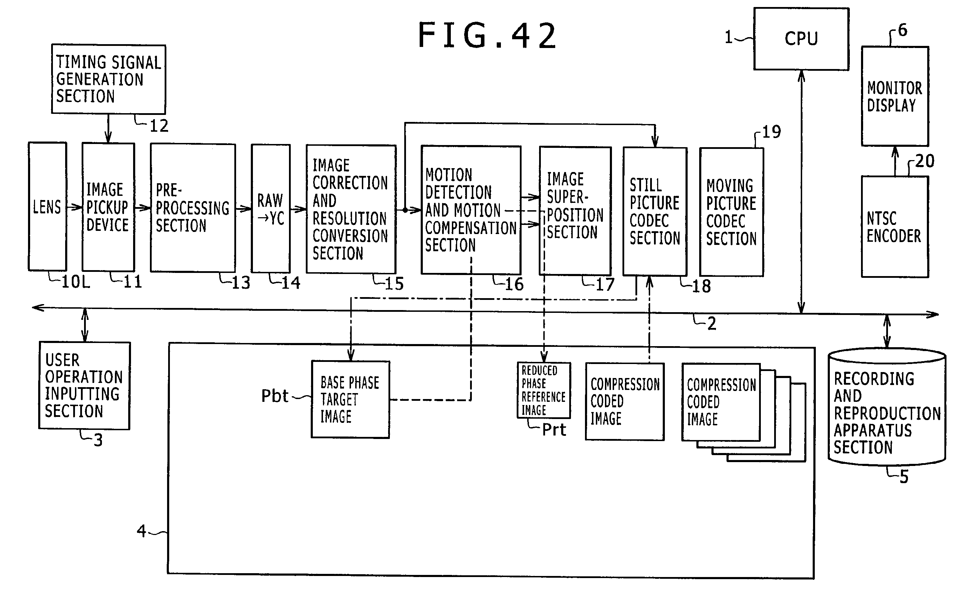

After compression coding and storage into the image memory section 4 of all picked up images captured upon high speed image pickup are completed, the target image setting process in the process at step S3 of FIG. 21 is carried out. A flow of image data in this instance is illustrated in FIG. 42.

In particular, compressed image data of a picked up image captured first after the shutter button is depressed is read out in a unit of an image rectangle from the image memory section 4 and supplied to and decompression decoded by the still picture codec section 18. The decompressed decoded image data is written as a base phase target image Pbt in a unit of an image rectangle into the image memory section 4.

Then, the image data of the base phase target image Pbt in the decompressed decoded form written in the image memory section 4 is read out in a unit of an image rectangle and supplied to the image superposition section 17 through the motion detection and motion compensation section 16. Then, the image data is reduced by the reduced phase production unit 174 of the image superposition section 17 shown in FIG. 17. Then, the reduced target image from the reduced phase production unit 174 is written as a reduced phase target image Prt in a unit of an image rectangle into the image memory section 4.

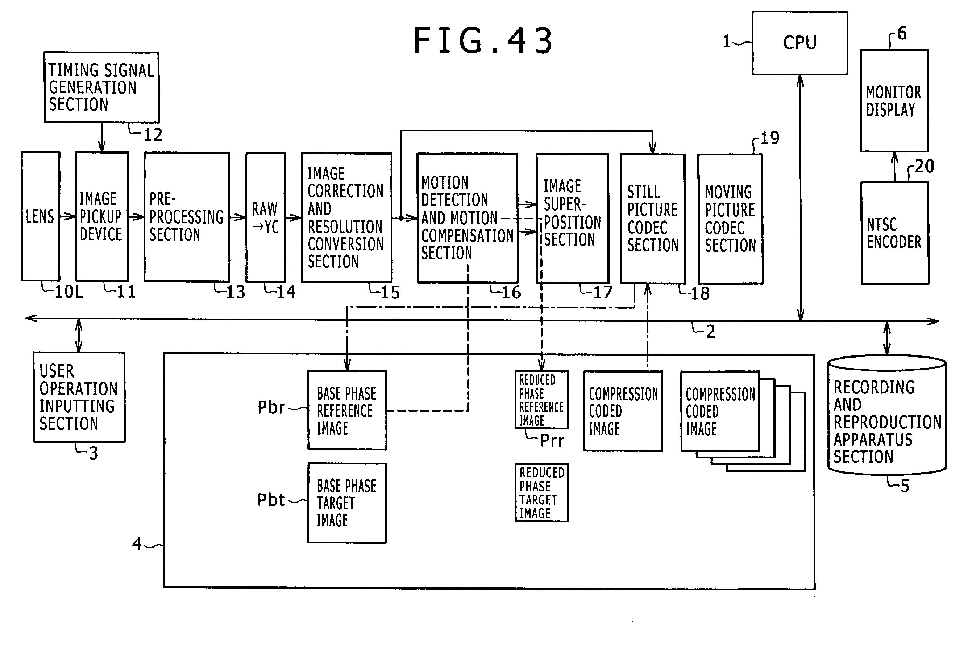

After the process for the target image is completed in such a manner as described above, a setting process for a reference image in the process at step S3 of FIG. 21 is carried out. A flow of the image data in this instance is illustrated in FIG. 43.

In particular, from among a plurality of picked up images in the compressed and coded form stored in the image memory section 4, the second picked up image which is to be used as a reference image in block matching is read out in a unit of an image unit from the image memory section 4 and is supplied to and decompressed and decoded by the still picture codec section 18. The decompressed and decoded image data is written in a unit of an image rectanble as a base phase reference image Pbr into the image memory section 4.

Then, the image data of the base phase reference image Pbr in the form of decompressed and decoded form written in the image memory section 4 is read out in a unit of an image rectanble and supplied to the image superposition section 17 through the motion detection and motion compensation section 16. Then, the image data is reduced by the reduced phase production unit 174 of the image superposition section 17 shown in FIG. 16. Then, the reduced reference image from the reduced phase production unit 174 is written as a reduced phase reference image Prr in a unit of an image rectangle into the image memory section 4.

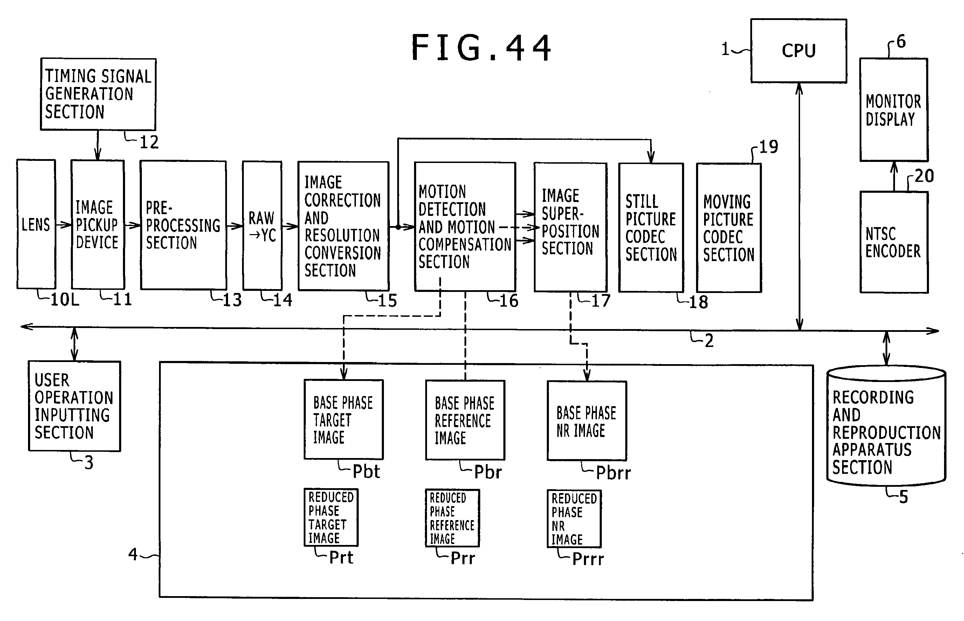

Thereafter, motion detection and motion compensation are carried out between the decompressed decoded target image and the decompressed decoded reference image. This corresponds to the processes at steps S4 to S9 of FIG. 21. Further, this corresponds to the process illustrated in the flow charts of FIGS. 32 and 33. FIG. 44 illustrates a flow of image data in this instance.

First, a reduced phase block matching process is carried out. In particular, image data of a set reduced phase target block is read out from the reduced phase target image Prt of the image memory section 4 and stored into the target block buffer unit 161 of the motion detection and motion compensation section 16. Meanwhile, a reduced phase matching processing range corresponding to the search range of the reduced phase target block is read out from the reduced phase reference image Prr and stored into the reference block buffer unit 162.

Then, the image data of the reduced phase target block and the reduced phase reference block are read out from the buffer sections 161 and 162, respectively, and are subjected to a reduced phase block matching process by the matching processing unit 163 to carry out detection of a reduced phase block matching process regarding the set reduced phase target block.

Then, a base phase target block and a base phase search range are set in such a manner as described hereinabove based on the reduced phase motion vector. Then, the set base phase target block is read out from the base phase target image Pbt and stored into the target block buffer unit 161, and the base phase matching processing range corresponding to the set base phase search range is read out and stored into the reference block buffer unit 162.

Then, the image data of the base phase target block and the base phase reference block are read out from the buffer sections 161 and 162, respectively, and are subjected to a base phase block matching process by the matching processing unit 163. Thereafter, detection of a base phase motion vector of the pixel accuracy regarding the set base phase target block is carried out by the motion vector calculation unit 164.

Then, the motion detection and motion compensation section 16 reads out a motion compensation block from the base phase reference image based on the detected base phase motion vector and supplies the motion compensation block to the image superposition section 17 together with the base phase target block. The image superposition section 17 carries out image superposition in a unit of a block and places a reduced phase NR image Pbnr of a unit of a block of a result of the superposition into the image memory section 4. Further, the image superposition section 17 places also a reduced phase NR image Prnr produced by the reduced phase production unit 174 into the image memory section 4.

The procedure described above is carried out for all target blocks of the target image. Then, if the block matching for all target blocks is completed, then a block matching process similar to that described above is carried out repetitively (step S4 of FIG. 21 to step S14 of FIG. 22) using the reduced phase NR image Pbnr and the reduced phase NR image Prnr as target images (step S14 of FIG. 22) while setting the third image as a reference image. Then, if the processing for all captured images is completed, then the reduced phase NR image Pbnr obtained finally is compression coded by the still picture codec section 18 and recorded into the recording medium of the recording and reproduction apparatus section 5.

As described above, in the present embodiment, a NR image obtained by superposition of a target image and a reference image is used as a target image when subsequent superposition is carried out. Further, the base phase target block is not needed any more after the block matching process is completed.

From the characteristics described above, in the present embodiment, the image superposition section 17 overwrites a block after NR obtained by superposition of a base phase target block and a motion compensation block into an address in which the original base phase target block is placed.

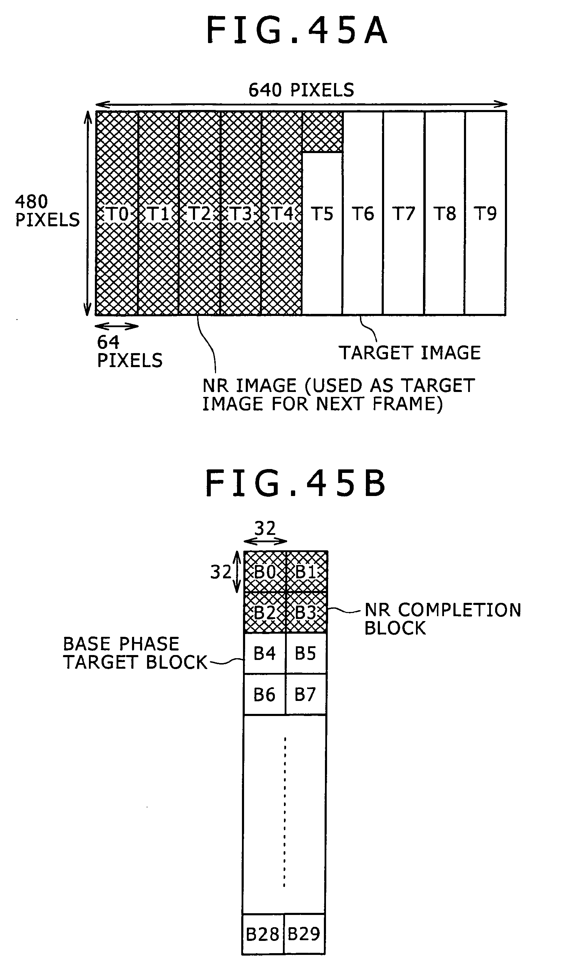

For example, as seen in FIGS. 45A and 45B, when a block matching process is carried out using a block B4 of an image rectangle T5 as a target image, all of image rectangles T0 to T4 and blocks B0 to B3 are blocks after NR.

By carrying out memory accessing of the image rectangle accessing method by means of the image correction and resolution conversion section 15 and setting also the unit of processing in compression coding regarding still pictures to a form of an image rectangle in such a manner as described above, image data can be transferred directly from the image correction and resolution conversion section 15 to the still picture codec section 18 without the intervention of the image memory section 4. Consequently, images picked up by high-speed successive image pickup can be compression coded efficiently and stored into the image memory section 4.

<Reduction of the Image Memory Capacity>

Now, reduction of the storage capacity of the image memory upon decompression decoding of reference images is described.

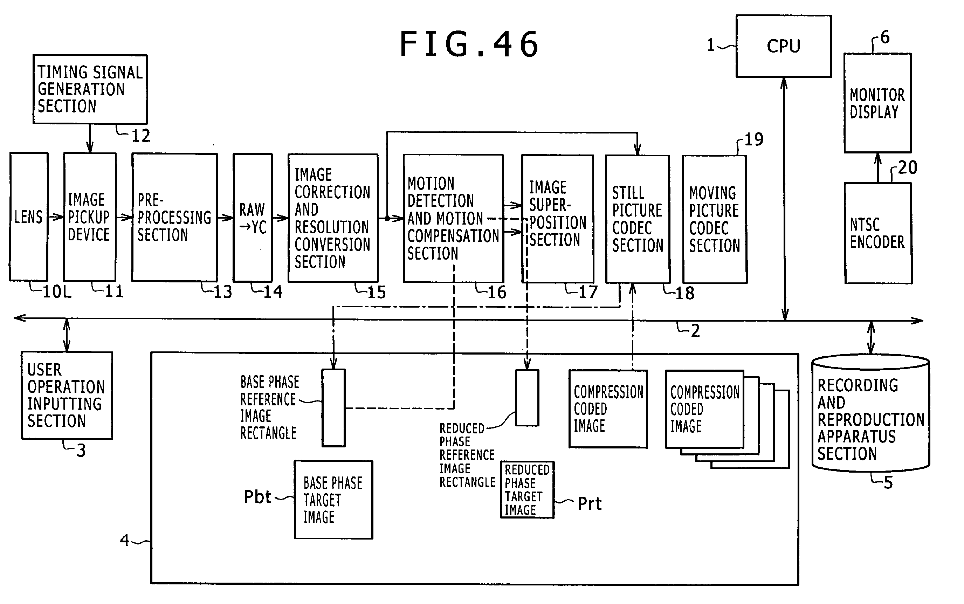

In a still picture NR process upon still picture image pickup in the present embodiment, a target image from among images captured in a compression coded form and stored in the image memory section 4 is all decompressed and decoded. However, as seen from an image data flow illustrated in FIG. 46, a reference image is decompressed and decoded only at an image rectangle thereof which is to be used for the matching process thereby to reduce the image memory capacity. In other words, the storage capacity of the image memory for storing reference images on the base phase and the reduced phase in a decompressed and decoded form in the image memory section 4 is reduced by decompressing and decoding image data in a unit of an image rectangle.

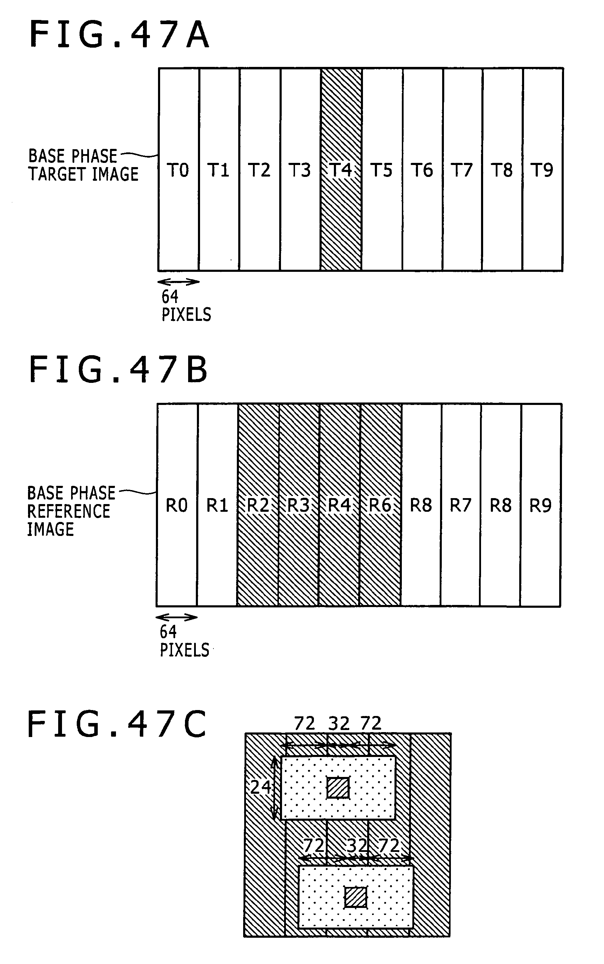

This is described in connection with an example. For example, it is assumed that a base phase target image is divided into image rectangles T0 to T9 of 64 pixels in the horizontal direction as seen in FIG. 47A, and similarly, a base phase reference image is divided into image rectangles R0 to R9 of 64 pixels in the horizontal direction as seen in FIG. 47B.

Now, if it is assumed that block matching is being carried out for a target block in the image rectangle T4, then those image rectangles which may possibly be accessed as a matching processing range from among the image rectangles R0 to R9 of the base phase reference image can be restricted to several image rectangles around the image rectangle R4.

For example, if it is assumed that the reduction ratio is 1/4, then in order to take a matching production range (refer to FIG. 37B) of 44 pixels in the horizontal direction by reduction, image data of 176 pixels in the horizontal direction is required. Accordingly, as can be seen from FIG. 47C, in the base phase reference image, two image rectangles R2 and R3 and two image rectangles R5 and R6 on the left and right with respect to the image rectangle R4, respectively, as indicated by shading are required. Thus, it is necessary to decompress and decode only the five image rectangles R2 to R6 of the base phase reference image.

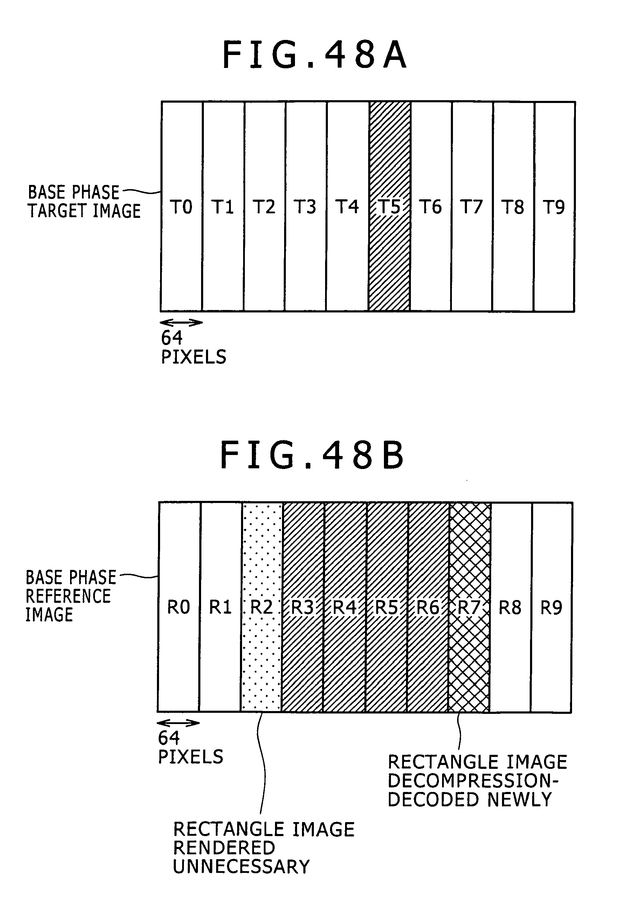

Here, it is assumed that the matching process for all target blocks included in the image rectangle T4 is completed and a matching process for target blocks included in the image rectangle T5 is started as seen in FIG. 48A. At this time, in order to take a matching processing range, five image rectangles R3 to R7 including the image rectangle R5 and two image rectangles on each of the left and right sides of the image rectangle R5 as seen in FIG. 48B are required. Since the image rectangles R3 to R6 were stored already into the image memory section 4 upon the matching processing of the target blocks included in the image rectangle T4, only it is necessary to decompress and decode the image rectangle R7 newly. Simultaneously, the image rectangle R2 becomes unnecessary.

Therefore, in the present embodiment, when the image rectangle R7 is decompressed and decoded, the decompressed decoded image rectangle R7 is overwritten into the address at which the image rectangle R2 has been placed on the reference image memory of the image memory section 4. Consequently, the reference image data in the decompressed and decoded form on the reference image memory of the image memory section 4 are always only for five image rectangles. Consequently, the reference image memory of the image memory section 4, that is, the working area of the image memory section 4, can be efficiently saved.

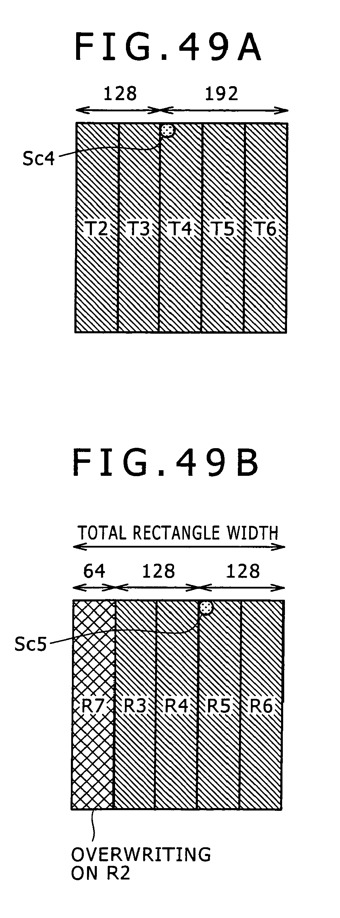

Where decoding of reference image data is carried out in accordance with the method described above, the line of the address on the reference image memory of the image memory section 4 varies in such a manner as seen from FIGS. 49A and 49B. In particular, where the reference images in the reference image memory corresponding to the target block in the image rectangle T4 are those among which the image rectangle R4 is positioned centrally as seen in FIG. 49A, since the image data are stored in order beginning with the image rectangle R2 in the reference image memory in the image memory section, when pixels on the left side with respect to the reference coordinate Sc4 of the image rectangle R4, a desired value is subtracted from the address of the reference coordinate Sc4, but when pixels on the right side with respect to the reference coordinate Sc4, a desired value is added to the address of the reference coordinate Sc4.

On the other hand, where the reference images in the reference image memory corresponding to the target block in the image rectangle T5 are those among which the image rectangle R5 is positioned centrally as seen in FIG. 49B, when a pixel among 128 pixels on the right side is to be referred to, a desired value is added to the address of the reference coordinate Sc5 of the image rectangle R5, but where a pixel outside the range of 128 pixels on the right side is to be referred to, it is necessary to subtract the address value corresponding to the total image rectangle width after a desired value is added to the address of the reference coordinate Sc5.

It is to be noted that the reference coordinates Sc0 to Sc9 of the image rectangles R0 to R9 are an example of address pointers to be used when the reference image memory is to be accessed. The memory address pointers are not limited to such address positions as in the example of FIGS. 49A and 49B.

Where an image rectangle is used also as a unit for compression coding of still images as described above, pixels only within a range necessary for a block matching process can be decoded, and the working area of the image memory section 4 can be cut down. Further, by decoding an image rectangle of a reference image to be used next and overwriting the decoded image rectangle at the address of an image rectangle of an unnecessary reference image in the image memory, the size of the decoded reference image in the working area can always be fixed.

It is to be noted that, in the example described hereinabove with reference to FIGS. 47 and 48, the size SA in the horizontal direction of the matching processing range set on the reference images is greater than the size SB in the horizontal direction of an image rectangle which is a unit of compression (SA > SB).

Then, if the size of the matching processing range in the horizontal direction is equal to an integral number of times the size of an image rectangle in the horizontal direction and the matching processing range and the delimiting positions of an image rectangle coincide with each other, then useless data accessing is eliminated, and the efficiency is further raised.

If the size in the horizontal direction of the matching processing range set on the reference images is smaller than the size in the horizontal direction of an image rectangle which is a unit of compression, the matching processing range has a size with which it is included in one image rectangle, and if this is included in one image rectangle, then naturally it is necessary to decode only the one image rectangle. However, where the matching processing range extends over two image rectangles, the two image rectangles should be decoded.

Also in this instance, if the position of the target block changes to change the position of the matching processing range until the matching processing range comes to extend over two image rectangles, only that one of the image rectangles which newly enters the matching processing range may be decoded similarly as in the example described hereinabove.

[Examples of Image Superposition in the Still Picture NR Process]

Various still picture NR processes are available depending upon in what manner a target image and a reference image are selectively set or in what order different images are superposed. Several examples are described below.

Where a plurality of images are to be superposed, an image to be used as a reference for motion compensation is required. In the embodiment described above, the first picked up image is determined as a reference image considering that an image at an instant at which the shutter is operated is an image intended by the image pickup person. In other words, on a photograph picked up first when the image pickup person operates the shutter, an image picked up later in time is used to carry out superposition as described hereinabove with reference to FIG. 4.

In the process described hereinabove with reference to the flow charts of FIGS. 21 and 22, a NR image of a result of superposition of a target image and a reference image is used as a next target image, and in the second time image superposition and later image superposition, the target image is normally in a state wherein the NR process is applied thereto. For the selection method for a target image and a reference image, not only a technique wherein the target image described above normally is a NR image (hereinafter referred to as target addition method) but also another technique wherein a reference image normally is a NR image (hereinafter referred to as reference addition method) can be used.

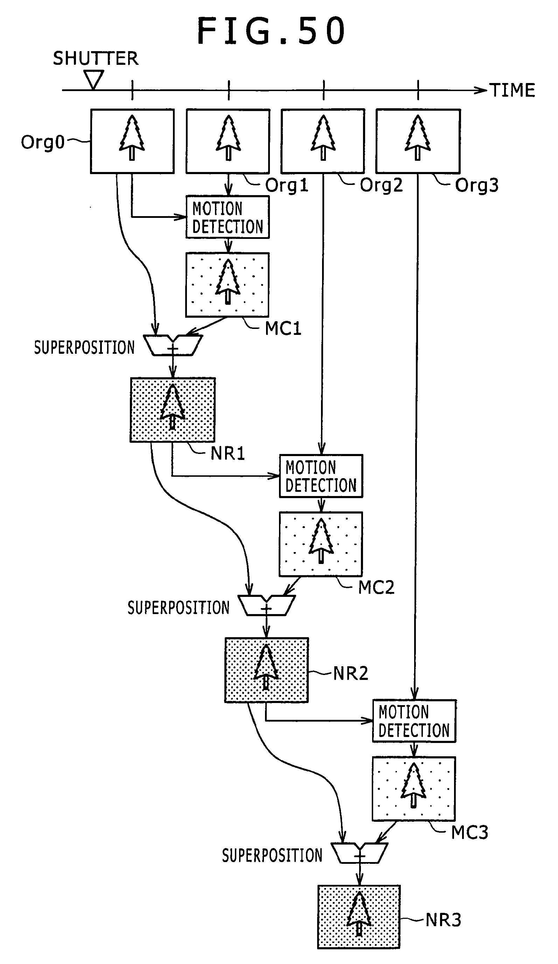

A concept of image superposition of the target addition method described above is illustrated in FIG. 50 where four images are picked up by high-speed successive image pickup.

The picked up images are denoted by Org0, Org1, Org2 and Org3 in an ascending order of the time interval from the point of time at which the shutter is depressed. First, the picked up image Org0 is set to a target image and the picked up image Org1 is set to a reference image, and a motion compensation image MC1 is produced from them as seen in FIG. 50. Then, the picked up image Org0 and the motion compensation image MC1 are superposed to produce a NR image NR1.

Then, the NR image NR1 is determined as a target image and the picked up image Org2 is determined as a reference image, and a motion compensation image MC2 is produced from them. Then, the NR image NR1 and the motion compensation image MC2 are superposed to produce a NR image NR2.

Then, the NR image NR2 is determined as a target image and the picked up image Org3 is determined as a reference image, and a motion compensation image MC3 is produced from them. Then, the NR image NR2 and the motion compensation image MC3 are superposed to produce a NR image NR3. The NR image NR3 is a finally synthesized NR image.

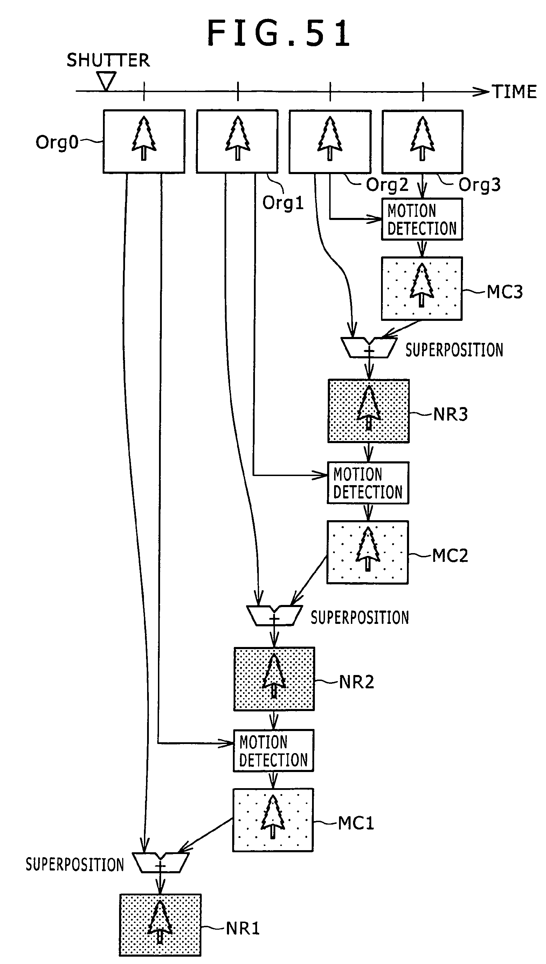

FIG. 51 illustrates a concept of the reference addition method where four images are picked up by high-speed successive image pickup as an example similarly as in the case of FIG. 50.

First, the picked up image Org2 is determined as a target image and the picked up image Org3 is determined as a reference image to produce a motion compensation image MC3. Then, the picked up image Org2 and the motion compensation image MC3 are superposed to produce a NR image NR3.

Then, the picked up image Org1 is determined as a target image and the NR image NR3 is determined as a reference image to produce a motion compensation image MC2. The picked up image Org1 and the motion compensation image MC2 are superposed to produce a NR image NR2.

Thereafter, the picked up image Org0 is determined as a target image and the NR image NR2 is determined as a reference image to produce a motion compensation image MC1. Then, the picked up image Org0 and the motion compensation image MC1 are supposed to produce a NR image NR1. The NR image NR1 is a finally synthesized NR image.

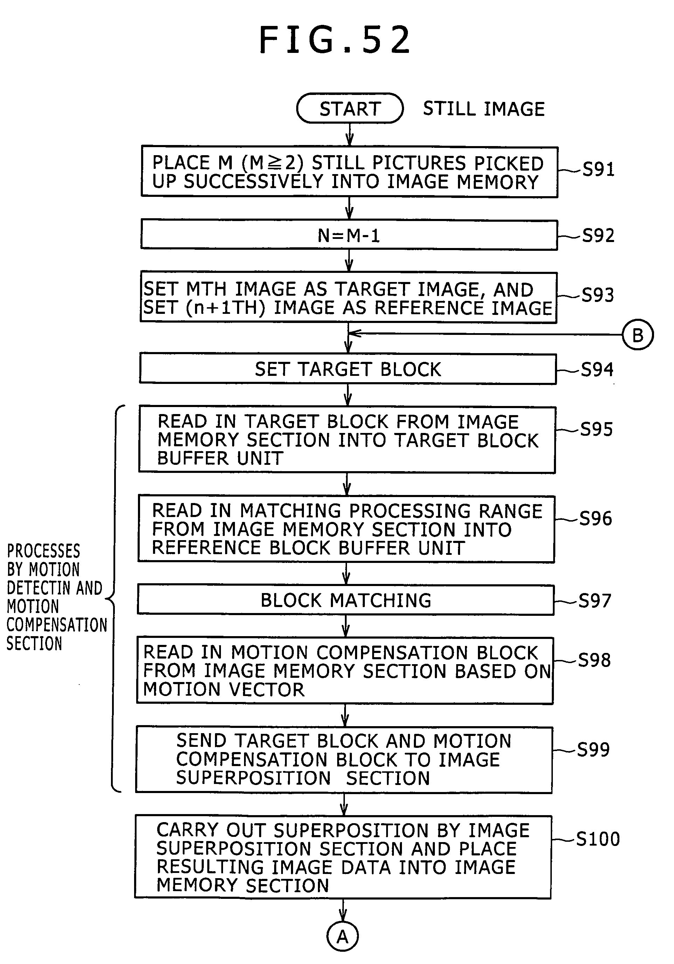

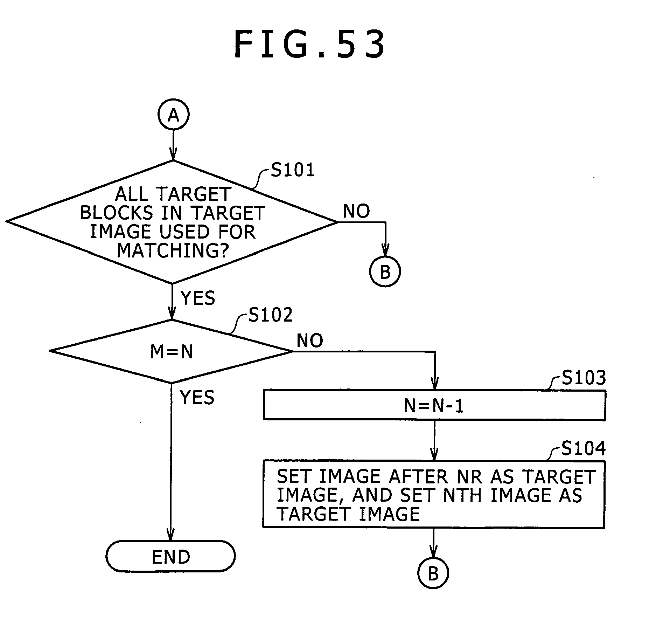

A processing procedure according to the reference addition method is illustrated in flow charts of FIGS. 52 and 53. Steps of the flow charts of FIGS. 52 and 53 are executed under the control of the CPU 1 and the control unit 165 of the motion detection and motion compensation section 16 which is controlled by the CPU 1 and are executed by the image superposition section 17.

First, if the shutter button is depressed, then in the image pickup apparatus of the present example, a plurality of images are picked up at a high speed under the control of the CPU 1. In the present example, picked up image data of M images or M frames (M is an integer equal to or greater than 2) to be superposed upon still picture image pickup are captured and placed into the image memory section 4 (step S91).

Then, the reference frame is set to an Nth (N is an integer equal to or greater than 2 and has a maximum value of M) one of the M image frames accumulated in the image memory section 4, and to this end, the control unit 165 sets the initial value to the value N to N = M - 1 (step S92). Then, the control unit 165 determines the Nth image frame as a target image or target frame and determines the (N + 1)th image as a reference image or reference frame (step S93).

Then, the control unit 165 sets a target block to the target frame (step S94), and the motion detection and motion compensation section 16 reads the target frame from the image memory section 4 into the target block buffer unit 161 (step S95). Then, the motion detection and motion compensation section 16 reads pixel data within a matching processing range into the reference block buffer unit 162 (step S96).

Thereafter, the control unit 165 reads out a reference block in the search range from the reference block buffer unit 162 and carries out the hierarchical matching process in the present embodiment. It is to be noted that, in the present example, a SAD value hereinafter described among SAD values calculated by the matching processing unit 163 is sent to the motion vector calculation unit 164 so that a quadratic curve approximation interpolation process is carried out retaining a minimum value of the SAD values and SAD values in the proximity of the minimum value. After this process is repeated for all reference vectors in the search range, the interpolation process described hereinabove is executed by the quadratic curve approximation interpolation processing device, and a high-accuracy motion vector is outputted (step S97).

Then, the control unit 165 reads out a motion compensation block from the reference block buffer unit 162 in accordance with the high-accuracy motion vector detected in such a manner as described above (step S98) and sends the motion compensation block to the image superposition section 17 in synchronism with the target block (step S99).

Then, the image superposition section 17 carries out superposition of the target block and the motion compensation block and places NR image data of the block obtained by the superposition into the image memory section 4 under the control of the CPU 1. In particular, the image superposition section 17 writes the NR image data of the superposed block into the image memory section 4 (step S100).

Then, the control unit 165 decides whether or not the block matching is completed for all target blocks in the target block (step S101). Then, if it is decided that the block matching process for all target blocks is not completed as yet, then the processing returns to step S94, at which a next target block in the target frame is set so that the processes at steps S94 to S101 are repeated..

If it is decided at step S101 that the block matching regarding all target blocks in the target frame are completed, then the control unit 165 decides whether or not the process for all reference frames to be superposed is completed, that is, whether or not M = N is satisfied (step S102).

If it is decided at step S102 that M = N is not satisfied, then the value N is decremented to N = N - 1 (step S103). Then, the NR image produced by the superposition at step S100 is determined as a reference image or reference frame and the N = N - 1th image is determined as a target image or target frame (step S104). Thereafter, the processing returns to step S94 so that the processes at the steps beginning with step S94 are repeated. Then, if it is decided at step S102 that M = N is satisfied, then the present processing routine is ended.

It is to be noted that the image data of the NR image of the result of the superposition of the M picked up images are compression coded by the still picture codec section 18 and supplied to the recording and reproduction apparatus section 5, by which they are recorded on the recording medium.

The target addition method is advantageous in that it can be applied to both of the in-pickup addition method and the after-pickup addition method. On the other hand, while the reference addition method can be applied only to the after-pickup addition, since the distance in the temporal direction between the target image and the reference image is fixed, the reference addition method is advantageous in that, even if the search range is same, the range over which a motion can be covered is wider than that by the target addition method.

Now, a unit of superposition is described.

In the still picture processing technique illustrated in the flow charts of FIGS. 21 and 22, target blocks in a target image are processed in order by a block matching process, and after all target blocks in the target image are processed, a NR image is determined as a next target image and the reference image is changed to carry out next superposition (hereinafter referred to as sequential addition method).

On the other hand, it is possible to set a target block first, carry out a block matching process for all reference images and the target block and select, after the target block and motion compensation blocks of all reference images are superposed, a next target block (hereinafter referred to as collective addition method).

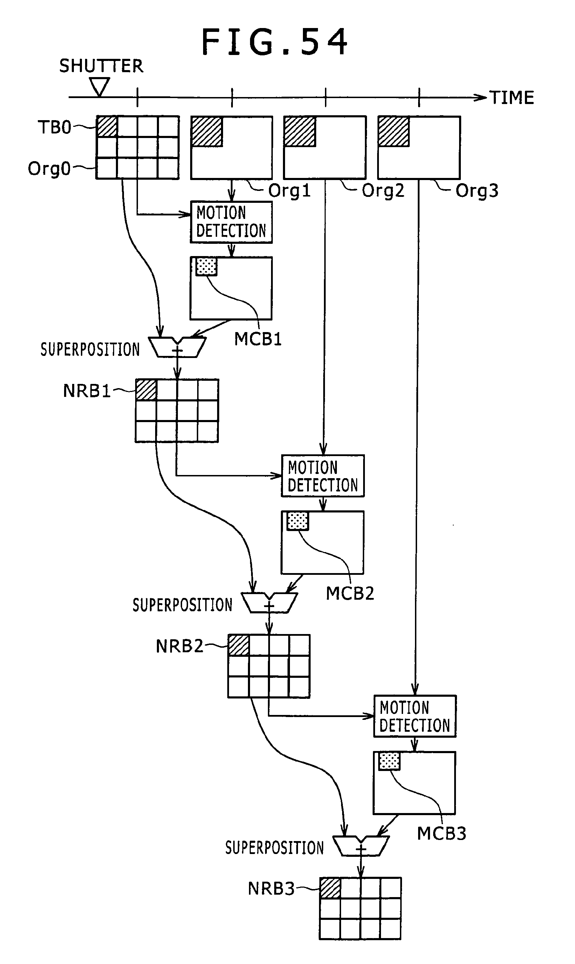

FIG. 54 illustrates a concept of the collective addition method where four images are picked up by high-speed successive image pickup similarly as in the case described hereinabove with reference to FIGS. 50 and 51.

First, a target block TB0 is set within the picked up image Org0, and a motion compensation block MCB1 is produced from a matching processing range of the picked up image Org1. The target block TB0 and the motion compensation block MCB1 are superposed to produce a NR image block NRB1.

Then, the NR image block NRB1 is determined as a target block, and a motion compensation block MCB2 is produced from the matching processing range of the picked up image Org1. Then, the NR image block NRB1 and the motion compensation block MCB2 are superposed to produce a NR image block NRB2.

Then, the NR image block NRB2 is determined as a target block, and a motion compensation block MCB3 is produced from the matching processing range of the picked up image Org3. Then, the NR image block NRB2 and the motion compensation block MCB3 are superposed to produce a NR image block NRB3. This NR image block NRB3 is one block finally obtained by the synthesis of the NR images. The procedure described above is carried out for each target block to complete one NR image.

Since the sequential addition method described above involves accessing to reference images one by one, it is compatible with the method of decompressing and decoding a reference image in a unit of an image rectangle in the embodiment described hereinabove and has an advantage that the image memory capacity can be reduced.

While the sequential addition method involves rewriting of an image into the image memory section 4 every time superposition of images is carried out, the collective addition method can successively carry out superposition of all images without writing back any image into the image memory section 4. Accordingly, there is an advantage that the word length of addition data can be set long within the motion detection and motion compensation section 16 to carry out addition of high accuracy.

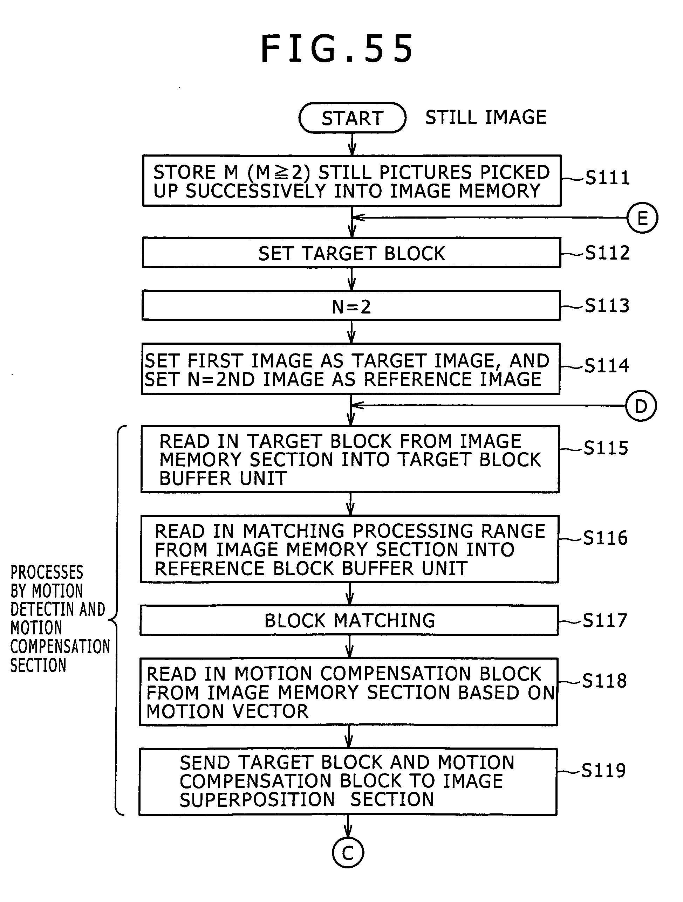

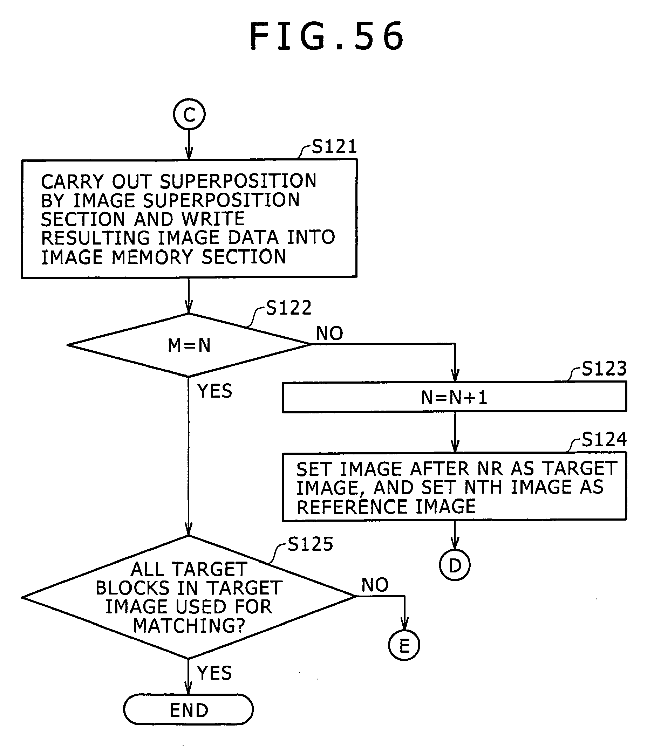

A processing procedure of operation according to the collective addition method is illustrated in FIGS. 55 and 56. Steps of the flow charts of FIGS. 55 and 56 are executed under the control of the CPU 1 and the control unit 165 of the motion detection and motion compensation section 16 which is controlled by the CPU 1 and are executed by the image superposition section 17.

First, if the shutter button is depressed, then in the image pickup apparatus in the present example, image pickup of a plurality of images is carried out at a high speed under the control of the CPU 1. In the present example, picked up image data of M images or M frames (M is an integer equal to or greater than 2) to be superposed upon still picture image pickup are captured and placed into the image memory section 4 (step S111).

Then, the control unit 165 sets a target block in the target frame (step S112). Then, whereas the reference frame is set to an Nth image frame (N is an integer equal to or greater than 2 and has a maximum value of M) in time from among the M image frames accumulated in the image memory section 4, the control unit 165 sets an initial value for the value N to N = 2 (step S113).

Then, the control unit 165 sets the first image frame as a target image or target frame and sets the N = 2nd image as a reference image or reference frame (step S114).

Then, the control unit 165 reads in the target block from the image memory section 4 into the target block buffer unit 161 (step S115) and reads pixel data in the matching processing range into the reference block buffer unit 162 (step S116).

Then, the control unit 165 reads out the reference block in the search range from the reference block buffer unit 162, and the matching processing unit 163 carries out a hierarchical matching process. It is to be noted that, in the present example, a SAD value hereinafter described from among SAD values calculated by the matching processing unit 163 is sent to the motion vector calculation unit 164 in order that the motion vector calculation unit 164 retains a minimum value among the SAD values and SAD values in the proximity of the minimum value and carries out a quadratic curve approximation interpolation process. After this is repeated for all reference vectors in the search range, the quadratic curve approximation interpolation processing device carries out the above-described interpolation process and outputs a high-accuracy motion vector (step S117).

Then, the control unit 165 reads out a motion compensation block from the reference block buffer unit 162 in accordance with the high-accuracy motion vector detected in such a manner as described above (step S118) and sends the motion compensation block to the image superposition section 17 at the succeeding stage in synchronism with the target block (step S119).

Then, the image superposition section 17 carries out superposition of the target block and the motion compensation block and places the NR image data of the superposed block into the image memory section 4 under the control of the CPU 1. In particular, the image superposition section 17 writes the NR image data of the superposed block into the image memory section 4 (step S121 of FIG. 56).

Then, the control unit 165 decides whether or not the process is completed for all reference frames to be superposed, that is, whether or not M = N is satisfied (step S122). If it is decided at step S122 that M = N is not satisfied, then the value N is incremented to N = N + 1 (step S123). Then, the control unit 165 sets the NR image produced by the superposition at step S119 as a target image or target frame, and sets the N+1th image as a reference image or reference frame (step S124). Thereafter, the processing returns to step S115 so that the processes at the steps beginning with step S115 are repeated.

Then, if it is decided at step S122 that M = N is satisfied, then it is decided whether or not the block matching is completed for all target blocks in the target frame (step S125). Then, if it is decided that the block matching process is not completed for all target blocks, then the processing returns to step S112, at which a next target block in the target frame is set. Then, the processes at the steps beginning with step S112 are repeated.

Further, if it is decided at step S125 that the block matching for all target blocks in the target frame is completed, then the control unit 165 ends this processing routine.

Then, image data of the NR image of a result of the superposition of the M picked up images are compression coded by the still picture codec section 18 and supplied to the recording and reproduction apparatus section 5, by which they are recorded on the recording medium.

If the image pickup condition, the required NR accuracy, the setting information and so forth are changed to change the selection method for a target image and a reference image, the order of supervision or the calculation method of supervision described hereinabove with reference to FIGS. 17 to 20 as described above, then a desired NR image can be obtained.

[Effects of the Embodiment]

According to the embodiment described above, since the image correction and resolution conversion section 15 carries out memory accessing in a format wherein an image is divided into image rectangles and also the compression coding by the still picture codec section 18 is carried out in a unit of an image rectangle similarly, data can be transferred directly from the image correction and resolution conversion section 15 to the still picture codec section 18 without the intervention of a memory. Consequently, images picked up successively at a high speed can be compression coded efficiently and stored into the image memory section 4.

Further, since, when the compression coded images stored in the image memory section 4 are used as reference images, each image is decompressed and decoded in a unit of an image rectangle obtained by division of the image, data only within a range necessary for a block matching process can be decoded. Consequently, the working area of the image memory section 4 can be cut down. Further, since a reference image rectangle to be used subsequently is decoded and overwritten at an address of an unnecessary reference image rectangle of the image memory section 4, the size of decoded reference image in the working area can always be kept fixed.

Further, as described hereinabove, according to the present embodiment, where the selection method for a target image and a reference image, the order of superposition or the calculation method of supervision is changed depending upon setting information or the like, a desired NR image can be obtained.

[Other Embodiments and Modifications]

While, in the embodiment described above, the JPEG system is used as a compression coding method in the still picture codec section 18, this is a mere example, but the present invention naturally allows application of any image compression coding system.

Further, while, in the embodiment described above, compression coding of picked up images upon block matching is carried out by the compression coding processing section for compression coding images recorded upon still picture image pickup, different methods may be used for the compression method for the recording process and the compression method for picked up images used upon block matching.

Further, while, in the embodiment described above, the present invention is applied where three or more picked up images are superposed in the still picture NR process, the present invention can be applied also where two picked up images are superposed. Accordingly, the present invention may be applied also where a moving picture NR process is carried out. Although the compression coding method for the reference image in this instance may be the JPEG system, a simpler image data compression method may be used instead.

Further, while an image is divided for each plurality of pixels in the horizontal direction so as to allow memory accessing to the image as data in a unit of an image rectangle, this is because the direction of reading out and writing of image data from and into the image memory is decided with reference to the horizontal direction. However, where the direction of reading out and writing of image data from and into the image memory is a vertical direction, if an image is divided for each plurality of lines in the vertical direction so as to allow memory accessing to the image as data in a unit of a horizontal image rectangle, then similar operation and working effects to those described above can naturally be achieved. Also it is a matter of course that an image may be divided in both of the horizontal direction and the vertical direction.

Further, while, in the embodiment described above, not only a reference image but also a target image are compression coded and fetched once into the image memory, the target image may not necessarily be compression coded because it is necessary for the image processing apparatus of the present invention to compression code and retain at least a reference image.

Further, while, in the first example of the motion vector calculation unit in the embodiment described above, the searching direction in the search range is set to the horizontal line direction and the search is carried out such that the reference block is moved in order, for example, from the upper corner of the search range and the memory for one line of a SAD table is provided, a different search method wherein the searching direction in the search range is set to the vertical direction and a procedure that the search is started in a vertical direction, for example, from the left upper corner of the search range and, after the search for one column in the vertical direction comes to an end, the position of the reference block is shifted by a one-unit distance, for example, by a one-pixel distance to a vertical column on the right side and the search is carried out in the vertical direction from the top end of the column is repeated may be adopted. Where the search is carried out in such a manner that the reference block is shifted in the vertical direction in order from the left upper corner of the search range in this manner, a memory for one vertical column of the SAD table may be provided.

Here, whether the searching direction should be set to a horizontal direction or a vertical direction is preferably determined such that the matching processing unit and the motion vector calculation unit can be

It is to be noted that, as described hereinabove, the movement of the reference block may be carried out not only for each one pixel or each one line but for each plurality of pixels or each plurality of lines. Accordingly, the memory for one line in the horizontal direction in the former case may have a capacity for moving positions of the reference block in the horizontal direction, and the memory for one vertical column in the latter case may have a capacity for moving positions of the reference block in the vertical direction. In particular, where the movement of the reference block is carried out for each one pixel or for each one line, the memory for one line must have a capacity for the number of pixels of one line, but the memory for one vertical column must have a capacity for the number of the lines. However, where the reference block is moved for each plurality of pixels or for each plurality of lines, the memory for one line or the memory for one column may have a smaller capacity than that required where the reference block is moved for each one pixel or for each one line.

Further, the method for an interpolation process is not limited to the quadratic curve approximation interpolation process described hereinabove, but an interpolation process wherein a cubic curve or a higher order curve is used may be carried out.

Further, while, in the embodiment described above, the image processing apparatus according to the present invention is applied to an image pickup apparatus, the present invention can be applied not only to an image pickup apparatus but also to any apparatus wherein a motion between image frames is detected.

Further, while, in the embodiment described above, the present invention is applied where a motion vector is detected in a unit of a block in order to carry out a noise reduction process by superposition of images, the application of the present invention is not limited to this, but the present invention can naturally be applied to detection of a motion vector, for example, by camera shake upon image pickup. A motion vector by camera shake can be determined, for example, as an average value of a plurality of block motion vectors.

While a preferred embodiment of the present invention has been described using specific terms, such description is for illustrative purpose only, and it is to be understood that changes and variations may be made without departing from the spirit or scope of the following claims.

**Claims**

**1.** An image processing apparatus wherein a plurality of reference blocks of a size equal to that of a target block which has a predetermined size and includes a plurality of pixels set to a predetermined position in a target screen are set in a search range set on a reference screen and a motion vector is detected based on a positional displacement amount, on the screen, of that one of the reference blocks which has the highest correlation to the target block from the target block, comprising:

a compression section configured to compress image data of the reference screen in a unit of a divisional block where one screen is divided into a plurality of divisional blocks;
a first storage section configured to store the image data compressed by the compression section;
a decompression decoding section configured to read out, from among the compressed image data of the reference screen stored in the first storage section, those of the compressed image data in the divisional block units which include a matching processing range corresponding to the search range, from the first storage section and decompress and decode the read out image data;
a second storage section configured to store the image data decompressed and decoded by the decompression decoding section; and
a mathematical operation section configured to extract the image data of the reference block from among the image data stored in the second storage section and mathematically operate a correlation value between the reference block and the target block.

**2.** The image processing apparatus according to claim 1, wherein the divisional block unit is a unit of a rectangular block where the one screen is divided into a plurality of blocks in at least one of a horizontal direction and a vertical direction.

**3.** The image processing apparatus according to claim 1, wherein a plurality of target blocks are set in the target screen while the search range is set corresponding to each of the target blocks on the reference screen, and in each of the search ranges, a motion vector regarding each of the target blocks is detected based on the positional displacement amount, on the screen, of that one of the reference blocks which has the highest correlation to the target block from the target block; and

when the target block is changed, only the image data of a block unit in a region within which the matching processing range corresponding to the search range set for the target block before the change and the matching processing range corresponding to the search range set for the target block after the change do not overlap with each other is read out from the first storage section and decompressed and decoded and then written into the second storage section.

**4.** The image processing apparatus according to claim 3, wherein, from among the image data of the divisional block units which include the matching processing range corresponding to the search range set for the target block after the change, the image data in a divisional block area which does not overlap with the matching processing range corresponding to the search range set for the target block before the change is decompressed and decoded, and then overwritten in the storage region of the second storage section in which, from among the image data of the divisional block units which include the search range set for the target block before the change, the image data of a divisional block unit which does not overlap with the matching processing range corresponding to the search range set for the target block after the change has been stored, and information for recognizing the stored position of the image data of the divisional block units in the second storage section is stored and retained.

**5.** An image processing apparatus wherein a plurality of successive images are superposed in a unit of a first block where one screen is divided into a plurality of first blocks to obtain an image whose noise is reduced and wherein a target block is set as one of the first blocks in a target screen from between two screens to be superposed; a plurality of reference blocks of a size same as that of the target block are set in a search range set to a reference screen which is the other one of the two screens to be superposed; based on a positional displacement amount, on the screen, of that one of the reference blocks which has the highest correlation to the target block from the target block, a motion vector of the first block unit is detected; and while the detected motion vector of the first block unit is used to compensate for a motion of the image for each of the first blocks, superposition of the images is carried out, comprising:

a compression section configured to compress image data of the reference screen in a unit of a second divisional block where one screen is divided into a plurality of divisional blocks;
a first storage section configured to store the image data compressed by the compression section;
a decompression decoding section configured to read out, from among the compressed image data of the reference screen stored in the first storage section, those of the compressed image data in the second divisional block units which include a matching processing range corresponding to the search range, from the first storage section and decompress and decode the read out image data;
a second storage section configured to store the image data decompressed and decoded by the decompression decoding section; and
a mathematical operation section configured to extract the image data of the reference block from among the image data stored in the second storage section and mathematically operate a correlation value between the reference block and the target block.

**6.** The image processing apparatus according to claim 5, wherein the second divisional block unit is a unit of a rectangular block where the one screen is divided into a plurality of blocks in at least one of a horizontal direction and a vertical direction.

**7.** The image processing apparatus according to claim 5, wherein the search range is set corresponding to each of the target blocks set in the target screen on the reference screen, and in each of the search ranges, a motion vector regarding each of the target blocks is detected based on the positional displacement amount, on the screen, of that one of the reference blocks which has the highest correlation to the target block from the target block; and

when the target block is changed, only the image data of a second block unit in a region within which the matching processing range corresponding to the search range set for the target block before the change and the matching processing range corresponding to the search range set for the target block after the change do not overlap with each other is read out from the first storage section and decompressed and decoded and then written into the second storage section.

8. The image processing apparatus according to claim 7, wherein, from among the image data of the second divisional block units which include the matching processing range corresponding to the search range set for the target block after the change, the image data in a second divisional block area which does not overlap with the matching processing range corresponding to the search range set for the target block before the change is decompressed and decoded, and then overwritten in the storage region of the second storage section in which, from among the image data of the second divisional block units which include the search range set for the target block before the change, the image data of a second divisional block unit which does not overlap with the matching processing range corresponding to the search range set for the target block after the change has been stored, and

information for recognizing the stored position of the image data of the divisional block units in the second storage section is stored and retained.

9. The image processing apparatus according to claim 5, wherein the plurality of successive images are picked up images successively outputted from an image pickup element.

10. An image pickup apparatus, comprising:

an image processing apparatus wherein a plurality of successive images are superposed in a unit of a first block where one screen is divided into a plurality of first blocks to obtain an image whose noise is reduced and wherein a target block is set as one of the first blocks in a target screen from between two screens to be superposed; a plurality of reference blocks of a size same as that of the target block are set in a search range set to a reference screen which is the other one of the two screens to be superposed; based on a positional displacement amount, on the screen, of that one of the reference blocks which has the highest correlation to the target block from the target block, a motion vector of the first block unit is detected; and while the detected motion vector of the first block unit is used to compensate for a motion of the image for each of the first blocks, superposition of the images is carried out, including:

a compression section configured to compress image data of the reference screen in a unit of a second divisional block where one screen is divided into a plurality of divisional blocks;
a first storage section configured to store the image data compressed by the compression section;
a decompression decoding section configured to read out, from among the compressed image data of the reference screen stored in the first storage section, those of the compressed image data in the second divisional block units which include a matching processing range corresponding to the search range, from the first storage section and decompress and decode the read out image data;
a second storage section configured to store the image data decompressed and decoded by the decompression decoding section;
a mathematical operation section configured to extract the image data of the reference block from among the image data stored in the second storage section and mathematically operate a correlation value between the reference block and the target block; and
a recording section configured to record the data of the image whose noise is reduced by the superposition into a recording medium.

11. An image processing method wherein a plurality of reference blocks of a size equal to that of a target block which has a predetermined size and includes a plurality of pixels set to a predetermined position in a target screen are set in a search range set on a reference screen and a motion vector is detected based on a positional displacement amount, on the screen, of that one of the reference blocks which has the highest correlation to the target block from the target block, comprising the steps of:

compressing image data of the reference screen in a unit of a divisional block where one screen is divided into a plurality of divisional blocks and storing the compressed image data into a first storage section;
reading out, from among the compressed image data of the reference screen stored in the first storage section, those of the compressed image data in the divisional block units which include a matching processing range corresponding to the search range, from the first storage section, decompressing and decoding the read out image data, and storing the decompressed and decoded image data into a second storage section; and extracting the image data of the reference block from among the image data stored in the second storage section and mathematically operating a correlation value between the reference block and the target block.

12. An image processing method wherein a plurality of successive images are superposed in a unit of a first block where one screen is divided into a plurality of first blocks to obtain an image whose noise is reduced and wherein a target block is set as one of the first blocks in a target screen from between two screens to be superposed; a plurality of reference blocks of a size same as that of the target block are set in a search range set to a reference screen which is the other one of the two screens to be superposed; based on a positional displacement amount, on the screen, of that one of the reference blocks which has the highest correlation to the target block from the target block, a motion vector of the first block unit is detected; and while the detected motion vector of the first block unit is used to compensate for a motion of the image for each of the first blocks, superposition of the images is carried out, comprising the steps of:

compressing image data of the reference screen in a unit of a second divisional block where one screen is divided into a plurality of divisional blocks and storing the compressed image data into a first storage section; reading out, from among the compressed image data of the reference screen stored in the first storage section, those of the compressed image data in the second divisional block units which include a matching processing range corresponding to the search range, from the first storage section, decompressing and decoding the read out image data and storing the decompressed and decoded image data into a second storage section; and extracting the image data of the reference block from among the image data stored in the second storage section and mathematically operating a correlation value between the reference block and the target block.

13. An image processing apparatus wherein a plurality of reference blocks of a size equal to that of a target block which has a predetermined size and includes a plurality of pixels set to a predetermined position in a target screen are set in a search range set on a reference screen and a motion vector is detected based on a positional displacement amount, on the screen, of that one of the reference blocks which has the highest correlation to the target block from the target block, comprising:

compression means for compressing image data of the reference screen in a unit of a divisional block where one screen is divided into a plurality of divisional blocks; first storage means for storing the image data compressed by the compression means to a first storage section; decompression decoding means for reading out, from among the compressed image data of the reference screen stored in the first storage section, those of the compressed image data in the divisional block units which include a matching processing range corresponding to the search range, from the first storage section and decompressing and decoding the read out image data; second storage means for storing the image data decompressed and decoded by the decompression decoding means to a second storage section; and mathematical operation means for extracting the image data of the reference block from among the image data stored in the second storage section and mathematically operate a correlation value between the reference block and the target block.

14. An image processing apparatus wherein a plurality of successive images are superposed in a unit of a first block where one screen is divided into a plurality of first blocks to obtain an image whose noise is reduced and wherein a target block is set as one of the first blocks in a target screen from between two screens to be superposed; a plurality of reference blocks of a size same as that of the target block are set in a search range set to a reference screen which is the other one of the two screens to be superposed; based on a positional displacement amount, on the screen, of that one of the reference blocks which has the highest correlation to the target block from the target block, a motion vector of the first block unit is detected; and while the detected motion vector of the first block unit is used to compensate for a motion of the image for each of the first blocks, superposition of the images is carried out, comprising:

compression means for compressing image data of the reference screen in a unit of a second divisional block where one screen is divided into a plurality of divisional blocks; first storage means for storing the image data compressed by the compression means; decompression decoding means for reading out, from among the compressed image data of the reference screen stored in the first storage section, those of the compressed image data in the second divisional block units which include a matching processing range corresponding to the search range, from the first storage section and decompressing and decoding the read out image data;

second storage means for storing the image data decompressed and decoded by the decompression decoding means; and

mathematical operation means for extracting the image data of the reference block from among the image data stored in the second storage section and mathematically operate a correlation value between the reference block and the target block.

# FIG.1

CONTROL REGISTER SECTION `7`

CPU `1`

10

TIMING SIGNAL GENERATION SECTION `12`

LENS `10L`

IMAGE PICKUP DEVICE `11`

PRE-PROCESSING SECTION `13`

RAW →YC `14`

IMAGE CORRECTION AND RESOLUTION CONVERSION SECTION `15`

MOTION DETECTION AND MOTION COMPENSATION SECTION `16`

IMAGE SUPER-POSITION SECTION `17`

STILL PICTURE CODEC SECTION `18`

MOVING PICTURE CODEC SECTION `19`

NTSC ENCODER `20`

MONITOR DISPLAY `6`

USER OPERATION INPUTTING SECTION `3`

IMAGE MEMORY SECTION `4`

RECORDING AND REPRODUCTION APPARATUS SECTION `5`

`2`

EP 2 063 646 A2

# FIG.2A

IMAGE PICKED UP
SUCCESSIVELY

# FIG.2B

IMAGE HAVING
REDUCED NOISE

P1

P2

P3

SUPERPOSITION AFTER
POSITIONING

Pmix

EP 2 063 646 A2

# FIG.3

100

102     104B

# FIG.4

~100

~101

~101

FIRST IMAGE

SECOND IMAGE

THIRD IMAGE

FOURTH AND
SUCCEEDING
IMAGES

SUPERPOSITION

SUPERPOSITION

# FIG.5

~101

~100

PRECEDING FLAME IMAGE

CURRENT FLAME IMAGE

SUPERPOSITION

# FIG.6

130

131

1/n
REDUCTION

132

133

# FIG.7

134

103

109

104

1/n
REDUCTION

135

136

FIG.8A FIG.8B FIG.8C

# FIG.9

n-TIME
MAGNIFICATION

EP 2 063 646 A2

# FIG.10

# FIG.11

FIG.12

TWO CUBIC CURVES 4×4 (3σ)

TWO QUADRATIC CURVES 3×3 (3σ)

NO INTERPOLATION (3σ)

# FIG.13

# FIG.14

161

TARGET BLOCK FROM
RESOLUTION
CONVERSION SECTION

SELECTOR

BASE PHASE
BUFFER
DEVICE

1611

TARGET BLOCK TO
IMAGE SUPERPOSITION
SECTION

TARGET BLOCK FROM
IMAGE MEMORY
SECTION

1614

REDUCTION
PROCESSING
DEVICE

1613

SELECTOR

1615

REDUCED
PHASE
BUFFER
DEVICE

1612

SELECTOR

1616

TARGET BLOCK TO
MATCHING PROCESSING
UNIT

EP 2 063 646 A2

# FIG.15

162

MATCHING PROCESSING
RANGE FROM IMAGE
MEMORY SECTION

BASE PHASE
BUFFER
DEVICE

1621

MOTION COMPENSATION
BLOCK TO IMAGE
SUPERPOSITION
SECTION

SELECTOR

REFERENCE BLOCK TO
MATCHING PROCESSING
UNIT

REDUCED
PHASE
BUFFER
DEVICE

1623

1622

EP 2 063 646 A2

# FIG.16

# FIG.17

MOTION
COMPENSATION IMAGES

TARGET
IMAGE

$1+(1-\alpha)/N$

ADDITION RATIO $\alpha$

$+$

# FIG.18

MC1   MC2   MC3   MCK

1   1   1   1

Org1   1   NR1   2   NR2   3   NR3   K   NRK

# FIG.19

MOTION
COMPENSATION IMAGES

TARGET
IMAGE

$1-\alpha$

ADDITION RATIO $\alpha$
(MAXIMUM ADDITION RATIO A)

$+$

# FIG.20

EP 2 063 646 A2

# FIG.21

( START ) STILL IMAGE

STORE M (M≧2) STILL PICTURES PICKED UP SUCCESSIVELY INTO IMAGE MEMORY — S1

N=2 — S2

SET FIRST IMAGE AS TARGET IMAGE, AND SET N=2ND IMAGE AS REFERENCE IMAGE — S3

( 2 )

SET TARGET BLOCK — S4

PROCESSES BY MOTION DETECTIN AND MOTION COMPENSATION SECTION

READ IN TARGET BLOCK FROM IMAGE MEMORY SECTION INTO TARGET BLOCK BUFFER UNIT — S5

READ IN MATCHING PROCESSING RANGE FROM IMAGE MEMORY SECTION INTO REFERENCE BLOCK BUFFER UNIT — S6

BLOCK MATCHING — S7

READ IN MOTION COMPENSATION BLOCK FROM IMAGE MEMORY SECTION BASED ON MOTION VECTOR — S8

SEND TARGET BLOCK AND MOTION COMPENSATION BLOCK TO IMAGE SUPERPOSITION SECTION — S9

CARRY OUT SUPERPOSITION BY IMAGE SUPERPOSITION SECTION AND WRITE RESULTING IMAGE DATA INTO IMAGE MEMORY SECTION — S10

( 1 )

# FIG.22

①
↓

S11

ALL TARGET
BLOCKS IN TARGET
IMAGE USED FOR
MATCHING? — NO → ②

↓ YES

S12

M=N — NO → 

↓ YES

END

S13

N=N+1

↓

S14

SET IMAGE AFTER NR AS TARGET
IMAGE, AND SET NTH IMAGE AS
REFERENCE IMAGE

↓

②

# FIG.23

( START ) MOVING PICTURES

RETAIN FRAME IMAGE INTO RESOLUTION CONVERSION SECTION AND SEND FRAME IMAGE IN UNIT OF TARGET BLOCK TO MOTION DETECTION AND MOTION COMPENSATION SECTION —S21

SET REFERENCE BLOCK CORRESPONDING TO TARGET BLOCK —S22

READ IN MATCHING PROCESSING RANGE FROM IMAGE MEMORY SECTION INTO REFERENCE BLOCK BUFFER UNIT —S23

MOTION DETECTION —S24

READ IN MOTION COMPENSATION BLOCK FROM IMAGE MEMORY SECTION BASED ON MOTION VECTOR —S25

SEND TARGET BLOCK AND MOTION COMPENSATION BLOCK TO IMAGE SUPERPOSITION SECTION —S26

PROCESSES BY MOTION DETECTION AND MOTION COMPENSATION SECTION

CARRY OUT SUPERPOSITION BY IMAGE SUPERPOSITION SECTION AND SEND NR IMAGE TO CODEC SECTION AND NTSC ENCODER —S27

STORE NR IMAGE AS REFERENCE IMAGE OF NEXT FRAME INTO IMAGE MEMORY SECTION BY IMAGE SUPERPOSITION SECTION —S28

IMAGE PICKUP TO BE ENDED? NO —S29

YES

( END )

# FIG.24A

120      106

# FIG.24B

120      108

107

105      106

110

# FIG.24C

120      TBL

# FIG.25A

120

107

108

105

106

110

# FIG.25B

122

TBL

65 60 - -

123

120 124 121

# FIG.25C

121

123

124

125

126

# FIG.26

POSITION INFORMATION (REFERENCE VECTOR)

SAD VALUE Sin

164

1642 — SAD VALUE COMPARISON DEVICE

$S_{min}$

DET

1641 — SAD VALUE WRITIG DEVICE

1647

1643 — SAD VALUE RETAINING DEVICE

$S_{y1}$

$S_{x1}$ $S_{x2}$

$S_{y2}$ $S_{min}$

1644 — $S_{min}$ $S_{x1}$ $S_{x2}$

1645 — $S_{min}$ $S_{y1}$ $S_{y2}$

1646 — QUADRATIC CURVE APPROXIMATION INTERPOLATION PROCESSING DEVICE

REDUCED PHASE MOTION VECTOR

BASE PHASE MOTION VECTOR

# FIG.27

START — REDUCED PHASE

SET MINIMUM SAD VALUE — S31

SET REFERENCE VECTOR (Vx, Vy) ON REDUCED PHASE — S32

READ IN REDUCED PHASE REFERENCE BLOCK FROM REFERENCE BLOCK BUFFER UNIT — S33

CARRY OUT MATCHING PROCESS BETWEEN REDUCED PHASE TARGET BLOCK AND REDUCED PHASE REFERENCE BLOCK — S34

STORE CALUCULATED SAD VALUE INTO LINE MEMORY — S35

S36 — CALCULATED SAD VALUE LOWER THAN MINIMUM SAD VALUE?

YES — S37 — UPDATE MINIMUM SAD VALUE AND COORDINATE INFORMATION CORRESPONDING TO MINIMUM SAD

NO

S38 — MATCHNG PROCESS COMPLETED FOR ALL REDUCED PHASE REFERENCE VECTORS IN SEARCH RANGE?

NO

YES

DETECT AND OUTPUT REDUCED PHASE MOTION VECTOR TO CONTROL UNIT — S39

END

# FIG.28

BASE PHASE

START

SET MINIMUM SAD VALUE ─S41

⑤

SET REFERENCE VECTOR (Vx, Vy) ON BASE PHASE ─S42

READ IN BASE PHASE REFERENCE BLOCK FROM REFERENCE BLOCK BUFFER UNIT ─S43

CARRY OUT MATCHING PROCESS BETWEEN BASE PHASE TARGET BLOCK AND BASE PHASE REFERENCE BLOCK ─S44

STORE CALCULATED SAD VALUE INTO LINE MEMORY ─S45

S46

CALCULATED SAD VALUE LOWER THAN MINIMUM SAD VALUE?

YES

NO

S47

UPDATE MINIMUM SAD VALUE, COORDINATE INFORMATION CORRESPONDING TO MINIMUM SAD, AND NEIGHBORING VALUES ABOVE AND LEFTWARDLY BY ONE PIXEL DISTANCE

④

# FIG.29

④

S51 BASE PHAES

POSITION INDICATED BY BASE PHASE REFERENCE VECTOR POSITIONED BY ONE-PIXEL DISTANCE BELOW MINIMUM SAD? — YES →

S52
UPDATE NEIGBORRING VALUE OF PIXEL POSITIONED DOWNWARDLY BY ONE-PIXEL DISTANCE

NO

S53
POSITION INDICATED BY BASE PHASE REFERENCE VECTOR POSITIONED BY ONE-PIXEL DISTANCE RIGHTWARDLY OF MINIMUM SAD? — YES →

S54
UPDATE NEIGBORRING VALUE OF PIXEL POSITIONED RIGHTWARDLY BY ONE-PIXEL DISTANCE

NO

S55
MATCHING PROCESS CARRIED OUT FOR ALL BASE PHASE REFERENCE VECTORS IN SEARCH RANGE? — NO → ⑤

YES

CARRY OUT QUADRATIC CURVE APPROXIMATION INTERPOLATION PROCESS FROM MINIMUM SAD VALUE AND NEIGHBORING SAD VALUES TO CALCULATE MOTION VECTOR OF SUB PIXEL ACCURACY — S56

END

# FIG.30

# FIG.31

START                     BASE PHASE

SET MINIMUM SAD VALUE ─S61

SET REFERENCE VECTOR (Vx, Vy) ON BASE PHASE ─S62

READ IN BASE PHASE REFERENCE BLOCK FROM REFERENCE BLOCK BUFFER UNIT ─S63

CARRY OUT MATCHING PROCESS BETWEEN BASE PHASE TARGET BLOCK AND BASE PHASE REFERENCE BLOCK ─S64

CALCULATED SAD VALUE LOWER THAN MINIMUM SAD VALUE? ─S65

YES

UPDATE COORDINATE INFORMATION CORRESPONDING TO MINIMUM SAD ─S66

NO

MATCHNG PROCESS CARRED OUT FOR ALL BASE PHASE REFERENCE VECTORS IN SEARCH RANGE? ─S67

NO

YES

CARRY OUT MATCHING PROCESS FOR FOUR NEIGHBORING POINTS TO POSITION OF MINIMUM SAD VALUE ─S68

CARRY OUT SAD INTERPOLATION FROM MINIMUM SAD VALUE AND SAD VALUES AT FOUR NEIGHBORING POINTS TO CALCULATE MOTION VECTOR OF SUB PIXEL ACCURACY ─S69

END

# FIG.32

START

READ IN REDUCED PHASE OF TARGET BLOCK —S71

SET INITIAL VALUE FOR REDUCED PHASE MINIMUM SAD —S72

SET REDUCED PHASE REFERENCE VECTOR (Vx/n, Vy/n) —S73

READ IN REDUCED PHASE REFERENCE BLOCK FROM REFERENCE BLOCK BUFFER UNIT —S74

CARRYING OUT MATCHING PROCESS BETWEEN REDUCED PHASE TARGET BLOCK AND REDUCED PHASE REFERENCE BLOCK —S75

S76
CALCULATED REDUCED PHASE SAD VALUE LOWER THAN MINIMUM PHASE REDUCED SAD VALUE?

YES

S77
UPDATE COORDINATE INFORMATION CORRESPONDING TO MINIMUM SAD

NO

S78
MATCHING PROCESS CARRIED OUT FOR ALL REDUCED PHASE REFERENCE VECTORS IN REDUCED PHASE SEARCH RANGE?

NO

YES

SET BASE PHASE SEARCH RANGE BASED ON COORDINATE INFORMATION OF REDUCED PHASE MINIMUM SAD VALUE —S79

READ IN BASE PHASE TARGET BLOCK —S80

6

# FIG.33

⑥

SET INITIAL VALUE FOR BASE PHASE MINIMUM SAD — S81

SET BASE PHASE REFERENCE VECTOR(Vx, Vy) — S82

READ IN BASE PHASE REFERENCE BLOCK FROM REFERENCE BLOCK BUFFER UNIT — S83

CARRY OUT MATCHING PROCESS BETWEEN BASE PHASE TARGET BLOCK AND BASE PHASE REFERENCE BLOCK — S84

S85
CALCULATED BASE PHASE SAD VALUE LOWER THAN BASE PHASE MINIMUM SAD VALUE? — YES

S86
UPDATE COORDINATE INFORMATION CORRESPONDING TO MINIMUM SAD

NO

S87
MATCHING PROCESS CARRIED OUT FOR ALL BASE PHASE REFERENCE VECTORS IN BASE PHASE SEARCH RANGE? — NO

YES

CARRY OUT MATCHING PROCESS OF COORDINATES OF BASE PHASE MINIMUM SAD VALUE AND FOUR NEIGHBORING POINTS — S88

CARRY OUT SAD INTERPOLATION USING BASE PHASE MINIMUM SAD VALUE AND SAD VALUES OF NEIGHBORING FOUR POINTS TO CALCULATE BASE PHASE MOTION VECTOR OF SUB PIXEL ACCURACY — S89

END

# FIG.34A

32 PIXELS

32 PIXELS

108

# FIG.34C

1/4 REDUCTION

8 PIXELS

8 PIXELS

139

# FIG.34E

FOUR TIMES

32 PIXELS

32 PIXELS

142

# FIG.34B

176 PIXELS

144 PIXELS

96 PIXELS

64 PIXELS

106

110

# FIG.34D

1/4 REDUCTION

24 PIXELS

44 PIXELS

137

16 PIXELS

36 PIXELS

143

# FIG.34F

FOUR TIMES

40 PIXELS

40 PIXELS

4 PIXELS

144  140

4 PIXELS

# FIG.35

# FIG.36A

Vx

145 POINTS

65
POINTS

Vy

145 POINTS×65 POINTS=9,425 POINTS

# FIG.36B

Vx/n

37 POINTS

17 POINTS

Vy/n

37 POINTS×17 POINTS=629 POINTS

# FIG.36C

Vx

5 POINTS

5 POINTS

Vy

5 POINTS×5 POINTS=25 POINTS

EP 2 063 646 A2

# FIG.37A

8

8 ☐ 133

# FIG.37B

143

44

24 ☐

139

# FIG.37C

| REDUCTION RATIO | BASE PHASE TARGET BLOCK | BASE PHASE MATCHING PROCESSING RANGE | BASE PHASE REFERENCE VECTOR NUMBER |
|---|---|---|---|
| 1/2 | 16 / 16 | 20 / 20 | 25 |
| 1/4 | 32 / 32 | 40 / 40 | 81 |
| 1/8 | 64 / 64 | 80 / 80 | 289 |

EP 2 063 646 A2

# FIG.38

1 FRAME (IMAGE)

151

1 LINE

64 PIXELS  64 PIXELS  64 PIXELS  64 PIXELS
= 4 PIXELS × 16 BURSTS

# FIG.39A

640 PIXELS

480 PIXELS

| T0 | T1 | T2 | T3 | T4 | T5 | T6 | T7 | T8 | T9 |

64 PIXELS

# FIG.39B

32

32

| B0 | B1 |
| B2 | B3 |
| B4 | B5 |
| B6 | B7 |
| B28 | B29 |

BASE PHASE TARGET BLOCK

# FIG.40

| REDUCTION RATIO | BASE PHASE TARGET BLOCK | READING-IN UNIT IMAGE MEMORY SECTION |
|---|---|---|
| 1/2 | 16 × 16 | 16 16 16 16, 16 |
| 1/4 | 32 × 32 | 32, 32 × 32 |
| 1/8 | 64 × 64 | 64 × 64 |

# FIG.41

# FIG.42

EP 2 063 646 A2

# FIG.43

# FIG.44

EP 2 063 646 A2

# FIG.45A

640 PIXELS

480
PIXELS

| T0 | T1 | T2 | T3 | T4 | T5 | T6 | T7 | T8 | T9 |

64
PIXELS

NR IMAGE (USED AS TARGET
IMAGE FOR NEXT FRAME)

TARGET IMAGE

# FIG.45B

32

32

| B0 | B1 |
| B2 | B3 |
| B4 | B5 |
| B6 | B7 |

NR COMPLETION
BLOCK

BASE PHASE
TARGET BLOCK

| B28 | B29 |

# FIG.46

EP 2 063 646 A2

# FIG.47A

BASE PHASE
TARGET IMAGE

| T0 | T1 | T2 | T3 | T4 | T5 | T6 | T7 | T8 | T9 |

64
PIXELS

# FIG.47B

BASE PHASE
REFERENCE
IMAGE

| R0 | R1 | R2 | R3 | R4 | R6 | R8 | R7 | R8 | R9 |

64
PIXELS

# FIG.47C

72 32 72

24

72 32 72

# FIG.48A

BASE PHASE
TARGET IMAGE

| T0 | T1 | T2 | T3 | T4 | T5 | T6 | T7 | T8 | T9 |

← → 
64
PIXELS

# FIG.48B

BASE PHASE
REFERENCE
IMAGE

| R0 | R1 | R2 | R3 | R4 | R5 | R6 | R7 | R8 | R9 |

← →
64
PIXELS

RECTANGLE IMAGE
DECOMPRESSION-
DECODED NEWLY

RECTANGLE IMAGE
RENDERED
UNNECESSARY

# FIG.49A

128     192

Sc4

T2 T3 T4 T5 T6

# FIG.49B

TOTAL RECTANGLE WIDTH

64   128    128

Sc5

R7 R3 R4 R5 R6

OVERWRITING
ON R2

# FIG.50

SHUTTER

▽ ──────────────────────────────────────────► TIME

Org0 ── MOTION DETECTION ── MC1

SUPERPOSITION ── NR1

MOTION DETECTION ── MC2

SUPERPOSITION ── NR2

MOTION DETECTION ── MC3

SUPERPOSITION ── NR3

Org1   Org2   Org3

# FIG.51

SHUTTER

▽

→TIME

Org0

Org1

Org2   Org3

MOTION DETECTION

MC3

SUPERPOSITION

NR3

MOTION DETECTION

MC2

SUPERPOSITION

NR2

MOTION DETECTION

MC1

SUPERPOSITION

NR1

# FIG.52

START ) STILL IMAGE

PLACE M (M≧2) STILL PICTURES PICKED UP SUCCESSIVELY INTO IMAGE MEMORY —S91

N=M-1 —S92

SET MTH IMAGE AS TARGET IMAGE, AND SET (n+1TH) IMAGE AS REFERENCE IMAGE —S93

(B)

SET TARGET BLOCK —S94

PROCESSES BY MOTION DETECTIN AND MOTION COMPENSATION SECTION

READ IN TARGET BLOCK FROM IMAGE MEMORY SECTION INTO TARGET BLOCK BUFFER UNIT —S95

READ IN MATCHING PROCESSING RANGE FROM IMAGE MEMORY SECTION INTO REFERENCE BLOCK BUFFER UNIT —S96

BLOCK MATCHING —S97

READ IN MOTION COMPENSATION BLOCK FROM IMAGE MEMORY SECTION BASED ON MOTION VECTOR —S98

SEND TARGET BLOCK AND MOTION COMPENSATION BLOCK TO IMAGE SUPERPOSITION SECTION —S99

CARRY OUT SUPERPOSITION BY IMAGE SUPERPOSITION SECTION AND PLACE RESULTING IMAGE DATA INTO IMAGE MEMORY SECTION —S100

(A)

# FIG.53

(A)

S101

ALL TARGET
BLOCKS IN TARGET
IMAGE USED FOR
MATCHING?

NO → (B)

YES

S102

M=N

NO

YES

S103

N=N-1

S104

SET IMAGE AFTER NR AS TARGET
IMAGE, AND SET NTH IMAGE AS
TARGET IMAGE

END

(B)

# FIG.54

# FIG.55

START )  STILL IMAGE

STORE M (M≧2) STILL PICTURES PICKED UP SUCCESSIVELY INTO IMAGE MEMORY — S111

(E)

SET TARGET BLOCK — S112

N=2 — S113

SET FIRST IMAGE AS TARGET IMAGE, AND SET N=2ND IMAGE AS REFERENCE IMAGE — S114

(D)

PROCESSES BY MOTION DETECTIN AND MOTION COMPENSATION SECTION

READ IN TARGET BLOCK FROM IMAGE MEMORY SECTION INTO TARGET BLOCK BUFFER UNIT — S115

READ IN MATCHING PROCESSING RANGE FROM IMAGE MEMORY SECTION INTO REFERENCE BLOCK BUFFER UNIT — S116

BLOCK MATCHING — S117

READ IN MOTION COMPENSATION BLOCK FROM IMAGE MEMORY SECTION BASED ON MOTION VECTOR — S118

SEND TARGET BLOCK AND MOTION COMPENSATION BLOCK TO IMAGE SUPERPOSITION SECTION — S119

(C)

# FIG.56

Ⓒ

S121

CARRY OUT SUPERPOSITION
BY IMAGE SUPERPOSITION
SECTION AND WRITE
RESULTING IMAGE DATA INTO
IMAGE MEMORY SECTION

S122

M=N ──NO──►

YES

S123

N=N+1

S124

SET IMAGE AFTER NR AS TARGET
IMAGE, AND SET NTH IMAGE AS
REFERENCE IMAGE

Ⓓ

S125

ALL TARGET
BLOCKS IN TARGET
IMAGE USED FOR
MATCHING? ──NO──► Ⓔ

YES

END

# FIG.57A    FIG.57B

# FIG.58

# FIG.59

# FIG.60

# FIG.61

102

108

DIFFERENCE
ABSOLUTE
VALUE SUM
MATHEMATIC
OPERATION
PROCESS

SAD VALUE
(DIFFERENCE
ABSOLUTE
VALUE SUM)

# FIG.62

TBL          104

| 250 | 201 | 114 | 85 | 60 | 41 | 30 | 25 | 29 |
|-----|-----|-----|----|----|----|----|----|----|
| 261 | 200 | 119 | 58 | 50 | 40 | 17 | 10 | 20 |
| 249 | 150 | 100 | 60 | 45 | 22 | 10 | 7 | 11 |
| 231 | 111 | 70 | 50 | 30 | 21 | 11 | 15 | 18 |
| 200 | 190 | 210 | 69 | 40 | 30 | 20 | 18 | 19 |
| 190 | 150 | 121 | 109 | 72 | 50 | 31 | 30 | 33 |
| 210 | 210 | 150 | 120 | 100 | 80 | 61 | 60 | 65 |
| 310 | 300 | 200 | 120 | 102 | 101 | 80 | 70 | 90 |
| 312 | 311 | 290 | 270 | 270 | 220 | 120 | 119 | 120 |

112
[SAD VALUE WHEN REFERENCE VECTOR IS (3,2)]

111
[SAD VALUE WHEN REFERENCE VECTOR IS (0,0)]

Vy

Vx

**EP 2 063 646 A2**

## REFERENCES CITED IN THE DESCRIPTION

### Patent documents cited in the description

- JP 2007239487 A
- JP HEI6086149 B
- JP 2001086398 A